(19) Europäisches Patentamt
European Patent Office
Office européen des brevets

(11) EP 3 603 190 B1

(12) EUROPEAN PATENT SPECIFICATION

(45) Date of publication and mention of the grant of the patent:
**09.03.2022 Bulletin 2022/10**

(21) Application number: **18718535.0**

(22) Date of filing: **23.03.2018**

(51) International Patent Classification (IPC):
***H04W 36/00*** *(2009.01)* *H04W 64/00* *(2009.01)*
*H04W 4/70* *(2018.01)*

(52) Cooperative Patent Classification (CPC):
**H04W 36/0094; H04W 36/0088;** H04W 4/70

(86) International application number:
**PCT/SE2018/050304**

(87) International publication number:
**WO 2018/174804 (27.09.2018 Gazette 2018/39)**

(54) **METHODS AND SYSTEMS FOR CONTROLLING GAP SHARING BETWEEN INTRA-FREQUENCY MEASUREMENTS OF DIFFERENT TYPES**

VERFAHREN UND SYSTEME ZUR STEUERUNG DER LÜCKENTEILUNG ZWISCHEN INTRAFREQUENTEN MESSUNGEN VERSCHIEDENER ARTEN

PROCÉDÉS ET SYSTÈMES POUR COMMANDER LE PARTAGE D’INTERVALLE ENTRE DES MESURES INTRA-FRÉQUENCE DE TYPES DIFFÉRENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2017 US 201762476215 P**

(43) Date of publication of application:
**05.02.2020 Bulletin 2020/06**

(73) Proprietor: **Telefonaktiebolaget LM Ericsson (publ)**
**164 83 Stockholm (SE)**

(72) Inventors:
- **SIOMINA, Iana**
  **183 30 Täby (SE)**
- **KAZMI, Muhammad**
  **174 64 Sundyberg (SE)**
- **THANGARASA, Santhan**
  **162 44 Vällingby (SE)**

(74) Representative: **Ericsson Patent Development**
**Torshamnsgatan 21-23**
**164 80 Stockholm (SE)**

(56) References cited:
**US-A1- 2016 234 707 US-A1- 2016 269 919**

- **ERICSSON: "Discussions on gap sharing for RRM measurement for Rel-14 feMTC", 3GPP DRAFT; R4-1701554, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Athens, Greece; 20170213 - 20170217 12 February 2017 (2017-02-12), XP051214554, Retrieved from the Internet: URL:http://www.3gpp.org/ftp/Meetings_3GPP_SYNC/RAN4/Docs/ [retrieved on 2017-02-12]**
- **Sven Fischer: "Observed Time Difference Of Arrival (OTDOA) Positioning in 3GPP LTE", , 1 January 2014 (2014-01-01), XP055284784, Retrieved from the Internet: URL:http://www.terranautx.com/s/Qualcomm-OTDOA-positioning-in-LTE-June-2014.pdf [retrieved on 2016-06-30]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present disclosure relates, in general, to wireless communications and, more particularly, methods and systems for controlling gap sharing between intra-frequency measurements of different types.

BACKGROUND

Machine-type communication (MTC) devices are expected to be of low cost and low complexity. A low complexity user equipment (UE) envisaged for machine-to-machine (M2M) operation may implement one or more low cost features like, smaller downlink and uplink maximum transport block size (e.g. 1000 bits) and/or reduced downlink channel bandwidth of 1.4 MHz for data channel (e.g. physical downlink shared channel (PDSCH)). A low-cost UE may also comprise of a half-duplex frequency division duplexing (HD-FDD) and one or more of the following additional features: single receiver (1 Rx) at the UE, smaller downlink and/or uplink maximum transport block size (e.g. 1000 bits), and reduced downlink channel bandwidth of 1.4 MHz for data channel. The low-cost UE may also be termed as low complexity UE.

The path loss between M2M device and the base station can be very large in some scenarios such as when used as a sensor or metering device located in a remote location such as in the basement of the building. In such scenarios, the reception of signal from base station is very challenging. For example, the path loss can be worse than 20 dB compared to normal cellular network operation. To cope with such challenges, the coverage in uplink and/or in downlink must be substantially enhanced. This is realized by employing one or plurality of advanced techniques in the UE and/or in the radio network node for enhancing the coverage. Some non-limiting examples of such advanced techniques are (but not limited to) boosting transmit power, repeating transmitted signals, applying additional redundancy to the transmitted signal, using advanced/enhanced receiver, etc. In general, when employing such coverage enhancing techniques the M2M is regarded to be operating in 'coverage enhancing mode'.

A low complexity MTC UE such as, for example, a UE with 1 Rx and/or limited bandwidth may also be capable of supporting enhanced coverage mode of operation aka coverage enhanced mode B (CEModeB). The normal coverage mode of operation is also called as coverage enhanced mode A (CEModeA).

Configuration of coverage enhancement level

The eMTC or FeMTC UE can be configured via RRC with one of the two possible coverage modes: CEModeA or CEModeB. These are also sometimes referred to as coverage enhancement levels.

The CEModA and CEModeB are associated with different number of repetitions used in downlink (DL) and/or uplink (UL) physical channels as signalled in the following RRC message in TS 36.331 v13.3.2.

```
PDSCH-ConfigCommon-v1310 ::= SEQUENCE {
   pdsch-maxNumRepetitionCEmodeA-r13  ENUMERATED {
                              r16, r32 }            OPTIONAL,   --
Need OR
   pdsch-maxNumRepetitionCEmodeB-r13  ENUMERATED {
                              r192, r256, r384, r512, r768, r1024,
                              r1536, r2048}            OPTIONAL
-- Need OR
}
```

pdsch-maxNumRepetitionCEmodeA indicates the set of PDSCH repetition numbers for CE mode A and pdsch-maxNumRepetitionCEmodeB indicates the set of PDSCH repetition numbers for CE mode B.

```
PUSCH-ConfigCommon-v1310 ::= SEQUENCE {
    pusch-maxNumRepetitionCEmodeA-r13  ENUMERATED {
                                        r8, r16, r32 }            OPTIONAL,   -
- Need OR
    pusch-maxNumRepetitionCEmodeB-r13  ENUMERATED {
                                        r192, r256, r384, r512, r768, r1024,
                                        r1536, r2048}             OPTIONAL,
    -- Need OR
```

But if the UE is not configured in any of CEModeA and CEModeB then according to TS 36.211 v13.2.0 the UE shall assume the following CE level configuration:

- If the physical random access channel (PRACH) coverage enhancement (CE) level is 0 or 1 then the UE shall assume CEModeA or

- if the PRACH coverage enhancement (CE) level is 2 or 3 then UE shall assume CEModeB.

The UE determines one of the 4 possible CE levels (0, 1, 2 and 3) during the random access procedure by comparing the DL radio measurement (e.g. reference signal received power (RSRP)) with the one or more thresholds signalled to the UE by the network node.

Narrow Band Internet of Things (NB-IOT)

The Narrow Band Internet of Things (NB-IOT) is a radio access for cellular internet of things (IOT), based to a great extent on a non-backward-compatible variant of E-UTRA, that addresses improved indoor coverage, support for massive number of low throughput devices, low delay sensitivity, ultra-low device cost, low device power consumption and (optimized) network architecture.

The NB-IOT carrier bandwidth (Bw2) is 200 KHz. Examples of operating bandwidth (Bw1) of Long Term Evolution (LTE) are 1.4 MHz, 3 MHz, 5 MHz, 10 MHz, 15 MHz, 20 MHz etc.

NB-IoT supports 3 different deployment scenarios:

1. 'Stand-alone operation' utilizing for example the spectrum currently being used by Global Systems for Mobile Communications Edge Radio Access Network (GERAN) systems as a replacement of one or more Global Systems for Mobile Communications (GSM) carriers. In principle it operates on any carrier frequency which is neither within the carrier of another system not within the guard band of another system's operating carrier. The other system can be another NB-IOT operation or any other radio access technology (RAT) such as LTE.
2. 'Guard band operation' utilizing the unused resource blocks within a LTE carrier's guard-band. The term guard band may also be interchangeably called a guard bandwidth. As an example, in case of LTE BW of 20 MHz (i.e. Bw1= 20 MHz or 100 RBs), the guard band operation of NB-IOT can place anywhere outside the central 18 MHz but within 20 MHz LTE BW.
3. 'In-band operation' utilizing resource blocks within a normal LTE carrier. The in-band operation may also interchangeably be called in-bandwidth operation. More generally the operation of one RAT within the BW of another RAT is also called as in-band operation. As an example, in a LTE BW of 50 RBs (i.e. Bw1= 10 MHz or 50 RBs), NB-IOT operation over one resource block (RB) within the 50 RBs is called in-band operation.

In NB-IOT the downlink transmission is based on Orthogonal Frequency Division Multiplexing (OFDM) with 15 kHz subcarrier spacing and same symbol and cyclic prefix durations as for legacy LTE for all the scenarios: standalone, guard-band, and in-band. For UL transmission, both multi-tone transmissions based with a 15 kHz subcarrier spacing is supported.

In NB-IoT, anchor and non-anchor carriers are defined. In anchor carrier, the UE assumes that NPSS/NSSS/NPBCH/SIB-NB are transmitted on downlink. In non-anchor carrier, the UE does not assume that NPSS/NSSS/NPBCH/SIB-NB are transmitted on downlink. The anchor carrier is transmitted on subframes #0, #4, #5 in every frame and subframe #9 in every other frame. The anchor carriers transmitting NPBCH/SIB-NB contains also NRS. The non-anchor carrier contains NRS and UE specific signals such as NPDCCH and NPDSCH. The non-anchor carrier can be transmitted in any subframe other than those containing the anchor carrier.

Measurement gaps

As shown below in Table 1, two measurement gap patterns have been specified in 3GPP LTE since Rel-8 (36.133). However, more measurement patterns (e.g., with a shorter length) are being specified within the enhanced measurement gaps work item in 3GPP.

Table 1: Gap Pattern Configurations supported by the UE

| Gap Pattern Id | MeasurementGap Length (MGL, ms) | Measurement Gap Repetition Period (MGRP, ms) | Minimum available time for inter-frequency and inter-RAT measurements during 480ms period (Tinterl, ms) | Measurement Purpose |
|---|---|---|---|---|
| 0 | 6 | 40 | 60 | Inter-Frequency E-UTRAN FDD and TDD, UTRAN FDD, GERAN, LCR TDD, HRPD, CDMA2000 1x |
| 1 | 6 | 80 | 30 | Inter-Frequency E-UTRAN FDD and TDD, UTRAN FDD, GERAN, LCR TDD, HRPD, CDMA2000 1x |

Traditionally, such measurement gaps have been used for inter-frequency and inter-RAT measurements.

In further enhancements for MTC (FeMTC), the existing measurement gaps are shared between intra-frequency and inter-frequency measurements since bandwidth-limited UE need to retune to the central physical resource blocks (PRBs) in order to receive primary synchronization signal (PSS) and/or secondary synchronization signal (SSS), while it may be configured to receive data in other parts of the system bandwidth. The gap sharing between intra- and inter-frequency can be controlled by the network. More specifically, the network can configure the percentage of gaps (denoted as X) assumed for intrafrequency measurements, and the remaining percentage of gaps (1-X) are assumed for inter-frequency measurements. RAN4 sees the need to have 4 values (e.g., 50%, 60%, 70%, and 80% is going to be proposed at RAN4#82bis) for X (which means 2 bits are needed for signaling). The exact values for X will be defined in TS 36.133 but have not yet been agreed.

In FeMTC the existing measurement gaps are shared between intra-frequency and inter-frequency measurements since UE needs to retune to the central PRBs in order to read PSS/SSS and also perform the RSRP and/or Reference Signal Received Quality (RSRQ) measurements. UE also needs gaps to support Reference Signal Time Difference (RSTD) measurements for Observed Time Different of Arrival (OTDOA) positioning. Intra-frequency RSTD measurement may have to share gaps with Radio Resource Management (RRM) measurements. Existing rules do not allow for gap sharing between RSTD and RRM measurements.

US 2016/234707 A1 relates to a measurement procedure under adaptive frequency separation. A method in a wireless device comprises determining whether the wireless device is capable of narrow bandwidth operation. The wireless device obtains a parameter associated with a measurement pattern, wherein the measurement pattern comprises a first time period and a second time period; a first type of radio measurements to be performed during the first time period on radio signals transmitted in a first set of physical resource channels; and a second type of radio measurements to be performed during the second time period on radio signals transmitted in a second set of physical resource channels. The wireless device determines a measurement pattern using the obtained parameter and performs radio measurements of the first type during the first time period.

Sven Fischer: "Observed Time Difference Of Arrival (OTDOA) Positioning in 3GPP LTE", 1 January 2014, relates to the functionalities for the support of OTDOA location in LTE as defined in 3GPP. It provides an overview of the OTDOA feature for operators and manufacturers interested in the deployment of OTDA location capabilities including references to where the standard details on each subject can be found.

## SUMMARY

The present invention is defined in the appended independent claims. Further preferred embodiments are defined in the dependent claims.

To address the foregoing problems with existing solutions, disclosed is methods and systems for controlling gap sharing between intra-frequency measurements of different types. In certain embodiments, the systems and methods may be implemented in or by a wireless device, which may include a user equipment (UE), and/or a network node, which may include a eNodeB (eNB).

According to certain embodiments, a method performed a wireless device includes receiving, from a first radio network node, via a first wireless interface between the first radio network node and the wireless device, first configuration information related to a first type of discovery reference signals, wherein the first radio network node is communicating with the wireless device. Second configuration information related to a second type of discovery reference signals is received from a second radio network node via a second wireless interface between the second network node and the wireless device, wherein the second radio network node is different than the first radio network node and is communicating with the wireless device.

. A variable cell identification delay or variable measurement delay is determined on the basis of the first configuration information and second configuration information. At least one first measurement is performed on a discovery reference signal of the first type. At least one second measurement is performed on a discovery reference signal of a second type, wherein the at least one second measurement comprises identification of a cell performed within a duration corresponding to the cell identification delay or a measurement performed within a duration corresponding to the measurement delay.

One or more operational tasks is performed based on the at least one first measurement and the at least one second measurement.

According to certain embodiments, a wireless device includes processing circuitry, the processing circuitry configured to receive, from a first radio network node, via a first wireless interface between the first radio network node and the wireless device, first configuration information related to a first type of discovery reference signals and, from a second radio network node via a second wireless interface between the second network node and the wireless device, wherein the second radio network node is different than the first radio network node and is communicating with the wireless device, second configuration information related to a second type of discovery reference signals. The processing circuitry is furthermore configured to determine a variable cell identification delay or variable measurement delay on the basis of the first configuration information and second configuration information, to perform at least one first measurement on a discovery reference signal of the first type, to perform at least one second measurement on a discovery reference signal of a second type, wherein the at least one second measurement comprises identification of a cell performed within a duration corresponding to the cell identification delay or a measurement performed within a duration corresponding to the measurement delay, and to perform one or more operational tasks based on the at least one first measurement and the at least one second measurement.

According to certain non-claimed embodiments, a method in a network node may include transmitting, to a wireless device, first configuration information related to a first type of discovery reference signals. A cell identification delay or measurement delay is determined on the basis of the first configuration information and a second configuration information. The second configuration information relates to a second type of discovery reference signals to be received by the wireless device, and the cell identification delay or measurement delay is variable. Based on the determined cell identification delay or measurement delay, a result of measurements performed on the first type of discovery reference signals is received from the wireless device.

According to certain non-claimed embodiments, a network node may include processing circuitry, the processing circuitry configured to transmit, to a wireless device, first configuration information related to a first type of discovery reference signals. A cell identification delay or measurement delay is determined on the basis of the first configuration information and a second configuration information. The second configuration information relates to a second type of discovery reference signals to be received by the wireless device, and the cell identification delay or measurement delay is variable. Based on the determined cell identification delay or measurement delay, a result of measurements performed on the first type of discovery reference signals is received from the wireless device.

Certain embodiments of the present disclosure may provide one or more technical advantages. For example, certain embodiments may enable and provide the possibility to perform intra-frequency measurements when measurement gaps are needed also for intra-frequency measurements. As another example, certain embodiments may enable and provide the possibility to share measurement gaps between intra-frequency measurements of different types, which may also be associated with different requirements or priorities/importance. As still another example, certain embodiments may enable and or provide the possibility to further control the gap sharing dynamically for measurements on serving cell(s)

Other advantages may be readily apparent to one having skill in the art. Certain embodiments may have none, some, or all of the recited advantages.

## BRIEF DESCRIPTION OF THE DRAWINGS

For a more complete understanding of the disclosed embodiments and their features and advantages, reference is now made to the following description, taken in conjunction with the accompanying drawings, in which:

FIGURE 1 illustrates an example wireless network for controlling gap sharing between intrafrequency measurements of different types, according to certain embodiments;

FIGURE 2 illustrates an example wireless device for controlling gap sharing between intrafrequency measurements of different types, according to certain embodiments;

FIGURE 3 illustrates an example method by a wireless device for controlling gap sharing between intra-frequency measurements of different types, according to certain embodiments;

FIGURE 4 illustrates an example flow-chart of the procedure performed by certain steps of FIGURE 3, according to certain embodiments;

FIGURE 5 illustrates an example bandwidth allocation in the frequency domain for procedures M1 and M2, according to certain embodiments;

FIGURE 6 illustrates another example method by a wireless device for controlling gap sharing between intra-frequency measurements of different types, according to certain embodiments;

FIGURE 7 illustrate an example network node for controlling gap sharing between intrafrequency measurements of different types, according to certain embodiments;

FIGURE 8 illustrates an example method by a network node for controlling gap sharing between intra-frequency measurements of different types, according to certain embodiments;

FIGURE 9 illustrates another example method by a network node for controlling gap sharing between intra-frequency measurements of different types, according to certain embodiments;

FIGURE 10 illustrates an exemplary radio network controller or core network node, according to certain embodiments;

FIGURE 11 illustrates an example configuration where measurement gaps are shared equally

FIGURE 13 illustrates a scenario where positioning reference signal bandwidth is less than cell bandwidth; and

FIGURE 14 illustrates the sharing of existing measurement gaps between RSTD measurement, intra-frequency and inter-freuency RRM measurement.

In the following, embodiments of the invention are described with particular reference to figures 1, 2 and 6. The other embodiments of the disclosure are provided for illustrative purposes to support a better understanding of the invention.

DETAILED DESCRIPTION

Particular embodiments of the present disclosure may provide methods and systems for controlling gap sharing between intra-frequency measurements of different types. Particular embodiments are described in FIGURES 1-10 of the drawings, like numerals being used for like and corresponding parts of the various drawings.

According to certain embodiments, a user equipment (UE) measurement procedure is provided for a UE whose radio frequency bandwidth (RF BW) < serving cell (cell 1) BW by certain margin (by at least X MHz e.g. UE BW = 1.4 MHz, cell 1 BW= 5 MHz) and where the discovery reference signal (DRS) BW ≤ cell BW of serving carrier. In the latter case i) if discovery reference signal (DRS) BW = cell BW of a serving carrier (F1) then the UE applies a first measurement and/or reporting procedure (M1) for doing measurements on DRS signals, and ii) if DRS BW < cell BW of at least one cell on F1 then the UE applies a second measurement and/or reporting procedure (M2) for performing measurements on DRS signals. In procedure, M1, the UE performs the measurements on DRS within the UE BW used for data reception from cell 1, while in procedure M2 the UE performs the measurements on DRS during measurement gaps. Furthermore, in procedure M2 the measurements gaps are shared with at least one more measurements performed on another type of DRS signal. The way the UE performs the measurements and the number of measurement occasions the UE needs also impacts how and when the UE reports the measurement results. The rules can be pre-defined or configured by the network node. Examples of DRS signals are positioning reference signal (PRS), channel state information-reference signal (CSI-RS), primary synchronization signal (PSS), secondary synchronization signal (SSS), cell-specific reference signal (CRS), demodulation reference signal (DM-RS), etc. In another example, DRS can be any periodic signal with a configurable or pre-defined periodicity or signals based on a time-domain pattern.

According to certain embodiments, in addition to sharing gaps between different measurement types on serving carrier(s), the same gaps may be further shared with inter-frequency measurements. For example, in some embodiments, it may be assumed that only some but not all gaps out of the configured gaps are available for any measurements on serving carrier(s). The sharing on the serving carrier(s) may be applied as described below on the top of the available gaps remaining for the serving carrier(s).

In some embodiments, a more general term "network node" is used and it can correspond to any type of radio network node or any network node, which communicates with a UE and/or with another network node. Examples of network nodes are NodeB, master eNodeB (MeNB), secondary eNodeB (SeNB), a network node belonging to master cell group (MCG) or secondary cell group (SCG), base station (BS), multi-standard radio (MSR) radio node such as MSR BS, eNodeB, gNodeB, network controller, radio network controller (RNC), base station controller (BSC), relay, donor node controlling another network node. Examples of network nodes are NodeB, master eNodeB (MeNB), secondary eNodeB (SeNB), a network node belonging to master cell group (MCG) or secondary cell group (SCG), base station (BS), multi-standard radio (MSR) radio node such as MSR BS, eNodeB, gNodeB, network controller, radio network controller (RNC), base station controller (BSC), relay, donor node controlling relay, base transceiver station (BTS), access point (AP), transmission points, transmission nodes, remote radio unit (RRU), remote radio head (RRH), nodes in distributed antenna system (DAS), core network node (e.g. mobile switching center (MSC), mobility management entity (MME), etc.), operation & maintenance (O&M), operation support system (OSS), self-organizing networks (SON), positioning node (e.g. enhanced serving mobile location center (E-SMLC)), Minimization of Drive Test (MDT), test equipment (physical node or software), etc.

In some embodiments, the non-limiting term user equipment (UE) or wireless device is used and it refers to any type of wireless device communicating with a network node and/or with another UE in a cellular or mobile communication system. Examples of UE are target device, device to device (D2D) UE, machine type UE or UE capable of machine to machine (M2M) communication, personal digital assistant (PDA), PAD, Tablet, mobile terminals, smart phone, laptop embedded equipped (LEE), laptop mounted equipment (LME), Universal Serial Bus (USB) dongles, proximity service UE (ProSe UE), vehicle-to-vehicle UE (V2V UE), vehicle-to-anything UE (V2X UE), etc.

The embodiments are described for LTE. However, the embodiments are applicable to any radio access technology (RAT) or multi-RAT systems, where the UE receives and/or transmit signals (e.g. data) e.g. LTE Frequency Division Duplexing (FDD)/Time Division Duplexing (TDD), Wideband Code Division Multiplexing Access (WCDMA)/High Speed Packet Access (HSPA), Global Systems for Mobile Communications (GSM)/Global Systems for Mobile Communications Edge Radio Access Network (GERAN), Wi Fi, wireless local area network (WLAN), CDMA2000, 5G, NR, etc.

The term "radio measurement" (a.k.a. measurements) used herein may refer to any measurement performed on radio signals. Examples of radio signals are discovery reference signals (DRS). Examples of DRS are PRS, CRS, CSI-RS, PSS, SSS etc. In another example, DRS can be any periodic signal with a configurable or pre-defined periodicity or signals based on a time-domain pattern. In another more narrow and specific example, DRS signals are as specified in 3GPP 36.211. Radio measurements can be absolute or relative. Radio measurements can be e.g. intra-frequency, inter-frequency, CA, etc. Radio measurements can be unidirectional (e.g., downlink (DL) or uplink (UL)) or bidirectional (e.g., roundtrip-time (RTT), receiver-transmitter (Rx-Tx), etc.). Some examples of radio measurements: timing measurements (e.g., time of arrival (TOA), timing advance, RTT, reference signal time difference (RSTD), system frame number and subframe timing difference (SSTD), Rx-Tx, propagation delay, etc.), angle measurements (e.g., angle of arrival), power-based measurements (e.g., received signal power, reference signal received power (RSRP), received signal quality, reference signal quality (RSRQ), signal-to-interference ratio (SINR), signal-to-noise ration (SNR), interference power, total interference plus noise, received signal strength indication (RSSI), noise power, channel quality indicator (CQI), channel state information (CSI), pre-coding matrix indicator (PMI), etc.), cell detection or cell identification, beam detection or beam identification, radio link monitoring (RLM), system information reading, etc.

The embodiments described herein may apply to any radio resource control (RRC) state such as, for example, RRC connected (RRC_CONNECTED) or RRC idle (RRC IDLE).

The term "measurement time" used herein may further comprise any of: number of measurement occasions, number of receive occasions, a function of the measurement occasions or receive occasions, absolute time in time units such as seconds or milliseconds, number of received samples, measurement delay, measurement reporting delay which includes at least the measurement time, etc.

FIGURE 1 illustrates a wireless network 100 for controlling gap sharing between intra-frequency measurements of different types, in accordance with certain embodiments. Network 100 includes one or more wireless devices 110A-C, which may be interchangeably referred to as wireless devices 110 or UEs 110, and network nodes 115A-C, which may be interchangeably referred to as network nodes 115 or eNodeBs 115. A wireless device 110 may communicate with network nodes 115 over a wireless interface. For example, wireless device 110A may transmit wireless signals to one or more of network nodes 115, and/or receive wireless signals from one or more of network nodes 115. The wireless signals may contain voice traffic, data traffic, control signals, and/or any other suitable information. In some embodiments, an area of wireless signal coverage associated with a network node 115 may be referred to as a cell. In some embodiments, wireless devices 110 may have D2D capability. Thus, wireless devices 110 may be able to receive signals from and/or transmit signals directly to another wireless device 110. For example, wireless device 110A may be able to receive signals from and/or transmit signals to wireless device 110B.

In certain embodiments, network nodes 115 may interface with a radio network controller (not depicted in FIGURE 1). The radio network controller may control network nodes 115 and may provide certain radio resource management functions, mobility management functions, and/or other suitable functions. In certain embodiments, the functions of the radio network controller may be included in network node 115. The radio network controller may interface with a core network node. In certain embodiments, the radio network controller may interface with the core network node via an interconnecting network. The interconnecting network may refer to any interconnecting system capable of transmitting audio, video, signals, data, messages, or any combination of the preceding. The interconnecting network may include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the core network node may manage the establishment of communication sessions and various other functionalities for wireless devices 110. Wireless devices 110 may exchange certain signals with the core network node using the non-access stratum layer. In non-access stratum signaling, signals between wireless devices 110 and the core network node may be transparently passed through the radio access network. In certain embodiments, network nodes 115 may interface with one or more network nodes over an internode interface. For example, network nodes 115A and 115B may interface over an X2 interface.

As described above, example embodiments of network 100 may include one or more wireless devices 110, and one or more different types of network nodes capable of communicating (directly or indirectly) with wireless devices 110. Wireless device 110 may refer to any type of wireless device communicating with a node and/or with another wireless device in a cellular or mobile communication system. Examples of wireless device 110 include a target device, a device-to-device (D2D) capable device, a machine type communication (MTC) device or other UE capable of machine-to-machine (M2M) communication, a mobile phone or other terminal, a smart phone, a PDA (Personal Digital Assistant), a portable computer (e.g., laptop, tablet), a sensor, a modem, laptop embedded equipment (LEE), laptop mounted equipment (LME), USB dongles, ProSe UE, V2V UE, V2X UE, MTC UE, eMTC UE, FeMTC UE, UE Cat 0, UE Cat M1, narrowband Internet of Things (NB-IoT) UE, UE Cat NB1, or another device that can provide wireless communication. A wireless device 110 may also be referred to as UE, a station (STA), a device, or a terminal in some embodiments. Also, in some embodiments, generic terminology, "radio network node" (or simply "network node") is used. It can be any kind of radio network node, which may comprise a Node B, base station (BS), multi-standard radio (MSR) radio node such as MSR BS, eNode B, MeNB, SeNB, a network node belonging to MCG or SCG, network controller, radio network controller (RNC), base station controller (BSC), relay donor node controlling relay, base transceiver station (BTS), access point (AP), transmission points, transmission nodes, RRU, RRH, nodes in distributed antenna system (DAS), or any suitable radio network node. Example embodiments of wireless devices 110, network nodes 115, and other network nodes (such as radio network controller or core network node) are described in more detail with respect to FIGURES 2, 5, and 8, respectively.

Although FIGURE 1 illustrates a particular arrangement of network 100, the present disclosure contemplates that the various embodiments described herein may be applied to a variety of networks having any suitable configuration. For example, network 100 may include any suitable number of wireless devices 110 and network nodes 115, as well as any additional elements suitable to support communication between wireless devices or between a wireless device and another communication device (such as a landline telephone). Furthermore, although certain embodiments may be described as implemented in a long-term evolution (LTE) network, the embodiments may be implemented in any appropriate type of telecommunication system supporting any suitable communication standards and using any suitable components and are applicable to any LTE based systems such as MTC, eMTC, and NB-IoT. As an example, MTC UE, eMTC UE, and NB-IoT UE may also be called UE category 0, UE category M1 and UE category NB1, respectively. However, the embodiments are applicable to any RAT or multi-RAT systems in which the wireless device receives and/or transmits signals (e.g., data). For example, the various embodiments described herein may also be applicable to, LTE-Advanced, and LTE-U UMTS, LTE FDD/TDD, WCDMA/HSPA, GSM/GERAN, WiFi, WLAN, cdma2000, WiMax, 5G, New Radio (NR), another suitable radio access technology, or any suitable combination of one or more radio access technologies. It is noted that 5G, the fifth generation of mobile telecommunications and wireless technology is not yet fully defined but in an advanced draft stage with 3GPP. It includes work on 5G NR Access Technology. LTE terminology is used herein in a forward-looking sense, to include equivalent 5G entities or functionalities although a different term may be specified in 5G. A general description of the agreements on 5G NR Access Technology is contained in most recent versions of the 3GPP 38-series Technical Reports. Although certain embodiments may be described in the context of wireless transmissions in the downlink, the present disclosure contemplates that the various embodiments are equally applicable in the uplink and vice versa. The described techniques are generally applicable for transmissions from both network nodes 115 and wireless devices 110.

FIGURE 2 illustrates an example wireless device 110 for controlling gap sharing between intrafrequency measurements of different types, in accordance with certain embodiments. As depicted, wireless device 210 includes transceiver 210, processing circuitry 220, and memory 230. In some embodiments, transceiver 210 facilitates transmitting wireless signals to and receiving wireless signals from network node 115 (e.g., via an antenna), processing circuitry 220 executes instructions to provide some or all of the functionality described above as being provided by wireless device 110, and memory 230 stores the instructions executed by processing circuitry 220. Examples of a wireless device 110 are provided above.

Processing circuitry 220 may include any suitable combination of hardware and software implemented in one or more modules to execute instructions and manipulate data to perform some or all of the described functions of wireless device 110. In some embodiments, processing circuitry 220 may include, for example, one or more computers, one or more central processing units (CPUs), one or more processors, one or more microprocessors, one or more applications, and/or other logic.

Memory 230 is generally operable to store instructions, such as a computer program, software, an application including one or more of logic, rules, algorithms, code, tables, etc. and/or other instructions capable of being executed by processing circuitry. Examples of memory 230 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

Other embodiments of wireless device 110 may include additional components beyond those shown in FIGURE 2 that may be responsible for providing certain aspects of the wireless device's functionality, including any of the functionality described above and/or any additional functionality (including any functionality necessary to support the solution described above).

FIGURE 3 illustrates an example method 300 by a wireless device for controlling gap sharing between intra-frequency measurements of different types, according to certain embodiments. The method 300 may allow for controlling first and second measurements on a serving carrier frequency. According to certain embodiments, the method relates to a measurement procedure performed on a discovery reference signal (DRS) by a UE whose bandwidth (BW) is less than its serving cell (cell 1) BW by at least certain margin (X) and in scenario where DRS BW ≤ BW of the serving cell (cell 1) of the wireless device 110. In one particular example, UE BW = 1.4 MHz and cell 1 BW = 5 MHz (or 20 MHz).

The method may begin at an optional step 302 when wireless device 110 indicates to another node the wireless device's ability to operate according to one or more embodiments described herein. According to certain particular embodiments, non-limiting examples of such capabilities:

- Operation according to any one or more embodiments from any of Steps 308-314 described below
- Ability to share (e.g., in a pre-defined manner, statically, semi-statically, or dynamically) measurement gaps between any two types or some two specific types/groups of measurements on a serving carrier (e.g., RRM and positioning measurements; measurements based on a first time and/or frequency domain pattern and measurements based on a second time and/or frequency domain pattern)
- Ability to share measurement gaps between inter-frequency measurements and two types/groups of intra-frequency measurements
- Capability to perform measurements on different carriers (e.g. serving carrier and nonserving carriers) using gaps following rules in step 3. The said measurements can comprise RRM measurements (e.g. RSRP, RSRQ) on either serving carrier or nonserving carrier and positioning measurements (e.g. RSTD) on serving carrier.

According to certain embodiments, the capability may be sent upon a request from another node (e.g., network node 115) or in an unsolicited way or triggered by a triggering condition or event (e.g., the intention or request to operate in a mode when intra-frequency measurement gaps may be needed or the condition triggering the wireless device to operate in such mode).

At step 304, wireless device 110 determines the need to perform first measurements on a first type of discovery reference signals (DRS1) of one or more cells belonging to a serving carrier (F1). According to particular embodiments, examples of DRS1 may include PRS, CSI-RS, etc. The BW of DRS1 may be configurable and it is up to the network node 115 whether to transmit DRS1 over full or partial BW of the cell. Examples of serving carrier are primary carrier or primary component carrier (PCC), secondary component carrier (SCC), etc.

In a particular exemplary embodiment, the determining of 304 may be based on one or more of: a request to perform such measurements, a request to report such measurements, a request to perform and/or report a result based on such measurements (e.g., cell change, location calculation, etc.), a measurement configuration, etc., which may be received from another node (e.g., a network node) or from a higher layer. In another example, the determining may be based on the fact that UE location has changed more than a certain margin compared to previously determined or known location. In yet another example, the determining can be triggered by a change in UE coverage mode, coverage enhancement level, or change in RRM measurement quality by at least a certain margin.

According to certain embodiments, the first measurements may or may not require measurement gaps for performing the first measurements (see step 308).

Examples of the first measurements may include positioning measurements, RSTD measurements, RRM measurements, and/or other types of suitable measurements such as those discussed above.

At step 306, wireless device 110 determines the need to perform second measurements (which are different from the first measurements) on a second type of discovery reference signals (DRS2) of one or more cells of the serving carrier (F1). According to particular embodiments, examples of DRS2 may include PSS, SSS, etc. In one example embodiment, the determining of step 306 may be based on one or more of a request to perform such measurements, a request to report such measurements, a request to perform and/or report a result based on such measurements (e.g.,

cell change, location calculation, etc.), a measurement configuration, etc., which may be received from another node (e.g., a network node) or from a higher layer. According to certain embodiments, the key difference between DRS1 and DRS2 may be that the DRS1 can be transmitted over full cell BW or over BW less than the cell BW, whereas DRS2 is transmitted over BW smaller than the cell's BW. The DRS2 BW is typically pre-defined but can also be configurable but it is assumed that it is less than cell BW.

According to certain embodiments, UE BW is less than the cell BW. Therefore, the second measurements require measurement gaps for performing the second measurements (see step 508 discussed below). But the first measurements may or may not require measurement gaps. Examples of the second measurements may include positioning measurements, RSTD measurements, RRM measurements, or any other suitable measurements such as those discussed above.

At step 308, wireless device 110 determines the need for measurement gaps for performing at least the second measurements on DRS2 of cells belonging to F1. If the second measurements are to be performed by wireless device 110 then wireless device 110 applies measurement gaps for performing the second measurements.

According to certain embodiments, wireless device 110 further determines whether or not wireless device 110 requires measurement gaps for performing the first measurements on DRS1 of cells belonging to F1 as explained below. The UE BW is assumed to be less than the BW of its serving cell:

- In case a first discovery reference signal (DRS1) BW is equal to BW of all cells on a serving carrier (F1) then wireless device 110 applies a first measurement procedure (M1) for doing first measurements on DRS1 signals. In this procedure (M1), wireless device 110 does not use measurement gaps and instead performs the first measurements on DRS1 within the BW used by wireless device 110 for receiving data or control signals from cell1,
- In case DRS1 BW is less than BW of at least one cell on F1, then wireless device 110 applies a second measurement procedure (M2) for performing first measurements on DRS1 signals. In procedure M2, wireless device 110 performs the first measurements on DRS1 during measurement gaps. Furthermore, in procedure M2 the measurements gaps are shared with at least one more second measurements performed on DRS2 signal.

The above described procedure may affect the measurement time (e.g. measurement period, cell identification time, etc.) of the first and/or the second measurements as described with few examples of rules below. These exemplary rules can be pre-defined or configured by the network node 115 at wireless device. Some exemplary rules may include:

- In one example, the measurement time (T11) of the first measurement in M1 is shorter than the measurement time (T12) of the first measurement in procedure M2, while the measurement time of the second measurement is the same in both M1 and M2. The rule can be applied in case the second measurement is more time critical or higher priority with regard to the first measurement. Time critical means that the measurement is to be performed over shortest possible time and may be used, for example, for critical applications such as an emergency call, etc.
- In another example, the measurement time (T21) of the second measurement in M1 is shorter than the measurement time (T22) of the second measurement in procedure M2, while the measurement time of the first measurement is the same in both M1 and M2. The rule can be applied in case the first measurement is more time critical with respect to the second measurement.
- In yet another example T11 < T12 and also T21 < T22. The rule can be applied in case both the first and second measurements are equally time critical or none of them is time critical.

The measurement time of first and/or second measurements is extended in M2 as described in the above examples because in M2 the gaps are shared between the first and the second measurements. FIGURE 4 illustrates another example flow-chart of the procedure 400 performed in steps 304-308, according to certain embodiments. FIGURE 5 illustrates an example bandwidth allocation 500 in the frequency domain for procedures M1 and M2, according to certain embodiments.

In some embodiments, determining step 308 may further comprise determining whether and/or how the measurement gaps are to be shared between the first and the second measurements. According to certain embodiments, the determining step 308 may be based on one or more of: pre-defined rule, an instruction or measurement gap configuration received from another node, a gap sharing configuration (e.g., pre-defined, selected from a set of pre-defined configurations, received from another node, determined based on a pre-defined rule) for the intra-frequency measurements, the first measurement configuration, the second measurement configuration, the first measurement time and/or frequency domain pattern and/or measurement bandwidth, the second measurement time and/or frequency domain pattern and/or measurement bandwidth, transmission configuration (e.g., BW, periodicity, etc.) for signals to be used for the first and/or second measurements, priority between the first and the second measurements, or other appropriate parameters or considerations. Some example rules, which may be used for the determining of the need, include:

- The measurement time for at least one of the first and second measurements is relaxed (becomes longer) compared to when the measurement gaps are not shared between intra- and inter-frequency measurements and/or compared to when the measurement gaps are not shared between the first and the second measurements, e.g., any one or more of the below apply:
    - ◦ The time for the $i^{th}$ measurement is scaled with f(Ki), where Ki is the parameter reflecting whether and how the measurement gaps are shared between the $i^{th}$ measurement and another type of measurements (see the more specific example embodiments described below)
    - ◦ The time for the first measurement is not relaxed when the signals BW used for the first measurement is the cell bandwidth, otherwise the time is relaxed
    - ◦ The time for the first measurement is not relaxed when the BW of signals used for the first measurement is the cell BW and the first measurements can be performed in non-central part of the BW or the wireless device supports hopping for the first measurements, otherwise the time is relaxed
    - ◦ The time for the first measurement is not relaxed when the signals used for the first measurement are available in specific subframes, e.g., subframes #0 and/or #5; otherwise the time is relaxed
    - ◦ The time for the first measurement is not relaxed when the first measurement bandwidth does not exceed a threshold (e.g., 6 RBs); otherwise the time is relaxed

- Assume: first measurement is RSTD measurement based on PRS. If PRS BW = cell BW on all cells (or all cells for RSTD measurements) on the serving carrier then wireless device 110 does not need to retune its receiver to the central PRS RBs for intra-frequency RSTD measurements. In this case (i.e. PRS BW = cell BW for all cells), the network node 115 configures the gaps as follows:
  o PRS occasion does not overlap with gaps. Wireless device 110 measures intrafrequency RSTD on the same part of the PRS BW where wireless device 110 is tuned for data reception. No need for measurement gaps for intra-frequency RSTD and thus no need to relax the RSTD measurement period
- Assume: first measurement is RSTD measurement based on PRS. If PRS BW < cell BW on at least one cell on the serving carrier then wireless device 110 may have to retune its receiver to where PRS are available, e.g., to the central PRS RBs for doing RSTD measurements (since wireless device 110 may have to receive data in the part of the cell BW where PRS are not available). In this case (i.e. PRS BW < cell BW for at least some cells), the network node 115 configures the gaps as follows:
  ◦ PRS occasion should overlap with gaps i.e. at least some of PRS occasions should fall in the gaps. Wireless device 110 may need to measure RSTD in the gaps e.g. central PRS, whose BW <= UE BW.
- The sharing is based on a priority between the first and the second measurements, where the priority may be e.g. pre-defined or configurable or determined based on a-pre-defined rule.
- The priority (the absolute priority or a share) is determined based on a message received from a first network node 115, while the first network node 115 obtains the priority from a second network node 115. The first and the second nodes 115 can be a positioning node and a BS or vice versa.

Some more specific examples are provided:

• Example 1:

The new cell identification and measurement delay requirements may become as shown in Table 1:

Table 1: Measurement time over which second measurement is done on DRS2 e.g. RRM measurements on PSS/SSS (cell identification)

| Gap pattern ID | Cell identification delay ($T_{identify_intra_UE\ cat\ M2_EC}$) | Measurement delay ($T_{measure_intra_UE\ cat\ M2_EC}$) |
|---|---|---|
| 0 | 320.8 * $K_{intra\ M2}$ * K1 s | 800 * $K_{intra\ M2}$ * K1 ms |
| 1 | 321.6 * $K_{intra\ M2}$ * K1 s | 1600 * $K_{intra\ M2}$ * K1 ms |

where

$K_{intra_M2}$ = 1 / X * 100%, where X may be signaled via RRC, is the parameter controlling how much of measurement gaps is used for all intra-frequency measurements. For interfrequency measurements, it is then remaining $K_{inter_M2}$ = Nfreq * 100% / (100-X) of the configured measurement gaps.

K1 (1/K1<=1.0) is a parameter controlling how much of the gaps used for all intrafrequency measurements/operations are used specifically for cell identification and RRM measurements.

And for intra-frequency positioning measurements (example of first measurement on DRS1):

$$T_{\text{RSTD IntraFreqFDD,E-UTRAN}} = T_{\text{PRS}} \cdot (M - 1) \cdot K_{\text{intra_M2}} \cdot K2 + \Delta \quad ms,$$

where 1/K1+1/K2=1.0, to cover the most pessimistic case when the RSTD measurements and cell identification/RRM measurements are performed in different gaps, otherwise 1/K1+1/K2 may be >1.0 (e.g., depending on the amount of overlap in time of the positioning measurements and cell identification / RRM occasions) while each of 1/K1 and 1/K2 is not larger than 1.0.

• Example 2:

Similar to Example 1 but when there is an explicit pattern for cell identification / RRM measurements, e.g., when they are performed in DRS subframes (with dual connectivity) or in unlicensed spectrum (in DRS subframes which may or may not transmitted depending on the LBT result) or in measurement resource restriction subframes or in ABS (with eICIC or FeICIC), the cell identification/RRM measurement period is also scaled with $K_{intra_M2}$ *K1 while positioning measurements with $K_{intra_M2}$ *K2.

• Example 3:

According to this example, the gaps are shared by wireless device 110 for performing first measurements on DRS1 and second measurements on DRS2, whereby the second measurement is scaled by at least a parameter ($K_{RSTD_M2}$). But the parameter $K_{RSTD_M2}$ is a function of the measurement gap periodicity and also the periodicity of DRS1. An example of DRS1 is PRS and of DRS2 is PSS/SSS.

Table 2: Measurement time over which second measurement is done on DRS2 e.g. RRM measurements done on at least PSS/SSS (cell identification)

| Gap pattern ID | Cell identification delay ($T_{identify_intra_UE\ cat\ M2_EC}$) | Measurement delay ($T_{measure_intra_UE\ cat\ M2_EC}$) |
|---|---|---|
| 0 | 320.8 * $K_{intra_M2}$ *$K_{RSTD_M2}$ s | 800 * $K_{intra_M2}$ *$K_{RSTD_M2}$ ms |
| 1 | 321.6 * $K_{intra_M2}$ *$K_{RSTD_M2}$ s | 1600 * $K_{intra_M2}$ *$K_{RSTD_M2}$ ms |

where
$K_{intra_M2}$ = 1 / X * 100 where X is signaled by the RRC parameter.

A general example of the parameter $K_{RSTD_M2}$ is expressed as:

$$K_{RSTD_M2} = F(C_{Gap}, C_{PRS})$$

where $C_{Gap}$ and $C_{PRS}$ are measurement gap configuration and PRS configuration respectively.

A specific example of $K_{RSTD_M2}$ is expressed by the following expression:

$$K_{RSTD_M2} = 1/(1 - T_{Gap} / T_{PRS})$$

At step 310, wireless device 110 performs the first measurements and second measurements, while using the measurement gaps based on the determined need. According to certain embodiments, when DRS1 BW is less than the cell BW of at least one cell of F1, the measurements may be performed using and sharing the measurement gaps. Alternatively, when DRS1 BW = cell BW of all cells of F1, the first measurements may be performed without measurement gaps.

According to certain embodiments, the performance of a measurement at step 310 may include any one or more of: obtaining a measurement result (a.k.a. result of the measurement), configuring or (re)tuning the receiver bandwidth, configuring measurement gaps (which may cause interruptions in transmissions and receptions from and by the wireless device 110), configuring or (re)tuning the receiver to receive signals in the measurement gaps, obtaining one or more measurement samples, and/or combining two or more measurement samples into a measurement.

If wireless device 110 has not been able to perform one of the first and second measurements, for example, due to its inability to share measurement gaps for these intra-frequency measurements or due to the measurement gap configuration which prevents the sharing [e.g., not aligned with measurement patterns] or due to another reason, wireless device 110 may decide to perform only one of the first and second measurements. For example, in a particular embodiment, the first measurements may be always selected/prioritized in this case or the second measurements may be always selected/prioritized in this case, etc. The wireless device 110 may also indicate to another node (such as, for example, network node 115) that the gap sharing was not performed or cannot be performed or one of the measurements was not performed due to the above reasons.

At step 312, wireless device 110 sends a result of at least one of the first measurements and second measurements to another node. According to certain embodiments, examples of the result may include: measurement result (e.g., RSRP, RSRQ, power measurement, time measurement, time difference measurement, rx-tx time difference measurement, AoA, cell ID, beam ID, etc. - see more measurement examples in Section 5.1), a log with the logged measurement (e.g., like in MDT in RRC IDLE or when the measurements are performed in RRC_IDLE), location of the wireless device determined based on the measurements, link failure indication, measurement problem indication, wireless device's inability to share the measurement gaps for the first and second measurements, a rule or a parameter indicative of whether and/or how the gap sharing for the first and the second measurements was performed.

According to certain embodiments, sending the result may also need to be adapted to the steps described above. For example, how and when wireless device 110 will report may be adapted. The wireless device 110 may generally be required to report with a short predefined time after the measurements have become available and this time may depend on the measurement time which in turn depends on how the measurements are performed and whether/how the gaps were used and shared for the measurements. For example, if gaps are shared so that a first measurement gets less resources in one case and more resources in another case, then the same measurement will be reported in time T1 and T2 (T2 is shorter than T1), respectively.

At step 314, the result of at least one of the first measurements and second measurements may be used for one or more operational tasks. Examples of the result may include those provided above. According to certain embodiments, examples of using the result may include: positioning or location determination of the wireless device, RRM, cell change or handover, performing RLM, SON, MDT, receiver configuration optimization, logging the result for statistics, saving the gap sharing configuration, etc.

FIGURE 6 illustrates another example method 600 by a wireless device 110 for controlling gap sharing between intra-frequency measurements of different types, according to certain embodiments. The method 600 begins at step 602 when wireless device 110 receives, from a first network node 115a, first configuration information related to a first type of discovery reference signals. At step 604, wireless device 110 receives, from a second network node 115b, second configuration information related to a second type of discovery reference signals. In a particular embodiment, the discovery reference signal of the first type is a positioning reference signal.

At step 606, wireless device 110 determines a cell identification delay or measurement delay on the basis of the first configuration information and second configuration information. According to certain embodiments, the cell identification delay or measurement delay is variable. In a particular embodiment, the cell identification delay or measurement delay is related to the first type of discovery reference signal.

In a particular embodiment, the step of determining the cell identification delay or measurement delay may include increasing a default cell identification delay or a default measurement delay when a subframe configuration period of the discovery reference signal of the first type exceeds a threshold value. For example, the default cell identification delay may be increased for performing the measurements on the discovery reference signal of the first type when the measurements on the discovery reference signal of the first type are of a higher priority than the measurements on the discovery reference signal of the second type.

As another example, in a particular embodiment, wireless device 110 may increase a default cell identification delay or a default measurement delay by a parameter that is a function of a measurement gap configuration and a configuration of the first type of discovery reference signal. In one embodiment, the measurement gap configuration and the configuration of the first type of discovery reference signal may include a measurement gap periodicity and a periodicity of the first type of discovery reference signal.

At step 608, wireless device 110 performs at least one first measurement on a discovery reference signal of the first type. In a particular embodiment, wireless device 110 may determine that a bandwidth associated with the discovery reference signal of the first type is equal to a bandwidth of a serving carrier. In response to the determination, wireless device 110 may perform the at least one first measurement on the discovery reference signal of the first type without measurement gaps. As another example, in another particular embodiment wireless device 110 may that a bandwidth associated with the discovery reference signal of the first type is equal to a bandwidth of all cells on a serving carrier. In response to the determination, wireless device 110 may perform the at least one measurement on the discovery reference signal of the first type within a bandwidth used by the wireless device for receiving data or control signals from a first cell.

At step 610, wireless device 110 performs at least one second measurement on a discovery reference signal of a second type. The at least one second measurement includes identification of a cell performed within a duration corresponding to the cell identification delay or a measurement performed within a duration corresponding to the measurement delay.

In a particular embodiment, the measurements on the discover reference signal of the second type may be performed in measurement gaps associated with the first configuration information. For example, wireless device 110 may determine that a bandwidth associated with the discovery reference signals of the first type is less than a bandwidth of at least one cell on a serving carrier. Wireless device 110 may then perform the measurements on the discovery reference signal of the first type in the measurement gaps associated with the second configuration information, in a particular embodiment

In a particular embodiment, prior to receiving the first and second configuration information in steps 602 and 604, respectively wireless device 110 may transmit, to the first network node, an indication of an ability to perform the measurements on the discovery reference signal of the first type in the measurement gaps associated with the second configuration information.

At step 612, wireless device 110 performs one or more operational tasks based on the at least one first measurement and the at least one second measurement. In various particular embodiments, for example, the operational tasks may include any one or more of: reporting results of the at least one first measurement or the at least one second measurements to the first network node 115a or the second network node 115b in accordance with the cell identification delay or measurement delay; determining positioning of the wireless device; performing a cell change; performing radio link monitoring; optimizing a receiver configuration; and logging the results.

FIGURE 7 illustrate an example network node 115 for controlling gap sharing between intrafrequency measurements of different types, according to certain embodiments. As described above, network node 115 may be any type of radio network node or any network node that communicates with a wireless device and/or with another network node. Examples of a network node 115 are provided above.

Network nodes 115 may be deployed throughout network 100 as a homogenous deployment, heterogeneous deployment, or mixed deployment. A homogeneous deployment may generally describe a deployment made up of the same (or similar) type of network nodes 115 and/or similar coverage and cell sizes and inter-site distances. A heterogeneous deployment may generally describe deployments using a variety of types of network nodes 115 having different cell sizes, transmit powers, capacities, and inter-site distances. For example, a heterogeneous deployment may include a plurality of low-power nodes placed throughout a macro-cell layout. Mixed deployments may include a mix of homogenous portions and heterogeneous portions.

Network node 115 may include one or more of transceiver 710, processing circuitry 720, memory 730, and network interface 740. In some embodiments, transceiver 710 facilitates transmitting wireless signals to and receiving wireless signals from wireless device 110 (e.g., via an antenna), processing circuitry 720 executes instructions to provide some or all of the functionality described above as being provided by a network node 115, memory 730 stores the instructions executed by processing circuitry 720, and network interface 740 communicates signals to backend network components, such as a gateway, switch, router, Internet, Public Switched Telephone Network (PSTN), core network nodes or radio network controllers, etc.

In certain embodiments, network node 115 may be capable of using multi-antenna techniques and may be equipped with multiple antennas and capable of supporting MIMO techniques. The one or more antennas may have controllable polarization. In other words, each element may have two co-located sub elements with different polarizations (e.g., 90-degree separation as in cross-polarization), so that different sets of beamforming weights will give the emitted wave different polarization.

Processing circuitry 720 may include any suitable combination of hardware and software implemented in one or more modules to execute instructions and manipulate data to perform some or all of the described functions of network node 115. In some embodiments, processing circuitry 720 may include, for example, one or more computers, one or more central processing units (CPUs), one or more microprocessors, one or more applications, and/or other logic.

Memory 730 is generally operable to store instructions, such as a computer program, software, an application including one or more of logic, rules, algorithms, code, tables, etc. and/or other instructions capable of being executed by a processor. Examples of memory 730 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 740 is communicatively coupled to processing circuitry 720 and may refer to any suitable device operable to receive input for network node 115, send output from network node 115, perform suitable processing of the input or output or both, communicate to other devices, or any combination of the preceding.

Network interface 740 may include appropriate hardware (e.g., port, modem, network interface card, etc.) and software, including protocol conversion and data processing capabilities, to communicate through a network.

Other embodiments of network node 115 may include additional components beyond those shown in FIGURE 7 that may be responsible for providing certain aspects of the radio network node's functionality, including any of the functionality described above and/or any additional functionality (including any functionality necessary to support the solutions described above). The various different types of network nodes may include components having the same physical hardware but configured (e.g., via programming) to support different radio access technologies, or may represent partly or entirely different physical components. Additionally, the terms first and second are provided for example purposes only and may be interchanged.

FIGURE 8 illustrates an example method 800 by a network node 115 for controlling gap sharing between intra-frequency measurements of different types, according to certain embodiments. The method begins at step 802 when network node 115 determines the need for a wireless device 110 to perform first measurement on a serving carrier. According to certain embodiments, step 804 may be performed in a similar manner as was described above with respect to step 304 of FIGURE 3.

At step 804, network node 115 determines the need for wireless device 110 to perform second measurements on a serving carrier. According to certain embodiments, step 804 may be performed in a similar manner as was described above with respect to step 306 of FIGURE 3.

At step 806, network node 115 determines the need for measurement gaps for performing at least one of the first measurements and the second measurements. According to certain embodiments, step 806 may be performed in a similar manner as was described above with respect to step 308 of FIGURE 3.

At step 808 and based on the determined need for measurement gaps, network node 115 controls or suggests a configuration or reconfiguration. The configuration or reconfiguration may depend on the measurement procedure applied.

According to certain embodiments, network node 115 may change a transmission configuration of network node 115 or another node. In a particular embodiment, network node 115 may change time and/or frequency domain resources. For example, network node 115 may change the BW allocation used for transmission of DRS1 and/or DRS2 signals. As another example, network node 115 may increase the bandwidth used for transmitting DRS1 and/or DRS2 in order to avoid using the gaps. In still yet another example, network node 115 may adapt its periodicity or density used for transmitting a certain type of signals (e.g. DRS1, DRS2) to align with the gaps.

According to another particular embodiment, network node 115 may change a transmission pattern of network node 115 or another network node. For example, network node 115 may adapt its transmission pattern of signals to align with the measurement gap configuration. In a particular example embodiment where measurement gap is used every 80 ms or 160 ms for carrying out the first measurement, then network node 115 may adapt its transmission pattern of DRS1 signals such that they occur within the gap every 80 ms or 160 ms.

According to another particular embodiment, network node 115 may change a length of a measurement occasion. For example, network node 115 may change the number of PRS subframes in a positioning occasion.

According to another particular embodiment, network node 115 may change a DRS configuration.

According to certain embodiments, network node 115 may change a configuration of wireless device 110. In a particular embodiment, for example, network node 115 may change a UE measurement gap configuration. For example, network node 115 may change the offset of gaps, gap periodicity, gap length, or another gap configuration. In a particular embodiment, more gaps may be needed when two or more measurement types are to use such gaps, aligning measurement gaps with transmission occasions of all, some, or a certain amount of signals which are to be measured in the gaps.

In a particular embodiment, for example, network node 115 may change the first and/or the second measurements configuration of wireless device 110. For example, network node 115 may change time and/or frequency domain resources or measurement pattern, measurement periodicity, sampling rate, BW for any measurement on the serving carrier or for the first and/or the second measurements, etc.

In a particular embodiment, for example, network node 115 may change a UE hopping configuration for receiving data and/or for performing the first and/or the second measurements. For example, network node 115 may align hopping resources for measurements to be performed in the same gap, misalign/shift hopping resources for measurements to be performed in different gaps, and/or align hopping pattern and measurement gap pattern to ensure full or at least a certain overlap, for example, to capture in a gap all or most of the intended signals.

In a particular embodiment, for example, network node 115 may change measurement waiting time. For example, the network will consider that the measurement has failed if the measurement result has not been received within a certain time. Network node 115 may collect measurement success/failure statistics. In a particular embodiment, the measurement success/failure statistics may also be compared to a target. For example, 90% of success may be required for a wireless device 110 to pass a conformance test, according to one example embodiment, and/or trigger an action towards wireless device 110 (e.g., a new attempt for the measurement configuration, RRC reconfiguration, changing a serving cell, etc.).

FIGURE 9 illustrates another example method 900 by a network node 115 for controlling gap sharing between intra-frequency measurements of different types, according to certain embodiments. The method begins at step 902 when network node 115 transmits, to a wireless device 110, first configuration information related to a first type of discovery reference signals.

At step 904, network node 115 transmits first configuration information related to a first type of discovery reference signals to a wireless device 110.

At step 906, network node 115 determines a cell identification delay or measurement delay on the basis of the first configuration information and a second configuration information that relates to a second type of discovery reference signals to be received by the wireless device. According to certain embodiments, the cell identification delay or measurement delay is variable.

At step 908, network node 115 receives, from wireless device 110, a result of measurements performed on the first type of discovery reference signals based on the determined cell identification delay or measurement delay.

In a particular embodiment, the first type of discovery reference signal may be a positioning reference signal, a bandwidth associated with the discovery reference signals of the first type may be less than a bandwidth of at least one cell on a serving carrier, and/or the cell identification delay or measurement delay may be related to the first type of discovery reference signal. In such an embodiment, a default cell identification delay may be increased when a subframe configuration period of the discovery reference signal of the first type exceeds a threshold value. In another embodiment, the default cell identification delay may be increased for performance of the measurements on the discovery reference signal of the first type when the measurements on the discovery reference signal of the first type are of a higher priority than the measurements on the discovery reference signal of the second type.

Where the first type of discovery reference signal is a positioning reference signal, the measurements on the discovery reference signal of the second type may be performed by the wireless device in measurement gaps associated with the first configuration information. In a particular embodiment, the method may further include receiving, from the wireless device, an indication of an ability by the wireless device to perform the measurements on the discovery reference signal of the second type in the measurement gaps associated with the first configuration information.

In another particular embodiment, the second type of discovery reference signal may be a positioning reference signal, a bandwidth associated with the discovery reference signals of the second type may be less than a bandwidth of at least one cell on a serving carrier, and/or the cell identification delay or measurement delay may be related to the second type of discovery reference signal. In such an embodiment, a default cell identification delay may be increased when a subframe configuration period of the discovery reference signal of the second type exceeds a threshold value. In another embodiment, the default cell identification delay may be increased for performance of the measurements on the discovery reference signal of the second type when the measurements on the discovery reference signal of the second type are of a higher priority than the measurements on the discovery reference signal of the first type.

Where the second type of discovery reference signal is a positioning reference signal, the measurements on the discovery reference signal of the first type may be performed by the wireless device in measurement gaps associated with the second configuration information. In a particular embodiment, the method may further include receiving, from the wireless device, an indication of an ability by the wireless device to perform the measurements on the discovery reference signal of the first type in the measurement gaps associated with the second configuration information.

FIGURE 10 illustrates an exemplary radio network controller or core network node, in accordance with certain embodiments. Examples of network nodes can include a mobile switching center (MSC), a serving GPRS support node (SGSN), a mobility management entity (MME), a radio network controller (RNC), a base station controller (BSC), and so on. The radio network controller or core network node 1000 includes processing circuitry 1020, memory 1030, and network interface 1040. In some embodiments, processing circuitry 1020 executes instructions to provide some or all of the functionality described above as being provided by the network node, memory 1030 stores the instructions executed by processing circuitry 1020, and network interface 1040 communicates signals to any suitable node, such as a gateway, switch, router, Internet, Public Switched Telephone Network (PSTN), network nodes 115, radio network controllers or core network nodes 1000, etc.

Processing circuitry 1020 may include any suitable combination of hardware and software implemented in one or more modules to execute instructions and manipulate data to perform some or all of the described functions of the radio network controller or core network node 1000. In some embodiments, processing circuitry 1020 may include, for example, one or more computers, one or more central processing units (CPUs), one or more microprocessors, one or more applications, and/or other logic.

Memory 1030 is generally operable to store instructions, such as a computer program, software, an application including one or more of logic, rules, algorithms, code, tables, etc. and/or other instructions capable of being executed by a processor. Examples of memory 1030 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, network interface 1040 is communicatively coupled to processing circuitry 1020 and may refer to any suitable device operable to receive input for the network node, send output from the network node, perform suitable processing of the input or output or both, communicate to other devices, or any combination of the preceding. Network interface 1040 may include appropriate hardware (e.g., port, modem, network interface card, etc.) and software, including protocol conversion and data processing capabilities, to communicate through a network.

Other embodiments of the network node may include additional components beyond those shown in FIGURE 10 that may be responsible for providing certain aspects of the network node's functionality, including any of the functionality described above and/or any additional functionality (including any functionality necessary to support the solution described above).

According to certain embodiments, a method in a wireless device may optionally include indicating to another node the wireless device's ability to operate according to one or more embodiments described herein. The method may further include determining the need to perform first measurements on a first type of discovery reference signal (DRS1) of a serving carrier (F1), determining the need to perform second measurements on a second type of DRS (DRS2) of the serving carrier (F1), determining the need for measurement gaps for performing at least the second measurements, and performing based on the determined need the first measurements and the second measurements, while using and sharing the measurement gaps provided that DRS1 BW is less than the cell BW of at least one cell of F1 or performing the first measurements without measurement gaps provided DRS1 BW = cell BW of all cells of F1.

Optionally, the method may further include sending a result of at least one of the first measurements and second measurements to another node.

Optionally, the method may further include using a result of at least one of the first measurements and second measurements for one or more operational tasks.

According to certain embodiments, a wireless device may include processing circuitry, the processing circuitry configured to optionally indicate to another node the wireless device's ability to operate according to one or more embodiments described herein. The processing circuity may be further configured to determine the need to perform first measurements on a first type of discovery reference signal (DRS1) of a serving carrier (F1); determine the need to perform second measurements on a second type of DRS (DRS2) of the serving carrier (F1); determine the need for measurement gaps for performing at least the second measurements; and perform based on the determined need the first measurements and the second measurements, while using and sharing the measurement gaps provided that DRS 1 BW is less than the cell BW of at least one cell of F1 or performing the first measurements without measurement gaps provided DRS1 BW = cell BW of all cells of F1.

Optionally, the processing circuitry may be further configured to send a result of at least one of the first measurements and second measurements to another node.

Optionally, the processing circuitry may be further configured to use a result of at least one of the first measurements and second measurements for one or more operational tasks.

According to certain embodiments, a method in a network node may include determining the need for a UE to perform first measurement on a serving carrier; determining the need for a UE to perform second measurements on a serving carrier; determining the need for measurement gaps for performing at least one of the first measurements and the second measurements; and based on the determined need for measurement gaps, network node control or suggest a (re)configuration of one or more of: the transmission configuration (e.g., time and/or frequency domain resources or pattern, transmission bandwidth, etc.) of its own or another node for the signals used for the first and/or second measurements, UE measurement gap configuration, the first and/or the second measurements configuration, e.g., a time and/or frequency domain resources or pattern, periodicity, BW for any measurement on the serving carrier or for the first and/or the second measurements, etc., UE hopping configuration for receiving data and/or for performing the first and/or the second measurements, DRS configuration, UE activity configuration (e.g., DRX cycle length).

According to certain embodiments, a network node may include processing circuitry, the processing circuitry configured to determine the need for a UE to perform first measurement on a serving carrier; determine the need for a UE to perform second measurements on a serving carrier; determine the need for measurement gaps for performing at least one of the first measurements and the second measurements; based on the determined need for measurement gaps, network node control or suggest a (re)configuration of one or more of: the transmission configuration (e.g., time and/or frequency domain resources or pattern, transmission bandwidth, etc.) of its own or another node for the signals used for the first and/or second measurements, UE measurement gap configuration, the first and/or the second measurements configuration, e.g., a time and/or frequency domain resources or pattern, periodicity, BW for any measurement on the serving carrier or for the first and/or the second measurements, etc., UE hopping configuration for receiving data and/or for performing the first and/or the second measurements, DRS configuration, UE activity configuration (e.g., DRX cycle length).

Certain embodiments of the present disclosure may provide one or more technical advantages. For example, certain embodiments may enable and provide the possibility to perform intra-frequency measurements when measurement gaps are needed also for intra-frequency measurements. As another example, certain embodiments may enable and provide the possibility to share measurement gaps between intra-frequency measurements of different types, which may also be associated with different requirements or priorities/importance. As still another example, certain embodiments may enable and or provide the possibility to further control the gap sharing dynamically for measurements on serving cell(s).

Abbreviations used in the preceding description include:

| | |
|---|---|
| ACK | Acknowledged |
| ADC | Analog-to-digital conversion |
| AGC | Automatic gain control |
| ANR | Automatic neighbor relations |
| AP | Access point |
| BCH | Broadcast channel |
| BLER | Block error rate |
| BS | Base station |
| BSC | Base station controller |
| CA | Carrier aggregation |
| CC | Component carrier |
| CG | Cell group |
| CGI | Cell global identity |
| CP | Cyclic prefix |
| CPICH | Common pilot channel |
| CSG | Closed subscriber group |
| DAS | Distributed antenna system |
| DC | Dual connectivity |
| DFT | Discrete Fourier Transform |
| DL | Downlink |
| DL-SCH | Downlink shared channel |
| DRX | Discontinuous reception |
| EARFCN | Evolved absolute radio frequency channel mber |
| ECGI | Evolved CGI |
| eNB | eNodeB |
| FDD | Frequency division duplex |
| FFT | Fast Fourier transform |
| HD-FDD | Half duplex FDD |
| HO | Handover |
| LCMS | Level of Criticality of the Mobility State |
| M2M | machine to machine |
| MAC | Media access control |
| MCG | Master cell group |
| MDT | Minimization of drive tests |
| MeNB | Master eNode B |
| MME | Mobility management entity |
| MRTD | Maximum receive timing difference |
| MSR | Multi-standard radio |
| PDU | Protocol data unit |
| PGW | Packet gateway |
| PHICH | Physical HARQ indication channel |
| PLMN | Public land mobile network |
| ProSe | Proximity Service |
| PSCell | Primary SCell |
| PSC | Primary serving cell |
| PSS | Primary synchronization signal |
| NACK | Not acknowledged |
| OFDM | Orthogonal frequency division multiplexing |
| SI | System Information |
| SIB | System Information Block |
| PCC | Primary component carrier |
| PCI | Physical cell identity |
| PCell | Primary Cell |
| PCG | Primary Cell Group |
| PCH | Paging channel |
| SCC | Secondary component carrier |
| SCell | Secondary Cell |
| SCG | Secondary Cell Group |
| SeNB | Secondary eNode B |
| SFN | System frame number |
| SGW | Signaling gateway |
| SINR | Signal to interference and noise ratio |
| SON | Self-organizing networks |

(continued)

| | | | |
|---|---|---|---|
| PSSS | Primary Sidelink Synchronization Signal | SSC | Secondary serving cell |
| | | SSS | Secondary synchronization signal |
| RAT | Radio Access Technology | TA | Timing advance |
| RF | Radio frequency | TAG | Timing advance group |
| RLM | Radio link monitoring | TDD | Time division duplex |
| RNC | Radio Network Controller | Tx | Transmitter |
| RRC | Radio resource control | UARFCN | Absolute Radio Frequency Channel Number |
| RRH | Remote radio head | | |
| RRU | Remote radio unit | UE | User equipment |
| RSCP | Received signal code power | UL | Uplink |
| RSRP | Reference Signal Received Power | V2X | Vehicle-to-X |
| RSRQ | Reference Signal Received Quality | V2I | Vehicle-to-Infrastructure |
| RSSI | Received signal strength indication | V2P | Vehicle-to-Pedestrian |
| RSTD | Reference signal time difference | | |

ADDITIONAL INFORMATION (Draft of 3GPP TS 36.133 Rel. 14)

8.15.2 Requirements for UE category M2 with CE mode A

The UE category M2 applicability of the requirements in subclause 8.15.2 is defined in Section 3.6. The requirements in this section are applicable for UE category M2 configured with CE mode A. The requirements defined in clause 8.15.2 apply provided the following conditions are met:

- UE is configured with measurement gap according to any of gap patterns defined in Table 8.1.2.1-1.

8.15.2.1 Maximum allowed layers for multiple monitoring for UE category M2 with CE mode A

The UE UE category M2 configured with CE mode A shall be capable of monitoring at least:

- Depending on UE capability, 2 FDD E-UTRA inter-frequency carriers, and

- Depending on UE capability, 2 TDD E-UTRA carriers.

In addition to the requirements defined above, the UE shall be capable of monitoring a total of at least 5 carrier frequency layers, which include one serving carrier frequency and any of the above defined combination of E-UTRA FDD inter-frequency and E-UTRA TDD inter-frequency layers.

8.15.2.2 E-UTRAN intra frequency measurements by UE category M2 with CE mode A

The UE shall be able to identify new intra-frequency cells and perform RSRP and RSRQ measurements of identified intra-frequency cells without an explicit intra-frequency neighbour cell list containing physical layer cell identities. During the RRC _CONNECTED state the UE shall continuously measure identified intra frequency cells and additionally search for and identify new intra frequency cells.

8.15.2.2.1 E-UTRAN FDD intra frequency measurements

8.15.2.2.1.1 E-UTRAN intra frequency measurements when no DRX is used

When no DRX is in use the UE shall be able to identify and measure a new detectable FDD intra frequency cell according to requirements in Table 8.15.2.2.1.1-1 when SCH Ês/Iot >= -6 dB

**Table 8.15.2.2.1.1-1: Requirement on cell identification delay and measurement delay for FDD intrafrequency cell**

| Gap pattern ID | Cell identification delay ($T_{identity_intra_UE\ cat\ M2}$) | Measurement delay ($T_{measure_intra_UE\ cat\ M2}$) |
|---|---|---|
| 0 | **1.44** * $K_{intra_M2_NC}$ seconds | 480 * $K_{intra_M2_NC}$ ms |
| 1 | 2.88 * $K_{intra_M2_NC}$ seconds | 960 * $K_{intra_M2_NC}$ ms |
| $K_{intra_M2_NC}$ = 1 / X * 100 where X is a signalled RRC parameter TBD [2]. | | |

A cell shall be considered detectable when

- RSRP related side conditions given in Sections 9.1.x.1 and 91.x.2 are fulfilled for a corresponding Band,
- RSRQ related side conditions given in Clause 9.1.x.1 are fulfilled for a corresponding Band,
- SCH_RP and SCH Ês/Iot according to Annex Table B.2.14-1 for a corresponding Band.

Identification of a cell shall include detection of the cell and additionally performing a single measurement with measurement period of $T_{measure_intra_UE\ cat\ M2}$. If higher layer filtering is used, an additional cell identification delay can be expected.

In the RRC _CONNECTED state the measurement period for intra frequency measurements is according to Table 8.15.2.2.1.1-1. When measurement gaps are activated the UE shall be capable of performing measurements for at least 6 cells. If the UE has identified more than 6 cells, the UE shall perform measurements but the reporting rate of RSRP and RSRQ measurement of cells from UE physical layer to higher layers may be decreased.

The RSRP measurement accuracy for all measured cells shall be as specified in the sub-clauses 9.1.x.1 and 9.1.x.2.

The RSRQ measurement accuracy for all measured cells shall be as specified in the sub-clauses 9.1.x.3.

8.15.2.2.1.1.1 Measurement Reporting Requirements

8.15.2.2.1.1.1.1 Periodic Reporting

Reported RSRP and RSRQ measurement contained in periodically triggered measurement reports shall meet the requirements in sections 9.1.x.1 and 9.1.x.2.

8.15.2.2.1.1.1.2 Event-triggered Periodic Reporting

Reported RSRP and RSRQ measurement contained in event triggered periodic measurement reports shall meet the requirements in sections 9.1.x.1 and 9.1.x.2.

The first report in event triggered periodic measurement reporting shall meet the requirements specified in clause 8.15.2.2.1.1.1.3.

8.15.2.2.1.1.1.3 Event Triggered Reporting

Reported RSRP and RSRQ measurement contained in event triggered measurement reports shall meet the requirements in sections 9.1.x.1 and 9.1.x.2.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that the measurement report is not delayed by other RRC signalling on the DCCH. This measurement reporting delay excludes a delay uncertainty resulted when inserting the measurement report to the TTI of the uplink DCCH. The delay uncertainty is: 2 x $TTI_{DCCH.}$ This measurement reporting delay excludes a delay which caused by no UL resoureces for UE to send the measurement report.

The event triggered measurement reporting delay, measured without L3 filtering shall be less than $T_{identify\ intra_UE\ cat\ M2_NC}$ defined in Clause 8.15.2.2.1.1. When L3 filtering is used or IDC autonomous denial is configured

an additional delay can be expected.

If a cell which has been detectable at least for the time period $T_{identify_intra_UE\ cat\ M2_NC}$ defined in clause 8.15.2.2.1.1 becomes undetectable for a period ≤ 5 seconds and then the cell becomes detectable again and triggers an event, the event triggered measurement reporting delay shall be less than $T_{Measurement_Period_UE\ cat\ M2,\ Intra}$ provided the timing to that cell has not changed more than ± 50 Ts and the L3 filter has not been used. When L3 filtering is used or IDC autonomous denial is configured, an additional delay can be expected.

8.15.2.2.1.2 E-UTRAN intra frequency measurements when DRX is used

When DRX is in use the UE shall be able to identify a new detectable FDD intra frequency cell within $T_{identify_intra_UE\ cat\ M2_NC}$ as shown in table 8.15.2.2.1.2-1.

When eDRX_CONN is in use the UE shall be able to identify a new detectable FDD intra frequency cell within $T_{identify_intra_UE\ cat\ M2_NC}$ as shown in table 8.15.2.2.1.2-1A.

**Table 8.15.2.2.1.2-1: Requirement to identify a newly detectable FDD intrafrequency cell**

| Gap pattern ID | DRX cycle length (s) | $T_{identify_intra_UE\ cat\ M2_NC}$ (S) (DRX cycles) |
|---|---|---|
| 0 | ≤0.04 | 1 .44 * $K_{intra_M2_NC}$ (Note 1) |
| | 0.04<DRX-cycle≤0.08 | Note 2 (40 * $K_{intra_M2_NC}$) |
| | 0.128 | 3.2 (25 * $K_{intra_M2_NC}$) |
| | 0.128<DRX-cvcle≤2.56 | Note 2(20 * $K_{intra_M2_Nc}$) |
| 1 | <0.128 | 2.88 * $K_{intra_M2_NC}$ (Note 1) |
| | 0.128 | 3.2 * $K_{intra_M2_NC}$ (25) |
| | 0.128<DRX-cvcle≤2.56 | Note 2(20 * $K_{intra_M2_NC}$) |
| Note 1: Number of DRX cycle depends upon the DRX cycle in use<br>Note 2: Time depends upon the DRX cycle in use | | |

**Table 8.15.2.2.1.2-1A: Requirement to identify a newly detectable FDD intrafrequency cell when eDRX_CONN cycle is used**

| eDRX_CONN cycle length (s) | $T_{identify_intra_UE\ cat\ M2_NC}$ (S) (eDRX_CONN cycles) |
|---|---|
| 2.56<eDRX_CONN cycle≤10.24 | Note (20 * $K_{intra_M2_NC}$) |
| Note: Time depends upon the eDRX_CONN cycle in use | |

A cell shall be considered detectable when

- RSRP related side conditions given in Sections 9.1.x.1 and 91.x.2 are fulfilled for a corresponding Band,
- RSRQ related side conditions given in Clause 9.1.x.1 are fulfilled for a corresponding Band,
- SCH_RP and SCH Ês/Iot according to Annex B.2.14-1 for a corresponding Band

In the RRC _CONNECTED state the measurement period for intra frequency measurements is $T_{measure_intra_UE\ cat\ M2}$. When DRX is used, $T_{measure_intra_UE\ cat\ M2_NC}$ is as specified in table 8.15.2.2.1.2-2. When eDRX_CONN is used, $T_{measure_intra_UE\ cat\ M2_NC}$ is as specified in table 8.15.2.2.1.2-3. The UE shall be capable of performing RSRP and RSRQ measurements for 6 identified-intra-frequency cells, and the UE physical layer shall be capable of reporting measurements to higher layers with the measurement period of $T_{measure_intra_UE\ cat\ M2}$.

**Table 8.15.2.2.1.2-2: Requirement to measure FDD intrafrequency cells**

| Gap pattern ID | DRX cycle length (s) | $T_{measure_intra_UE\ cat\ M2_NC}$ (s) (DRX cycles) |
|---|---|---|
| 0 | <0.128 | 0.48 * $K_{intra_M2_NC}$ (Note1) |
| | 0.128≤DRX-cycle≤2.56 | Note 2 (5 * $K_{intra_M2_NC}$) |
| 1 | <0.256 | 0.960 * $K_{intra_M2_NC}$ (Note 1) |
| | 0.256≤DRX-cvcle≤2.56 | Note 2 (*$K_{intra_M2_NC}$) |
| Note 1: Number of DRX cycle depends upon the DRX cycle in use<br>Note 2: Time depends upon the DRX cycle in use | | |

**Table 8.15.2.2.1.2-3: Requirement to measure FDD intrafrequency cells when eDRX_CONN cycle is used**

| eDRX_CONN cycle length (s) | $T_{measure_intra_UE\ cat\ M2_NC}$ (s) (eDRX_CONN cycles) |
|---|---|
| 2.56<eDRX_CONN cycle≤10.24 | Note (5 * $K_{intra_M2_NC}$) |
| Note: Time depends upon the eDRX CONN cycle in use | |

The RSRP measurement accuracy for all measured cells shall be as specified in the sub-clauses 9.1.x.1 and 9.1.x.2.

The RSRQ measurement accuracy for all measured cells shall be as specified in the sub-clauses 9.1.x.3.

8.15.2.2.1.2.1 Measurement Reporting Requirements

8.15.2.2.1.2.1.1 Periodic Reporting

Reported RSRP and RSRQ measurement contained in periodically triggered measurement reports shall meet the requirements in sections 9.1.x.1 and 9.1.x.2.

8.15.2.2.1.2.1.2 Event-triggered Periodic Reporting

Reported RSRP and RSRQ measurement contained in event triggered periodic measurement reports shall meet the requirements in sections 9.1.x.1 and 9.1.x.2.

The first report in event triggered periodic measurement reporting shall meet the requirements specified in clause 8.15.2.2.1.2.1.3.

8.15.2.2.1.2.1.3 Event Triggered Reporting

Reported RSRP and RSRQ measurement contained in event triggered measurement reports shall meet the requirements in sections 9.1.x.1 and 9.1.x.2.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that that the measurement report is not delayed by other RRC signalling on the DCCH. This measurement reporting delay excludes a delay uncertainty resulted when inserting the measurement report to the TTI of the uplink DCCH. The delay uncertainty is: 2 x $TTI_{DCCH}$.This measurement reporting delay excludes a delay which caused by no UL resources for UE to send the measurement report.

The event triggered measurement reporting delay, measured without L3 filtering shall be less than $T_{identify_intra,\ UE\ cat\ M2}$ defined in Clause 8.15.2.2.1.2 When L3 filtering is used or IDC autonomous denial is configured an additional delay can be expected.

If a cell which has been detectable at least for the time period $T_{identify_intra_UE\ cat\ M2_NC}$ defined in clause 8.15.2.2.1.2 becomes undetectable for a period ≤ 5 seconds and then the cell becomes detectable again and triggers an event, the event triggered measurement reporting delay shall be less than $T_{measure_intra_UE\ cat\ M2_NC}$ provided the timing to that cell has not changed more than ± 50 Ts and the L3 filter has not been used. When L3 filtering is used or IDC autonomous denial is configured, an additional delay can be expected.

8.15.2.2.2 E-UTRAN intra frequency measurements for HD-FDD

8.15.2.2.2.1 E-UTRAN intra frequency measurements when no DRX is used

The requirements in this section are applicable for the UE which supports half duplex operation on one or more supported frequency bands [2].

The requirements defined in clause 8.15.2.2.1.1 also apply for this section provided the following conditions are met:

- at least downlink subframe # 0 or downlink subframe # 5 per radio frame of an intra-frequency cell to be identified by the UE is available at the UE over $T_{identify_intra_UE\ cat\ M2}$;
- at least one downlink subframe per radio frame of measured cell is available at the UE for RSRP measurement assuming measured cell is identified cell over $T_{measure_intra_UE\ cat\ M2}$.
- RSRP related side conditions given in Sections 9.1.2.1 and 9.1.2.2 are fulfilled for a corresponding Band,
- RSRQ related side conditions given in Clause 9.1.x.1 are fulfilled for a corresponding Band,
- SCH_RP and SCH Ês/Iot according to Annex Table B.2.14-2 for a corresponding Band

8.15.2.2.2.2 E-UTRAN intra frequency measurements when DRX is used

The requirements in this section are applicable for the UE which supports half duplex operation on one or more supported frequency bands [2].

When DRX is in use the UE shall be able to identify a new detectable HD-FDD intra frequency cell within $T_{identify_intra_UE\ cat\ M2_NC}$ as shown in table 8.15.2.2.2.2-1.

When eDRX_CONN is in use, the UE shall be able to identify a new detectable FDD intra frequency cell within $T_{identify_intra_UE\ cat\ M2_NC}$ as shown in table 8.15.2.2.2.2-1A.

**Table 8.15.2.2.2.2-1: Requirement to identify a newly detectable HD-FDD intrafrequency cell**

| Gap pattern ID | DRX cycle length (s) | $T_{identify_intra_UE\ cat\ M2_NC}$ (S) (DRX cycles) |
|---|---|---|
| 0 | ≤0.04 | 1.44 * $K_{intra_M2_NC}$ (Note 1) |
| | 0.04≤DRX-cycle≤0.08 | Note 2 (40 * $K_{intra_M2_NC}$) |
| | 0.128 | 3.2 (32 * $K_{intra_M2_NC}$) |
| | 0.128<DRX-cvcle≤2.56 | Note 2(25 * $K_{intra_M2_NC}$) |
| 1 | ≤0.08 | 2.88 * $K_{intra_M2_NC}$ (Note 1) |
| | 0.128 | 3.2 (32 * $K_{intra_M2_NC}$) |
| | 0.128<DRX-cvcle≤2.56 | Note 2(25 * $K_{intra_M2_NC}$) |
| Note 1: Number of DRX cycle depends upon the DRX cycle in use<br>Note 2: Time depends upon the DRX cycle in use | | |

**Table 8.15.2.2.2.2-1A: Requirement to identify a newly detectable HD-FDD intrafrequency cell when eDRX_CONN cycle is used**

| eDRX_CONN cycle length (s) | $T_{indentify_intra_UE\ cat\ M2_NC}$ (S) (eDRX_CONN cycles) |
|---|---|
| 2.56<eDRX_CONN cycle≤10.24 | Note (25 * $K_{intra_M2_NC}$) |
| Note: Time depends upon the eDRX_CONN cycle in use | |

A cell shall be considered detectable when

- RSRP related side conditions given in Sections 9.1.x.1 and 9.1.x.2 are fulfilled for a corresponding Band,
- RSRQ related side conditions given in Clause 9.1.x.1 are fulfilled for a corresponding Band,
- SCH_RP and SCH Ês/Iot according to Annex Table B.2.14-2 for a corresponding Band

In the RRC _CONNECTED state the measurement period for intra frequency measurements is $T_{measure_intra_UE\ cat\ M2}$. When DRX is used, $T_{measure_intra_UE\ cat\ M2_NC}$ is as specified in table 8.15.2.2.2.2-2. When eDRX_CONN is used, $T_{measure_intra_UE\ cat\ M2\ _NC}$ is as specified in table 8.15.2.2.2.2-3. The UE shall be capable of performing RSRP and RSRQ measurements for 6 identified-intra-frequency cells, and the UE physical layer shall be capable of reporting measurements to higher layers with the measurement period of $T_{measure_intra_UE\ cat\ M2}$.

**Table 8.15.2.2.2.2-2: Requirement to measure HD-FDD intrafrequency cells**

| Gap pattern ID | DRX cycle length (s) | $T_{measure_intra_UE\ cat\ M2_NC}$ (s) (DRX cycles) |
|---|---|---|
| 0 | <0.08 | 0.48 * $K_{intra_M2_NC}$ (Note 1) |
| | 0.08≤DRX-cycle≤0.16 | Note 2 (7 * $K_{intra_M2_NC}$) |
| | 0.16<DRX-cvcle≤2.56 | Note 2(5 * $K_{intra_M2_NC}$) |
| 1 | <0.16 | 0.96 * $K_{intra_M2_NC}$ (Note 1) |
| | DRX-cycle=0.16 | 1.12 * $K_{intra_M2_NC}$ (7 * $K_{intra_M2_NC}$) |
| | 0.16<DRX-cvcle≤2.56 | Note 2(5 * $K_{intra_M2_NC}$) |
| Note 1: Number of DRX cycle depends upon the DRX cycle in use<br>Note 2: Time depends upon the DRX cycle in use | | |

**Table 8.15.2.2.2.2-3: Requirement to measure HD-FDD intrafrequency cells when eDRX_CONN cycle is used**

| eDRX_CONN cycle length (s) | $T_{measure_intra_UE\ cat\ M2_NC}$ (s) (eDRX_CONN cycles) |
|---|---|
| 2.56<eDRX_CONN cycle≤10.24 | Note (5 * $K_{intra_M2_NC}$) |
| Note: Time depends upon the eDRX_CONN cycle in use | |

The RSRP measurement accuracy for all measured cells shall be as specified in the sub-clauses 9.1.x.1 and 9.1.x.2.

The RSRQ measurement accuracy for all measured cells shall be as specified in the sub-clauses 9.1.x.3.

8.15.2.2.2.2.1 Measurement Reporting Requirements

8.15.2.2.2.2.1.1 Periodic Reporting

Reported RSRP and RSRQ measurement contained in periodically triggered measurement reports shall meet the requirements in sections 9.1.x.1 and 9.1.x.2.

8.15.2.2.2.2.1.2 Event-triggered Periodic Reporting

Reported RSRP and RSRQ measurement contained in event triggered periodic measurement reports shall meet the requirements in sections 9.1.x.1 and 9.1.x.2.

The first report in event triggered periodic measurement reporting shall meet the requirements specified in clause 8.15.2.2.2.2.1.3.

8.15.2.2.2.2.1.3 Event Triggered Reporting

Reported RSRP and RSRQ measurement contained in event triggered measurement reports shall meet the requirements in sections 9.1.x.1 and 9.1.x.2.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that that the measurement report is not delayed by other RRC signalling on the DCCH. This measurement reporting delay excludes a delay uncertainty resulted when inserting the measurement report to the TTI of the uplink DCCH. The delay uncertainty is: 2 x $TTI_{DCCH}$.This measurement reporting delay excludes a delay which caused by no UL resources for UE to send the measurement report.

The event triggered measurement reporting delay, measured without L3 filtering shall be less than $T_{identify_intra_UE\ cat\ M2_NC}$ defined in Clause 8.15.2.2.2.2 When L3 filtering is used or IDC autonomous denial is configured an additional delay can be expected.

If a cell which has been detectable at least for the time period $T_{identify_intra_UE\ cat\ M2_NC}$ defined in clause 8.15.2.2.2.2 becomes undetectable for a period ≤ 5 seconds and then the cell becomes detectable again and triggers an event, the event triggered measurement reporting delay shall be less than $T_{measure_intra_UE\ cat\ M2_NC}$ provided the timing to that cell has not changed more than ± 50 Ts and the L3 filter has not been used. When L3 filtering is used or IDC autonomous denial is configured, an additional delay can be expected.

8.15.2.2.3 E-UTRAN TDD intra frequency measurements

8.15.2.2.3.1 E-UTRAN intra frequency measurements when no DRX is used

When no DRX is in use, the UE shall be able to identify and measure a new detectable TDD intra frequency cell according to requirements in Table 8.15.2.2.3.1-1 when SCH Ês/Iot >= -6 dB

**Table 8.15.2.2.3.1-1: Requirement on cell identification delay and measurement delay for TDD intrafrequency cell**

| Gap pattern ID | Cell identification delay ($T_{identify_intra_UE\ cat\ M2}$) | Measurement delay ($T_{measure_intra_UE\ cat\ M2}$) |
|---|---|---|
| 0 | 1.44 * $K_{intra}$ seconds | 480 * $K_{intra_M2_NC}$ ms |
| 1 | 2.88 * $K_{intra}$ seconds | 960 * $K_{intra_M2_NC}$ ms |
| $K_{intra}$= 1 /X*100 where X is a signalled RRC parameter TBD [2]. | | |

A cell shall be considered detectable when

- RSRP related side conditions given in Sections 9.1.x.1 and 9.1.x.2 are fulfilled for a corresponding Band,
- RSRQ related side conditions given in Clause 9.1.x.1 are fulfilled for a corresponding Band,
- SCH_RP and SCH Ês/Iot according to Annex Table B.2.14-1 for a corresponding Band.

Identification of a cell shall include detection of the cell and additionally performing a single measurement with measurement period of $T_{measure_intra_UE\ cat\ M2}$. If higher layer filtering is used, an additional cell identification delay can be expected.

In the RRC _CONNECTED state the measurement period for intra frequency measurements is according to Table 8.15.2.2.3.1-1. When measurement gaps are activated the UE shall be capable of performing measurements for at least 6 cells. If the UE has identified more than 6 cells, the UE shall perform measurements but the reporting rate of RSRP and RSRQ measurements of cells from UE physical layer to higher layers may be decreased.

The RSRP measurement accuracy for all measured cells shall be as specified in the sub-clauses 9.1.x.1 and 9.1.x.2.

The RSRQmeasurement accuracy for all measured cells shall be as specified in the sub-clauses 9.1.x.3.

8.15.2.2.3.1.1 Measurement Reporting Requirements

8.15.2.2.3.1.1.1 Periodic Reporting

Reported RSRP and RSRQ measurement contained in periodically triggered measurement reports shall meet the requirements in sections 9.1.x.1 and 9.1.x.2.

8.15.2.2.3.1.1.2 Event-triggered Periodic Reporting

Reported RSRP and RSRQ measurement contained in event triggered periodic measurement reports shall meet the requirements in sections 9.1.x.1 and 9.1.x.2.

The first report in event triggered periodic measurement reporting shall meet the requirements specified in clause 8.15.2.2.3.1.1.3.

8.15.2.2.3.1.1.3 Event Triggered Reporting

Reported RSRP and RSRQ measurement contained in event triggered measurement reports shall meet the requirements in sections 9.1.x.1 and 9.1.x.2.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that that the measurement report is not delayed by other RRC signalling on the DCCH. This measurement reporting delay excludes a delay uncertainty resulted when inserting the measurement report to the TTI of the uplink DCCH. The delay uncertainty is: 2 x $TTI_{DCCH.}$This measurement reporting delay excludes a delay which caused by no UL resources for UE to send the measurement report.

The event triggered measurement reporting delay, measured without L3 filtering shall be less than $T_{identify\ intra_UE\ cat\ M2_NC}$ defined in Clause 8.15.2.2.3.1. When L3 filtering is used or IDC autonomous denial is configured an additional delay can be expected.

If a cell which has been detectable at least for the time period $T_{identify_intra_UE\ cat\ M2_NC}$ defined in clause 8.15.2.2.3.1 becomes undetectable for a period ≤ 5 seconds and then the cell becomes detectable again and triggers an event, the event triggered measurement reporting delay shall be less than $T_{Measurement_Period\ Intra_UE\ cat\ M2_NC}$ provided the timing to that cell has not changed more than ± 50 Ts and the L3 filter has not been used. When L3 filtering is used or IDC autonomous denial is configured, an additional delay can be expected.

8.15.2.2.3.2 E-UTRAN intra frequency measurements when DRX is used

When DRX is in use the UE shall be able to identify a new detectable TDD intra frequency cell within $T_{identify_intra_UE\ catM2}$ as shown in table 8.15.2.2.3.2-1.

When eDRX_CONN is in use the UE shall be able to identify a new detectable TDD intra frequency cell within $T_{identify_intra_UE\ cat\ M2_NC}$ as shown in table 8.15.2.2.3.2-1A.

**Table 8.15.2.2.3.2-1: Requirement to identify a newly detectable TDD intrafrequency cell**

| Gap pattern ID | DRX cycle length (s) | $T_{identify_intra_UE\ cat\ M2_NC}$ (s) (DRX cycles) |
|---|---|---|
| 0 | ≤0.04 | 1 .44 * $K_{intra_M2_NC}$ (Note 1) |
| | 0.04<DRX-cycle≤0.08 | Note 2 (40 * $K_{intra_M2_NC}$) |
| | 0.128 | 3.2 * $K_{intra_M2_NC}$ (25 * $K_{intra_M2_NC}$) |
| | 0.128<DRX-cvcle≤2.56 | Note 2(20 * $K_{intra_M2_NC}$) |
| 1 | <0.128 | 2.88 * $K_{intra_M2_NC}$ (Note 1) |
| | 0.128 | 3.2 * $K_{intra_M2_NC}$ (25 * $K_{intra_M2_NC}$) |
| | 0.128<DRX-cvcle≤2.56 | Note 2(20 * $K_{intra_M2_NC}$) |
| Note 1: Number of DRX cycle depends upon the DRX cycle in use<br>Note 2: Time depends upon the DRX cycle in use | | |

**Table 8.15.2.2.3.2-1A: Requirement to identify a newly detectable TDD intrafrequency cell when eDRX_CONN cycle is used**

| eDRX_CONN cycle length (s) | $T_{identify_intra_UE\ cat\ M2_NC}$ (S) CONN cycles) |
|---|---|
| 2.56<eDRX_CONN cycle≤10.24 | Note (20 * $K_{intra_M2_NC}$) |
| Note: Time depends upon the eDRX_CONN cycle in use | |

A cell shall be considered detectable when

- RSRP related side conditions given in Clause 9.1.x.1 and 9.1.x.2 are fulfilled for a corresponding Band,
- RSRQ related side conditions given in Clause 9.1.x.1 are fulfilled for a corresponding Band,
- SCH_RP and SCH Ês/Iot according to Annex Table B.2.14-1 for a corresponding Band

In the RRC _CONNECTED state the measurement period for intra frequency measurements is $T_{measure_intra_UE\ cat\ M2}$. When DRX is used, $T_{measure_intra_UE\ cat\ M2_NC}$ is as specified in table 8.15.2.2.3.2-2. When eDRX_CONN is used, $T_{measure_intra_UE\ cat\ M2_NC}$ is as specified in table 8.15.2.2.3.2-3. The UE shall be capable of performing RSRP and RSRQ measurements for 6 identified intra-frequency cells and the UE physical layer shall be capable of reporting measurements to higher layers with the measurement period of $T_{measure_intra_UE\ cat\ M2}$.

**Table 8.15.2.2.3.2-2: Requirement to measure TDD intra frequency cells**

| Gap pattern ID | DRX cycle length (s) | $T_{measure_intra_UE\ cat\ M2_NC}$ (s) (DRX cycles) |
|---|---|---|
| 0 | <0.128 | 0.48 * $K_{intra_M2_NC}$ (Note 1) |
| | 0.128≤DRX-cycle≤2.56 | Note 2 (5 * $K_{intra_M2_NC}$) |
| 1 | <0.256 | 0.96 * $K_{intra_M2_NC}$ (Note 1) |
| | 0.256≤DRX-cycle≤2.56 | Note 2 (5 * $K_{intra_M2_NC}$) |
| Note 1: Number of DRX cycle depends upon the DRX cycle in use<br>Note 2: Time depends upon the DRX cycle in use | | |

**Table 8.15.2.2.3.2-3: Requirement to measure TDD intra frequency cells when eDRX_CONN cycle is used**

| eDRX_CONN cycle length (s) | $T_{measure_intra_UE\ cat\ M2_NC}$ (s) (eDRX_CONN cycles) |
|---|---|
| 2.56<eDRX_CONN cycle≤10.24 | Note (5 * $K_{intra_M2_NC}$) |
| Note: Time depends upon the eDRX_CONN cycle in use. | |

The RSRP measurement accuracy for all measured cells shall be as specified in the sub-clauses 9.1.x.1 and 9.1.x.2.

The RSRQ measurement accuracy for all measured cells shall be as specified in the sub-clauses 9.1.x.3.

8.15.2.2.3.2.1 Measurement Reporting Requirements

8.15.2.2.3.2.1.1 Periodic Reporting

Reported RSRP and RSRQ measurement contained in periodically triggered measurement reports shall meet the requirements in sections 9.1.x.1 and 9.1.x.2.

8.15.2.2.3.2.1.2 Event-triggered Periodic Reporting

Reported RSRP and RSRQ measurement contained in event triggered periodic measurement reports shall meet the requirements in sections 9.1.x.1 and 9.1.x.2.

The first report in event triggered periodic measurement reporting shall meet the requirements specified in clause 8.15.2.2.3.2.1.3.

8.15.2.2.3.2.1.3 Event Triggered Reporting

Reported RSRP and RSRQ measurement contained in event triggered measurement reports shall meet the requirements in sections 9.1.x.1 and 9.1.x.2.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that that the measurement report is not delayed by other RRC signalling on the DCCH. This measurement reporting delay excludes a delay uncertainty resulted when inserting the measurement report to the TTI of the uplink DCCH. The delay uncertainty is: 2 x $TTI_{DCCH.}$This measurement reporting delay excludes a delay which caused by no UL resources for UE to send the measurement report.

The event triggered measurement reporting delay, measured without L3 filtering shall be less than $T_{identify_intra_UE\ cat\ M2_NC}$ defined in Clause 8.15.2.2.3.2. When L3 filtering is used or IDC autonomous denial is configured an additional delay can be expected.

If a cell which has been detectable at least for the time period $T_{identify_intra_UE\ cat\ M2_NC}$ defined in clause 8.15.2.2.3.2 becomes undetectable for a period ≤ 5 seconds and then the cell becomes detectable again and triggers an event, the event triggered measurement reporting delay shall be less than $T_{measure_intra_UE\ cat\ M2_NC}$ provided the timing to that cell has not changed more than ± 50 Ts and the L3 filter has not been used. When L3 filtering is used or IDC autonomous denial is configured, an additional delay can be expected.

8.15.2.3 E-UTRAN inter frequency measurements by UE category M2 with CE mode A

The UE shall be able to identify new inter-frequency cells and perform RSRP and RSRQ measurements of identified inter-frequency cells if carrier frequency information is provided by the PCell, even if no explicit neighbour list with physical layer cell identities is provided. During the RRC _ CONNECTED state the UE shall continuously measure identified inter frequency cells and additionally search for and identify new inter frequency cells.

8.15.2.3.1 E-UTRAN FDD - FDD inter frequency measurements

8.15.2.3.1.1 E-UTRAN FDD - FDD inter frequency measurements when no DRX is used

When no DRX is in use the UE shall be able to identify and measure a new detectable FDD inter-frequency cell according to requirements in Table 8.15.2.3.1.1-1 when SCH Ês/Iot >= -6 dB

**Table 8.15.2.3.1.1-1: Requirement on cell identification delay and measurement delay for FDD interfrequency cell**

| Gap pattern ID | Cell identification delay ($T_{identify_inter_UE\ cat\ M2_NC}$) | Measurement delay ($T_{measure_inter_UE\ cat\ M2_NC_NC}$) |
|---|---|---|
| 0 | 1.44 * $K_{inter_M2}$ seconds | 480 * $K_{inter_M2}$ ms |
| 1 | 2.88 * $K_{inter_M2}$ seconds | 960 * $K_{inter_M2}$ ms |

$$K_{Inter_M2} = \frac{N_{freq} * 100}{(100 - X)}$$

where X is signalled by the RRC parameter TBD [2].

A cell shall be considered detectable when

- RSRP related side conditions given in Sections 9.1.x.1 and 91.x.2 are fulfilled for a corresponding Band,
- RSRQ related side conditions given in Clause 9.1.x.1 are fulfilled for a corresponding Band,
- SCH_RP and SCH Ês/Iot according to Annex Table B.2.14-1 for a corresponding Band.

Identification of a cell shall include detection of the cell and additionally performing a single measurement with measurement period of $T_{measure_inter_UE\ cat\ M2_NC}$. If higher layer filtering is used, an additional cell identification delay can be expected.

In the RRC _CONNECTED state the measurement period for inter frequency measurements is according to Table 8.15.2.3.1.1-1. When measurement gaps are scheduled for FDD inter frequency measurements, or the UE supports capability of conducting such measurements without gaps, the UE physical layer shall be capable of reporting RSRP and RSRQ measurements to higher layers with measurement accuracy as specified in sub-clauses 9.1x.1 and 9.1.x.2.

The UE shall be capable of performing RSRP and RSRQ measurements of at least 4 inter-frequency cells per FDD inter-frequency for up to 2 FDD inter-frequencies and the UE physical layer shall be capable of reporting RSRP and RSRQ measurements to higher layers with the measurement period defined in Table 8.15.2.3.1.1-1.

8.15.2.3.1.1.1 Measurement Reporting Requirements

8.15.2.3.1.1.1.1 Periodic Reporting

Reported RSRP and RSRQ measurement contained in periodically triggered measurement reports shall meet the requirements in sections 9.1.x.1 and 9.1.x.2.

8.15.2.3.1.1.1.2 Event-triggered Periodic Reporting

Reported RSRP and RSRQ measurement contained in event triggered periodic measurement reports shall meet the requirements in sections 9.1.x.1 and 9.1.x.2.
The first report in event triggered periodic measurement reporting shall meet the requirements specified in clause 8.15.2.3.1.1.1.3.

8.15.2.3.1.1.1.3 Event Triggered Reporting

Reported RSRP and RSRQ measurement contained in event triggered measurement reports shall meet the requirements in sections 9.1.x.1 and 9.1.x.2.
The UE shall not send any event triggered measurement reports, as long as no reporting criteria are fulfilled.
The measurement reporting delay is defined as the time between an event that will trigger a measurement report and the point when the UE starts to transmit the measurement report over the air interface. This requirement assumes that the measurement report is not delayed by other RRC signalling on the DCCH. This measurement reporting delay excludes a delay uncertainty resulted when inserting the measurement report to the TTI of the uplink DCCH. The delay uncertainty is: $2 \times TTI_{DCCH}$. This measurement reporting delay excludes a delay which caused by no UL resoureces for UE to send the measurement report.
The event triggered measurement reporting delay, measured without L3 filtering shall be less than $T_{identify\ inter_UE\ cat\ M2_NC}$ defined in Clause 8.15.2.3.1.1. When L3 filtering is used or IDC autonomous denial is configured an additional delay can be expected.
If a cell which has been detectable at least for the time period $T_{identify_inter_UE\ cat\ M2_NC}$ defined in clause 8.15.2.3.1.1 becomes undetectable for a period ≤ 5 seconds and then the cell becomes detectable again and triggers an event, the event triggered measurement reporting delay shall be less than $T_{Measurement_Period_UE\ cat\ M2_NC,\ Inter}$ provided the timing to that cell has not changed more than ± 50 Ts and the L3 filter has not been used. When L3 filtering is used or IDC autonomous denial is configured, an additional delay can be expected.

8.15.2.3.1.2 E-UTRAN inter frequency measurements when DRX is used

When DRX is in use and when measurement gaps are scheduled, or the UE supports capability of conducting such measurements without gaps, the UE shall be able to identify a new detectable FDD inter-frequency cell within $Ti_{dentify_inter_UE\ cat\ M2_NC}$ as shown in table 8.15.2.3.1.2-1.
When eDRX_CONN is in use and when measurement gaps are scheduled, or the UE supports capability of conducting such measurements without gaps, the UE shall be able to identify a new detectable FDD inter-frequency cell within $T_{identify_inter_UE\ cat\ M2_NC}$ as shown in table 8.15.2.3.1.2-1A.

**Table 8.15.2.3.1.2-1: Requirement to identify a newly detectable FDD interfrequency cell**

| Gap pattern ID | DRX cycle length (s) | $T_{identify_inter_UE\ cat\ M2_NC}$ (s) (DRX cycles) |
|---|---|---|
| 0 | ≤0.04 | 1.44 * $K_{inter_M2}$ (Note 1) |
| | 0.04<DRX-cycle≤0.08 | Note 2 (40 * $K_{inter_M2}$) |
| | 0.128 | 3.2 * $K_{inter_M2}$ (25 * $K_{inter_M2}$) |
| | 0.128<DRX-cycle≤2.56 | Note 2(20 * $K_{inter_M2}$) |
| 1 | <0.128 | 2.88 * $K_{inter_M2}$ (Note 1) |
| | 0.128 | 3.2 * $K_{inter_M2}$ (25 * $K_{inter_M2}$) |
| | 0.128<DRX-cycle≤2.56 | Note 2(20 * $K_{inter_M2}$) |
| Note 1: Number of DRX cycle depends upon the DRX cycle in use | | |

(continued)

| Gap pattern ID | DRX cycle length (s) | $T_{identify_inter_UE\ cat\ M2_NC}$ (s) (DRX cycles) |
|---|---|---|
| Note 2: Time depends upon the DRX cycle in use | | |

**Table 8.15.2.3.1.2-1A: Requirement to identify a newly detectable FDD interfrequency cell when eDRX_CONN cycle is used**

| eDRX_CONN cycle length (s) | $T_{identify_inter_UE\ cat\ M2_NC}$ (s) (eDRX_CONN cycles) |
|---|---|
| 2.56<eDRX_CONN cycle≤10.24 | Note (20 * $K_{inter_M2}$) |
| Note: Time depends upon the eDRX_CONN cycle in use | |

A cell shall be considered detectable when

- RSRP related side conditions given in Sections 9.1.x.1 and 9.1.x.2 are fulfilled for a corresponding Band,
- RSRQ related side conditions given in Clause 9.1.x.1 are fulfilled for a corresponding Band,
- SCH_RP and SCH Ês/Iot according to Annex B.2.14-1 for a corresponding Band

When DRX or eDRX_CONN is in use, the UE shall be capable of performing RSRP and RSRQ measurements of at least 4 inter-frequency cells per FDD inter-frequency and the UE physical layer shall be capable of reporting RSRP and RSRQ to higher layers with the measurement period $T_{measure_inter_UE\ cat\ M2_NC}$, either measurement gaps are scheduled or the UE supports capability of conducting such measurements without gaps. When DRX is used, $T_{measure_inter_UE\ cat\ M2_NC}$ is as defined in Table 8.15.2.3.1.2-2, and when eDRX_CONN is in use, $T_{measure_inter_UE_cat\ M2_NC}$ is as defined in Table 8.15.2.3.1.2-3.

**Table 8.15.2.3.1.2-2: Requirement to measure FDD interfrequency cells**

| Gap pattern ID | DRX cycle length (s) | $T_{measure_inter_UE\ cat\ M2_NC}$ (s) (DRX cycles) |
|---|---|---|
| 0 | <0.128 | 0.48 * $K_{inter_M2\ cat\ M2_NC}$ (Note 1) |
| | 0.128≤DRX-cycle≤2.56 | Note 2 (5 * $K_{inter_M2}$) |
| 1 | <0.256 | 0.960 * $K_{inter_M2\ cat\ M2_NC}$ (Note 1) |
| | 0.256≤DRX-cycle≤2.56 | Note 2 (5 * $K_{inter_M2}$) |
| Note 1: Number of DRX cycle depends upon the DRX cycle in use<br>Note 2: Time depends upon the DRX cycle in use | | |

**Table 8.15.2.3.1.2-3: Requirement to measure FDD interfrequency cells when eDRX_CONN cycle is used**

| eDRX_CONN cycle length (s) | $T_{measure_inter_UE\ cat\ M2_NC}$ (s) (eDRX_CONN cycles) |
|---|---|
| 2.56<eDRX_CONN cycle≤10.24 | Note (5 * $K_{inter_M2}$) |
| Note: Time depends upon the eDRX CONN cycle in use | |

The RSRP measurement accuracy for all measured cells shall be as specified in the sub-clauses 9.1.x.1 and 9.1.x.2.

The RSRQ measurement accuracy for all measured cells shall be as specified in the sub-clauses 9.1.x.3.

8.15.2.3.1.2.1 Measurement Reporting Requirements

8.15.2.3.1.2.1.1 Periodic Reporting

Reported RSRP and RSRQ measurement contained in periodically triggered measurement reports shall meet the requirements in sections 9.1.x.1 and 9.1.x.2.

8.15.2.3.1.2.1.2 Event-triggered Periodic Reporting

Reported RSRP and RSRQ measurement contained in event triggered periodic measurement reports shall meet the requirements in sections 9.1.x.1 and 9.1.x.2.

The first report in event triggered periodic measurement reporting shall meet the requirements specified in clause 8.15.2.3.1.2.1.3.

8.15.2.3.1.2.1.3 Event Triggered Reporting

Reported RSRP and RSRQ measurement contained in event triggered measurement reports shall meet the requirements in sections 9.1.x.1 and 9.1.x.2.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that that the measurement report is not delayed by other RRC signalling on the DCCH. This measurement reporting delay excludes a delay uncertainty resulted when inserting the measurement report to the TTI of the uplink DCCH. The delay uncertainty is: $2 \times TTI_{DCCH}$. This measurement reporting delay excludes a delay which caused by no UL resources for UE to send the measurement report.

The event triggered measurement reporting delay, measured without L3 filtering shall be less than $T_{identify_inter,\ UE\ cat\ M2_NC}$ defined in Clause 8.15.2.3.1.2 When L3 filtering is used or IDC autonomous denial is configured an additional delay can be expected.

If a cell which has been detectable at least for the time period $T_{identify_inter_UE\ cat\ M2_NC}$ defined in clause 8.15.2.3.1.2 becomes undetectable for a period ≤ 5 seconds and then the cell becomes detectable again and triggers an event, the event triggered measurement reporting delay shall be less than $T_{measure_inter_UE\ cat\ M2_NC}$ provided the timing to that cell has not changed more than ± 50 Ts and the L3 filter has not been used. When L3 filtering is used or IDC autonomous denial is configured, an additional delay can be expected.

8.15.2.3.2 E-UTRAN inter-frequency measurements for HD-FDD

8.15.2.3.2.1 E-UTRAN inter-frequency measurements when no DRX is used

The requirements in this section are applicable for the UE which supports half duplex operation on one or more supported frequency bands [2].

The requirements defined in clause 8.15.2.3.1.1 also apply for this section provided the following conditions are met:

- at least downlink subframe # 0 or downlink subframe # 5 per radio frame of an inter-frequency cell to be identified by the UE is available at the UE over $T_{identify_inter_UE\ cat\ M2_NC}$;

- at least one downlink subframe per radio frame of measured cell is available at the UE for RSRP measurement assuming measured cell is identified cell over $T_{measure_inter_UE\ cat\ M2_NC}$.

- RSRP related side conditions given in Sections 9.1.2.1 and 9.1.2.2 are fulfilled for a corresponding Band,

- RSRQ related side conditions given in Clause 9.1.x.1 are fulfilled for a corresponding Band,

- SCH_RP and SCH Ês/Iot according to Annex Table B.2.14-2 for a corresponding Band

8.15.2.3.2.2 E-UTRAN inter frequency measurements when DRX is used

The requirements in this section are applicable for the UE which supports half duplex operation on one or more supported frequency bands [2].

When DRX is in use and when measurement gaps are scheduled, or the UE supports capability of conducting such measurements without gaps, the UE shall be able to identify a new detectable FDD inter-frequency cell within $T_{identify_inter_UE\ cat\ M2_NC}$ as shown in table 8.15.2.3.2.2-1.

When eDRX_CONN is in use and when measurement gaps are scheduled, or the UE supports capability of conducting such measurements without gaps, the UE shall be able to identify a new detectable FDD inter-frequency cell within $T_{identify_inter_UE\ cat\ M2_NC}$ as shown in table 8.15.2.3.2.2-1A.

**Table 8.15.2.3.2.2-1: Requirement to identify a newly detectable HD-FDD interfrequency cell**

| Gap pattern ID | DRX cycle length (s) | $T_{identify_inter_UE\ cat\ M2_NC}$ (s) (DRX cycles) |
|---|---|---|
| 0 | ≤0.04 | 1.44 * $K_{inter_M2}$ (Note1) |
| | 0.04<DRX-cycle≤0.08 | Note 2 (40 * $K_{inter_M2}$) |
| | 0.128 | 3.2 * $K_{inter_M2}$ (32 * $K_{inter_M2}$) |
| | 0.128<DRX-cycle≤2.56 | Note 2(25 * $K_{inter_M2}$) |
| 1 | ≤0.08 | 2.88 * $K_{inter_M2}$ (Note1) |
| | 0.128 | 3.2 * $K_{inter_M2}$ (32 * $K_{inter_M2}$) |
| | 0.128<DRX-cycle≤2.56 | Note 2(25 * $K_{inter_M2}$) |
| Note 1: Number of DRX cycle depends upon the DRX cycle in use<br>Note 2: Time depends upon the DRX cycle in use | | |

**Table 8.15.2.3.2.2-1A: Requirement to identify a newly detectable HD-FDD interfrequency cell when eDRX_ CONN cycle is used**

| eDRX_CONN cycle length (s) | $T_{identify_inter_UE\ cat\ M2_NC}$ (s) (eDRX_CONN cycles) |
|---|---|
| 2.56<eDRX_CONN cycle≤10.24 | Note (25 * $K_{inter_M2}$) |
| Note: Time depends upon the eDRX_CONN cycle in use | |

A cell shall be considered detectable when

- RSRP related side conditions given in Sections 9.1.x.1 and 9.1.x.2 are fulfilled for a corresponding Band,
- RSRQ related side conditions given in Clause 9.1.x.1 are fulfilled for a corresponding Band,
- SCH_RP and SCH Ês/Iot according to Annex Table B.2.14-2 for a corresponding Band

When DRX or eDRX_CONN is in use, the UE shall be capable of performing RSRP and RSRQ measurements of at least 4 inter-frequency cells per FDD inter-frequency and the UE physical layer shall be capable of reporting RSRP and RSRQ to higher layers with the measurement period $T_{measure_inter_UE\ cat\ M2_NC}$, either measurement gaps are scheduled or the UE supports capability of conducting such measurements without gaps. When DRX is used, $T_{measure_inter_UE\ cat\ M2_NC}$ is as defined in Table 8.15.2.3.2.2-2, and when eDRX_CONN is in use, $T_{measure_inter_UE\ cat\ M2_NC}$ is as defined in Table 8.15.2.3.2.2-3.

**Table 8.15.2.3.2.2-2: Requirement to measure HD-FDD interfrequency cells**

| Gap pattern ID | DRX cycle length (s) | $T_{measure_inter_UE\ cat\ M2_NC}$ (s) (DRX cycles) |
|---|---|---|
| 0 | <0.08 | 0.48 * $K_{inter_M2}$ (Note 1) |
| | 0.08≤DRX-cycle≤0.16 | Note 2 (7 * $K_{inter_M2}$) |
| | 0.16<DRX-cycle≤2.56 | Note 2(5 * $K_{inter_M2}$) |

(continued)

| Gap pattern ID | DRX cycle length (s) | $T_{measure_inter_UE\ cat\ M2_NC}$ (s) (DRX cycles) |
|---|---|---|
| 1 | <0.16 | 0.96 * $K_{inter_M2}$ (Note 1) |
| | DRX-cycle=0.16 | 1.12 * $K_{inter_M2}$ (7 * $K_{inter_M2}$) |
| | 0.16<DRX-cycle≤2.56 | Note 2(5 * $K_{inter_M2}$) |
| Note 1: Number of DRX cycle depends upon the DRX cycle in use<br>Note 2: Time depends upon the DRX cycle in use | | |

**Table 8.15.2.3.2.2-3: Requirement to measure HD-FDD interfrequency cells when eDRX_CONN cycle is used**

| eDRX_CONN cycle length (s) | $T_{measure_inter_UE\ cat\ M2_NC}$ (s) (eDRX_CONN cycles) |
|---|---|
| 2.56<eDRX_CONN cycle≤10.24 | Note (5 * $K_{inter_M2}$) |
| Note: Time depends upon the eDRX_CONN cycle in use | |

The RSRP measurement accuracy for all measured cells shall be as specified in the sub-clauses 9.1.x.1 and 9.1.x.2.

The RSRQ measurement accuracy for all measured cells shall be as specified in the sub-clauses 9.1.x.3.

8.15.2.3.2.2.1 Measurement Reporting Requirements

8.15.2.3.2.2.1.1 Periodic Reporting

Reported RSRP and RSRQ measurement contained in periodically triggered measurement reports shall meet the requirements in sections 9.1.x.1 and 9.1.x.2.

8.15.2.3.2.2.1.2 Event-triggered Periodic Reporting

Reported RSRP and RSRQ measurement contained in event triggered periodic measurement reports shall meet the requirements in sections 9.1.x.1 and 9.1.x.2.

The first report in event triggered periodic measurement reporting shall meet the requirements specified in clause 8.15.2.3.2.2.1.3.

8.15.2.3.2.2.1.3 Event Triggered Reporting

Reported RSRP and RSRQ measurement contained in event triggered measurement reports shall meet the requirements in sections 9.1.x.1 and 9.1.x.2.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that that the measurement report is not delayed by other RRC signalling on the DCCH. This measurement reporting delay excludes a delay uncertainty resulted when inserting the measurement report to the TTI of the uplink DCCH. The delay uncertainty is: $2 \times TTI_{DCCH}$. This measurement reporting delay excludes a delay which caused by no UL resources for UE to send the measurement report.

The event triggered measurement reporting delay, measured without L3 filtering shall be less than $T_{identify_inter_UE\ cat\ M2_NC}$ defined in Clause 8.15.2.3.2.2 When L3 filtering is used or IDC autonomous denial is configured an additional delay can be expected.

If a cell which has been detectable at least for the time period $T_{identify_inter_UE\ cat\ M2_NC}$ defined in clause 8.15.2.3.2.2 becomes undetectable for a period ≤ 5 seconds and then the cell becomes detectable again and triggers an event, the event triggered measurement reporting delay shall be less than $T_{measure_inter_UE\ cat\ M2_NC}$ provided the timing to that cell has not changed more than ± 50 Ts and the L3 filter has not been used. When L3 filtering is used or IDC autonomous denial is configured, an additional delay can be expected.

8.15.2.3.3 E-UTRAN TDD inter frequency measurements

8.15.2.3.3.1 E-UTRAN inter frequency measurements when no DRX is used

When no DRX is in use and when measurement gaps are scheduled, or the UE supports capability of conducting such measurements without gaps, the UE shall be able to identify and measure a new detectable TDD inter frequency cell according to requirements in Table 8.15.2.3.3.1-1 when SCH Ês/Iot >= -6 dB

**Table 8.15.2.3.3.1-1: Requirement on cell identification delay and measurement delay for TDD interfrequency cell**

| Gap pattern ID | Cell identification delay ($T_{identify_inter_UE\ cat\ M2_NC}$) | Measurement delay ($T_{measure_inter_UE\ cat\ M2_NC}$) |
|---|---|---|
| 0 | 1.44* $K_{inter_M2}$ seconds | 480* $K_{inter_M2}$ ms |
| 1 | 2.88* $K_{inter_M2}$ seconds | 960* $K_{inter_M2}$ ms |

$$K_{Inter_M2} = \frac{N_{freq} * 100}{(100 - X)}$$

where X is signalled by the RRC parameter TBD [2].

A cell shall be considered detectable when

- RSRP related side conditions given in Sections 9.1.x.1 and 9.1.x.2 are fulfilled for a corresponding Band,
- RSRQ related side conditions given in Clause 9.1.x.1 are fulfilled for a corresponding Band,
- SCH_RP and SCH Ês/Iot according to Annex Table B.2.14-1 for a corresponding Band.

When measurement gaps are scheduled for TDD inter frequency measurements, or the UE supports capability of conducting such measurements without gaps, the UE physical layer shall be capable of reporting RSRP and RSRQ to higher layers with measurement accuracy as specified in sub-clauses 9.1.x.1 and 9.1.x2 with measurement period ($T_{measure_inter_UE\ cat\ M2_NC}$) given by table 8.15.2.3.3.1-1:
The UE shall be capable of performing RSRP and RSRQ measurements of at least 4 inter-frequency cells per TDD inter-frequency and the UE physical layer shall be capable of reporting RSRP and RSRQ measurements to higher layers with the measurement period $T_{measure_inter_UE\ cat\ M2_NC}$.

8.15.2.3.3.1.1 Measurement Reporting Requirements

8.15.2.3.3.1.1.1 Periodic Reporting

Reported RSRP and RSRQ measurement contained in periodically triggered measurement reports shall meet the requirements in sections 9.1.x.1 and 9.1.x.2.

8.15.2.3.3.1.1.2 Event-triggered Periodic Reporting

Reported RSRP and RSRQ measurement contained in event triggered periodic measurement reports shall meet the requirements in sections 9.1.x.1 and 9.1.x.2.

The first report in event triggered periodic measurement reporting shall meet the requirements specified in clause 8.15.2.3.3.1.1.3.

8.15.2.3.3.1.1.3 Event Triggered Reporting

Reported RSRP and RSRQ measurement contained in event triggered measurement reports shall meet the requirements in sections 9.1.x.1 and 9.1.x.2.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that that the measurement report is not delayed by other RRC signalling on the DCCH. This measurement reporting delay excludes a delay uncertainty resulted when inserting the measurement report to the TTI of the uplink DCCH. The delay uncertainty is: $2 \times TTI_{DCCH}$. This measurement reporting delay excludes a delay which caused by no UL resources for UE to send the measurement report.

The event triggered measurement reporting delay, measured without L3 filtering shall be less than $T_{identify\ inter_UE\ cat\ M2_NC}$ defined in Clause 8.15.2.3.3.1. When L3 filtering is used or IDC autonomous denial is configured an additional delay can be expected.

If a cell which has been detectable at least for the time period $Ti_{dentify_inter_UE\ cat\ M2_NC}$ defined in clause 8.15.2.3.3.1 becomes undetectable for a period ≤ 5 seconds and then the cell becomes detectable again and triggers an event, the event triggered measurement reporting delay shall be less than $T_{Measurement_Period\ Inter_UE\ cat\ M2_NC}$ provided the timing to that cell has not changed more than ± 50 Ts and the L3 filter has not been used. When L3 filtering is used or IDC autonomous denial is configured, an additional delay can be expected.

8.15.2.3.3.2 E-UTRAN inter frequency measurements when DRX is used

When DRX is in use and when DRX or eDRX_CONN is in use, either measurement gaps are scheduled or the UE supports capability of conducting such measurements without gaps, the UE shall be able to identify a new detectable TDD inter frequency cell within $T_{identify_inter_UE\ catM2}$ as shown in table 8.15.2.3.3.2-1.

When eDRX_CONN is in use the UE shall be able to identify a new detectable TDD inter frequency cell within $T_{identify_inter_UE\ cat\ M2_NC}$ as shown in table 8.15.2.3.3.2-1A.

**Table 8.15.2.3.3.2-1: Requirement to identify a newly detectable TDD interfrequency cell**

| Gap pattern ID | DRX cycle length (s) | $T_{identify_inter_UE\ cat\ M2_NC}$ (s) (DRX cycles) |
|---|---|---|
| 0 | ≤0.04 | 1.44* $K_{inter_M2}$ (Note 1) |
| | 0.04<DRX-cycle≤0.08 | Note 2 (40* $K_{inter_M2}$) |
| | 0.128 | 3.2* $K_{inter_M2}$ (25* $K_{inter_M2}$) |
| | 0.128<DRX-cycle≤2.56 | Note 2(20* $K_{inter_M2}$) |
| 1 | <0.128 | 2.88* $K_{inter_M2}$ (Note 1) |
| | 0.128 | 3.2* $K_{inter_M2}$ (25* $K_{inter_M2}$) |
| | 0.128<DRX-cycle≤2.56 | Note 2(20* $K_{inter_M2}$) |
| Note 1: Number of DRX cycle depends upon the DRX cycle in use<br>Note 2: Time depends upon the DRX cycle in use | | |

**Table 8.15.2.3.3.2-1A: Requirement to identify a newly detectable TDD interfrequency cell when eDRX_CONN cycle is used**

| eDRX_CONN cycle length (s) | $T_{identify_inter_UE\ cat\ M2_NC}$ (s) (eDRX_CONN cycles) |
|---|---|
| 2.56<eDRX_CONN cycle≤10.24 | Note (20* $K_{inter_M2}$) |
| Note: Time depends upon the eDRX CONN cycle in use | |

A cell shall be considered detectable when

- RSRP related side conditions given in Clause 9.1.x.1 and 9.1.x.2 are fulfilled for a corresponding Band,
- RSRQ related side conditions given in Clause 9.1.x.1 are fulfilled for a corresponding Band,
- SCH_RP and SCH Ês/Iot according to Annex Table B.2.14-1 for a corresponding Band

When DRX or eDRX_CONN is in use, the UE shall be capable of performing RSRP and RSRQ measurements of at least 4 inter-frequency cells per TDD inter-frequency for up to 3 TDD inter-frequencies and the UE physical layer shall be capable of reporting RSRP and RSRQ measurements to higher layers with the measurement period $T_{measure_inter_UE\ cat\ M2_NC}$, either measurement gaps are scheduled or the UE supports capability of conducting such measurements without gaps. When DRX is in use, $T_{measure_inter_UE\ cat\ M2_NC}$ is as defined in Table 8.15.2.3.3.2-2, and when eDRX_CONN is in use, $T_{measure_inter_UE\ cat\ M2_NC}$ is as defined in Table 8.15.2.3.3.2-3.

**Table 8.15.2.3.3.2-2: Requirement to measure TDD inter frequency cells**

| Gap pattern ID | DRX cycle length (s) | $T_{measure_inter_UE\ cat\ M2_NC}$ (s) (DRX cycles) |
|---|---|---|
| 0 | <0.128 | 0.48* $K_{inter_M2}$ (Note 1) |
| | 0.128≤DRX-cycle≤2.56 | Note 2 (5* $K_{inter_M2}$) |
| 1 | <0.256 | 0.96* $K_{inter_M2}$ (Note 1) |
| | 0.256≤DRX-cycle≤2.56 | Note 2 (5* $K_{inter_M2}$) |
| Note 1: Number of DRX cycle depends upon the DRX cycle in use<br>Note 2: Time depends upon the DRX cycle in use | | |

**Table 8.15.2.3.3.2-3: Requirement to measure TDD inter frequency cells when eDRX_CONN cycle is used**

| eDRX_CONN cycle length (s) | $T_{measure_inter_UE\ cat\ M2_NC}$ (s) (eDRX_CONN cycles) |
|---|---|
| 2.56<eDRX_CONN cycle≤10.24 | Note (5* $K_{inter_M2}$) |
| Note: Time depends upon the eDRX_CONN cycle in use. | |

The RSRP measurement accuracy for all measured cells shall be as specified in the sub-clauses 9.1.x.1 and 9.1.x.2.
The RSRQ measurement accuracy for all measured cells shall be as specified in the sub-clauses 9. 1.x.3.

8.15.2.3.3.2.1 Measurement Reporting Requirements

8.15.2.3.3.2.1.1 Periodic Reporting

Reported RSRP and RSRQ measurement contained in periodically triggered measurement reports shall meet the requirements in sections 9.1.x.1 and 9.1.x.2.

8.15.2.3.3.2.1.2 Event-triggered Periodic Reporting

Reported RSRP and RSRQ measurement contained in event triggered periodic measurement reports shall meet the requirements in sections 9.1.x.1 and 9.1.x.2.
The first report in event triggered periodic measurement reporting shall meet the requirements specified in clause 8.15.2.3.3.2.1.3.

8.15.2.3.3.2.1.3 Event Triggered Reporting

Reported RSRP and RSRQ measurement contained in event triggered measurement reports shall meet the requirements in sections 9.1.x.1 and 9.1.x.2.
The UE shall not send any event triggered measurement reports, as long as no reporting criteria are fulfilled.
The measurement reporting delay is defined as the time between an event that will trigger a measurement report and the point when the UE starts to transmit the measurement report over the air interface. This requirement assumes that that the measurement report is not delayed by other RRC signalling on the DCCH. This measurement reporting delay excludes a delay uncertainty resulted when inserting the measurement report to the TTI of the uplink DCCH. The delay uncertainty is: $2 \times TTI_{DCCH}$. This measurement reporting delay excludes a delay which caused by no UL resources for UE to send the measurement report.
The event triggered measurement reporting delay, measured without L3 filtering shall be less than $T_{identify_inter_UE\ cat\ M2_NC}$ defined in Clause 8.15.2.3.3.2. When L3 filtering is used or IDC autonomous denial is configured an additional delay can be expected.
If a cell which has been detectable at least for the time period $T_{identify_inter_UE\ cat\ M2_NC}$ defined in clause 8.15.2.3.3.2 becomes undetectable for a period ≤ 5 seconds and then the cell becomes detectable again and triggers an event, the event triggered measurement reporting delay shall be less than $T_{measure_inter_UE\ cat\ M2_NC}$ provided the timing to that cell has not changed more than ± 50 Ts and the L3 filter has not been used. When L3 filtering is used or IDC autonomous denial is configured, an additional delay can be expected.

8.15.3 Requirements for UE category M2 with CE mode B

The UE category M2 applicability of the requirements in subclause 8.15.3 is defined in Section 3.6. The requirements in this section are applicable for UE category M2 configured with CE mode B. The requirements defined in clause 8.15.3 apply provided the following conditions are met:

- UE is configured with measurement gap according to any of gap patterns defined in Table 8.1.2.1-1.

8.15.3.1 Maximum allowed layers for multiple monitoring for UE category M2 with CE mode B

The UE UE category M2 configured with CE mode A shall be capable of monitoring at least:

- Depending on UE capability, 2 FDD E-UTRA inter-frequency carriers, and

- Depending on UE capability, 2 TDD E-UTRA carriers.

In addition to the requirements defined above, the UE shall be capable of monitoring a total of at least 5 carrier frequency layers, which include one serving carrier frequency and any of the above defined combination of E-UTRA FDD inter-frequency and E-UTRA TDD inter-frequency layers.

8.15.3.2 E-UTRAN intra frequency measurements by UE category M2 with CE mode B

The UE shall be able to identify new intra-frequency cells and perform RSRP and RSRQ measurements of identified intra-frequency cells without an explicit intra-frequency neighbour cell list containing physical layer cell identities. During the RRC_CONNECTED state the UE shall continuously measure identified intra frequency cells and additionally search for and identify new intra frequency cells.

8.15.3.2.1 E-UTRAN FDD intra frequency measurements

8.15.3.2.1.1 E-UTRAN intra frequency measurements when no DRX is used

When no DRX is in use the UE shall be able to identify and measure a new detectable FDD intra frequency cell according to requirements in Table 8.15.3.2.1.1-1 provided that additional conditions table 8.15.3.2.1.1-2 is met.

**Table 8.15.3.2.1.1-1: Requirement on cell identification delay and measurement delay for FDD intrafrequency cell**

| Gap pattern ID | Cell identification delay ($T_{identify_intra_UE\ cat\ M2_EC}$) | Measurement delay ($T_{measure_intra_UE\ cat\ M2_EC}$) |
|---|---|---|
| 0 | 320.8 * $K_{intra_M2}$ s | 800 * $K_{intra_M2}$ ms |
| 1 | 321.6 * $K_{intra_M2}$ s | 1600 * $K_{intra_M2}$ ms |

**Table 8.15.3.2.1.1-2: Conditions on SCH Ês/Iot for cell identification delay and measurement delay for FDD intrafrequency cell**

| SCH Ês/Iot of already identified cell including serving cell: Q1 | Neighouring cell SCH Ês/Iot: Q2 | Cell identification delay ($T_{identify_intra_UE\ cat\ M2_EC}$) | Measurement delay ($T_{measure_intra_UE\ cat\ M2_EC}$) |
|---|---|---|---|
| -15≤Q1<-6 | -15≤ Q2 < -6 | As defined in table 8.15.3.2.1.1-1 | As defined in table 8.15.3.2.1.1-1 |
| -15≤Q1<-6 | Q2≥-6 | Requirements in 8.15.2 apply | Requirements in 8.15.2 apply |

(continued)

| SCH Ês/Iot of already identified cell including serving cell: Q1 | Neighouring cell SCH Ês/Iot: Q2 | Cell identification delay ($T_{identify_intra_UE\ cat\ M2_EC}$) | Measurement delay ($T_{measure_intra_UE\ cat\ M2_EC}$) |
|---|---|---|---|
| Q1≥-6 | Q2≥-6 | Requirements in 8.15.2 apply | Requirements in 8.15.2 apply |

$K_{intra_M2}$ = 1 / X * 100 where X is signalled by the RRC parameter TBD [2]. A cell shall be considered detectable when

- RSRP related side conditions given in Sections 9.1.x.3 and 9.1.x.4 are fulfilled for a corresponding Band,
- RSRQ related side conditions given in Clause 9.1.x.1 are fulfilled for a corresponding Band,
- SCH_RP and SCH Ês/Iot according to Annex Table B.2.14-3 for a corresponding Band.

Identification of a cell shall include detection of the cell and additionally performing a single measurement with measurement period of $T_{measure_intra_UE\ cat\ M2_EC}$. If higher layer filtering is used, an additional cell identification delay can be expected.

In the RRC_CONNECTED state the measurement period for intra frequency measurements is according to Table 8.15.3.2.1.1-1. When measurement gaps are activated the UE shall be capable of performing measurements for at least 6 cells. If the UE has identified more than 6 cells, the UE shall perform measurements but the reporting rate of RSRP and RSRQ measurements of cells from UE physical layer to higher layers may be decreased.

The RSRP measurement accuracy for all measured cells shall be as specified in the sub-clauses 9.1.x.3 and 9.1.x.4.

The RSRQ measurement accuracy for all measured cells shall be as specified in the sub-clauses 9.1.x.5.

8.15.3.2.1.1.1 Measurement Reporting Requirements

8.15.3.2.1.1.1.1 Periodic Reporting

Reported RSRP and RSRQ measurement contained in periodically triggered measurement reports shall meet the requirements in sections 9.1. 17.3 and 9.1.x.4.

8.15.3.2.1.1.1.2 Event-triggered Periodic Reporting

Reported RSRP and RSRQ measurement contained in event triggered periodic measurement reports shall meet the requirements in sections 9.1.x.3 and 9.1.x.4.

The first report in event triggered periodic measurement reporting shall meet the requirements specified in clause 8.15.3.2.1.1.1.3.

8.15.3.2.1.1.1.3 Event Triggered Reporting

Reported RSRP and RSRQ measurement contained in event triggered measurement reports shall meet the requirements in sections 9.1.x.3 and 9.1.x.4.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that the measurement report is not delayed by other RRC signalling on the DCCH. This measurement reporting delay excludes a delay uncertainty resulted when inserting the measurement report to the TTI of the uplink DCCH. The delay uncertainty is: $2 \times TTI_{DCCH}$.This measurement reporting delay excludes a delay which caused by no UL resoureces for UE to send the measurement report.

The event triggered measurement reporting delay, measured without L3 filtering shall be less than $T_{identify\ intra_UE\ cat\ M2_EC}$ defined in Clause 8.15.3.2.1.1. When L3 filtering is used or IDC autonomous denial is configured an additional delay can be expected.

If a cell which has been detectable at least for the time period $T_{identify_intra_UE\ cat\ M2_EC}$ defined in clause 8.15.3.2.1.1 becomes undetectable for a period ≤ 5 seconds and then the cell becomes detectable again and triggers an event, the event triggered measurement reporting delay shall be less than $T_{Measurement_Period_UE\ cat\ M2_EC,\ Intra}$ provided the timing to that cell has not changed more than ± 50 Ts and the L3 filter has not been used. When L3 filtering is used or IDC autonomous denial is configured, an additional delay can be expected.

8.15.3.2.1.2 E-UTRAN intra frequency measurements when DRX is used

When DRX is in use the UE shall be able to identify a new detectable FDD intra frequency cell within $T_{identify_intra_UE\ cat\ M2_EC}$ as shown in table 8.15.3.2.1.2-1 provided that additional conditions Table 8.15.32.12-1A is met.

When eDRX_CONN is in use the UE shall be able to identify a new detectable FDD intra frequency cell within $T_{identify_intra_UE\ cat\ M2_EC}$ as shown in table 8.15.3.2.1.2-1B.

**Table 8.15.3.2.1.2-1: Requirement to identify a newly detectable FDD intrafrequency cell**

| Gap pattern ID | DRX cycle length (s) | $T_{identify_intra_UE\ cat\ M2_EC}$ (s) (DRX cycles) |
|---|---|---|
| 0 | ≤0.64 | 320.8 * $K_{intra_M2}$ (Note 1) |
| | 0.64< DRX-cycle≤2.56 | Note 2(400 * $K_{intra_M2}$) |
| 1 | DRX-cycle ≤ 0.640 | 321.6 * $K_{intra_M2}$ (Note 1) |
| | 0.64< DRX-cycle≤2.56 | Note 2(400 * $K_{intra_M2}$) |
| Note 1: Number of DRX cycle depends upon the DRX cycle in use<br>Note 2: Time depends upon the DRX cycle in use | | |

**Table 8.15.3.2.1.2-1A: Conditions on SCH Ês/Iot to identify a newly detectable FDD intrafrequency cell**

| SCH Ês/Iot of already identified cell including serving cell: Q1 | Neighbouring cell SCH Ês/Iot: Q2 | Cell identification delay ($T_{identify_intra_UE\ cat\ M2_EC}$) |
|---|---|---|
| -15≤Q1<-6 | -15≤ Q2 < -6 | As defined in table 8.15.3.2.1.2-1 |
| -15≤Q1<-6 | Q2≥-6 | Requirements in 8.15.2 apply |
| Q1≥-6 | Q2≥-6 | Requirements in 8.15.2 apply |

**Table 8.15.3.2.1.2-1B: Requirement to identify a newly detectable FDD intrafrequency cell when eDRX_CONN is used**

| eDRX_CONN cycle length (s) | $T_{identify_intra_UE\ cat\ M2_EC}$ (s) (eDRX_CONN cycles) |
|---|---|
| 2.56<eDRX_CONN cycle≤10.24 | Note (400 * $K_{intra_M2}$) |
| NOTE: Time depends upon the eDRX_CONN cycle in use | |

A cell shall be considered detectable when

- RSRP related side conditions given in Sections 9.1.x.3 and 9.1.x.4 are fulfilled for a corresponding Band,
- RSRQ related side conditions given in Clause 9.1.x.1 are fulfilled for a corresponding Band,
- SCH_RP and SCH Ês/Iot according to Annex Table B.2.14-3 for a corresponding Band

In the RRC_CONNECTED state the measurement period for intra frequency measurements is $T_{measure_intra_UE\ cat\ M2_EC}$. When DRX is used, $T_{measure_intra_UE\ cat\ M2_EC}$ is as specified in table 8.15.3.2.1.2-2 provided that additional conditions table 8.15.3.2.1.2-3 is met. When eDRX_CONN is used, $T_{measure_intra_UE\ cat\ M2_EC}$ is as specified in table 8.15.3.2.1.2-4. The UE shall be capable of performing RSRP and RSRQ measurements for 6 identified-intra-frequency cells, and the UE physical layer shall be capable of reporting measurements to higher layers with the measurement period of $T_{measure_intra_UE\ cat\ M2_EC}$.

**Table 8.15.3.2.1.2-2: Requirement to measure FDD intrafrequency cells**

| Gap pattern ID | DRX cycle length (s) | $T_{measure_intra_UE\ cat\ M2_EC}$ (s) (DRX cycles) |
|---|---|---|
| 0 | ≤0.16 | 0.8 * $K_{intra_M2}$ (Note 1) |
| | 0.16<DRX-cycle≤2.56 | Note 2(5 * $K_{intra_M2}$) |
| 1 | ≤0.32 | 1.6 * $K_{intra_M2}$ (Note 1) |
| | 0.32<DRX-cycle≤2.56 | Note 2(5 * $K_{intra_M2}$) |
| Note 1: Number of DRX cycle depends upon the DRX cycle in use<br>Note 2: Time depends upon the DRX cycle in use | | |

**Table 8.15.3.2.1.2-3: Conditions on SCH Ês/Iot to measure FDD intrafrequency cell**

| SCH Ês/Iot of serving cell: Q1 | Target cell SCH Ês/Iot: Q2 | Measurement delay ($T_{measure_intra_UE\ cat\ M2_EC}$) |
|---|---|---|
| -15≤Q1<-6 | -15≤ Q2 < -6 | As defined in table 8.15.3.2.1.2-2 |
| -15≤Q1<-6 | Q2≥-6 | Requirements in 8.15.2 apply |
| Q1≥-6 | Q2≥-6 | Requirements in 8.15.2 apply |

**Table 8.15.3.2.1.2-4: Requirement to measure FDD intrafrequency cells when eDRX_CONN cycle is used**

| eDRX_CONN cycle length (s) | $T_{measure_intra_UE\ cat\ M2_EC}$ (s) (eDRX_CONN cycles) |
|---|---|
| 2.56<eDRX_CONN cycle≤10.24 | Note (5 * $K_{intra_M2}$) |
| NOTE: Time depends upon the eDRX_CONN cycle in use | |

The RSRP measurement accuracy for all measured cells shall be as specified in the sub-clauses 9.1.x.3 and 9.1.x.4.

The RSRQ measurement accuracy for all measured cells shall be as specified in the sub-clauses 9.1.x.5.

8.15.3.2.1.2.1 Measurement Reporting Requirements

8.15.3.2.1.2.1.1 Periodic Reporting

Reported RSRP and RSRQ measurement contained in periodically triggered measurement reports shall meet the requirements in sections 9.1.x.3 and 9.1.x.4.

8.15.3.2.1.2.1.2 Event-triggered Periodic Reporting

Reported RSRP and RSRQ measurement contained in event triggered periodic measurement reports shall meet the requirements in sections 9.1.x.3 and 9.1.x.4.

The first report in event triggered periodic measurement reporting shall meet the requirements specified in clause 8.15.3.2.1.2.1.3.

8.15.3.2.1.2.1.3 Event Triggered Reporting

Reported RSRP and RSRQ measurement contained in event triggered measurement reports shall meet the requirements in sections 9.1.x.3 and 9.1.x.4.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that that the measurement report is not delayed by other RRC signalling on the DCCH. This measurement reporting delay excludes a delay uncertainty resulted when inserting the measurement report to the TTI of the uplink DCCH. The delay uncertainty is: 2 × $TTI_{DCCH}$. This measurement reporting delay excludes a delay which caused by no UL resources for UE to send the measurement report.

The event triggered measurement reporting delay, measured without L3 filtering shall be less than T $i_{dentify_intra,\ UE\ cat\ M2_EC}$ defined in Clause 8.15.3.2.1.2 When L3 filtering is used or IDC autonomous denial is configured an additional delay can be expected.

If a cell which has been detectable at least for the time period $T_{identify_intra_UE\ cat\ M2_EC}$ defined in clause 8.15.3.2.1.2 becomes undetectable for a period ≤ 5 seconds and then the cell becomes detectable again and triggers an event, the event triggered measurement reporting delay shall be less than $T_{measure_intra_UE\ cat\ M2_EC}$ provided the timing to that cell has not changed more than ± 50 Ts and the L3 filter has not been used. When L3 filtering is used or IDC autonomous denial is configured, an additional delay can be expected.

8.15.3.2.2 E-UTRAN intra frequency measurements for HD-FDD

8.15.3.2.2.1 E-UTRAN intra frequency measurements when no DRX is used

The requirements in this section are applicable for the UE which supports half duplex operation on one or more supported frequency bands [2].

The requirements defined in clause 8.15.3.2.1.1 also apply for this section provided the following conditions are met:

- at least downlink subframe # 0 and downlink subframe # 5 per radio frame of an intra-frequency cell to be identified by the UE is available at the UE over $T_{identify_intra_UE\ cat\ M2_EC}$;
- at least two consecutive downlink subframe per radio frame of measured cell is available at the UE for RSRP measurements assuming measured cell is identified cell over $T_{measure_intra_UE\ cat\ M2_EC}$.
- RSRP related side conditions given in Sections 9.1.x.1 and 9.1.x2 are fulfilled for a corresponding Band,
- RSRQ related side conditions given in Clause 9.1.x.1 are fulfilled for a corresponding Band,
- SCH_RP and SCH Ês/Iot according to Annex Table B.2.14-4

8.15.3.2.2.2 E-UTRAN intra frequency measurements when DRX is used

The requirements in this section are applicable for the UE which supports half duplex operation on one or more supported frequency bands [2].

When DRX is in use the UE shall be able to identify a new detectable HD-FDD intra frequency cell within $T_{identify_intra_UE\ cat\ M2_EC}$ as shown in table 8.15.3.2.2.2-1 provided that additional conditions table 8.15.3.2.2.2-1A is met.

When eDRX_CONN is in use, the UE shall be able to identify a new detectable FDD intra frequency cell within $Ti_{dentify_intra_UE\ cat\ M2_EC}$ as shown in table 8.15.3.2.2.2-1B.

**Table 8.15.3.2.2.2-1: Requirement to identify a newly detectable HD-FDD intrafrequency cell**

| Gap pattern ID | DRX cycle length (s) | $T_{identify_intra_UE\ cat\ M2_EC}$ (s) (DRX cycles) |
|---|---|---|
| 0 | ≤0.64 | 320.8 * $K_{intra_M2}$ (Note1) |
| | 0.64<DRX-cycle≤2.56 | Note2(400 * $K_{intra_M2}$) |
| 1 | <0.64 | 321.6 * $K_{intra_M2}$ (Note1) |
| | 0.64≤DRX-cycle≤2.56 | Note2(400 * $K_{intra_M2}$) |
| Note 1: Number of DRX cycle depends upon the DRX cycle in use<br>Note 2: Time depends upon the DRX cycle in use | | |

**Table 8.15.3.2.2.2-1A: Conditions on SCH Ês/Iot to identify a newly detectable HD-FDD intrafrequency cell**

| SCH Ês/Iot of already identified cell including serving cell: Q1 | Neighbouring cell SCH Ês/Iot: Q2 | Cell identification delay ($T_{identify_intra_UE\ cat\ M2_EC}$) |
|---|---|---|
| -15≤Q1<-6 | -15≤ Q2 <-6 | As defined in table 8.15.3.2.2.2-1 |
| -15≤Q1<-6 | Q2≥-6 | Requirements in 8.15.2 apply |
| Q1≥-6 | Q2≥-6 | Requirements in 8.15.2 apply |

**Table 8.15.3.2.2.2-1B: Requirement to identify a newly detectable HD-FDD intrafrequency cell when eDRX_ CONN cycle is used**

| eDRX_CONN cycle length (s) | $T_{identify_intra_UE\ cat\ M2_EC}$ (s) (eDRX_CONN cycles) |
|---|---|
| 2.56<eDRX_CONN cycle≤10.24 | Note (400 * $K_{intra_M2}$) |
| NOTE: Time depends upon the eDRX_CONN cycle in use | |

A cell shall be considered detectable when

- RSRP related side conditions given in Sections 9.1.x.3 and 9.1.x.4 are fulfilled for a corresponding Band,
- RSRQ related side conditions given in Clause 9.1.x.1 are fulfilled for a corresponding Band,
- SCH_RP and SCH Ês/Iot according to Annex Table B.2.14-4 for a corresponding Band

In the RRC_CONNECTED state the measurement period for intra frequency measurements is $T_{measure_intra_UE\ cat\ M2_EC}$. When DRX is used, $T_{measure_intra_UE\ cat\ M2_EC}$ is as specified in table 8.15.3.2.2.2-2 provided that additional conditions Table 8.15.3.2.2.2-3 is met. When eDRX_CONN cycle is used, $T_{measure_intra\ UE\ cat\ M2_EC}$ is as specified in table 8.15.3.2.2.2-4. The UE shall be capable of performing RSRP and RSRQ measurements for 6 identified-intra-frequency cells, and the UE physical layer shall be capable of reporting measurements to higher layers with the measurement period of $T_{measure_intra_UE\ cat\ M2_EC}$.

**Table 8.15.3.2.2.2-2: Requirement to measure HD-FDD intrafrequency cells**

| Gap pattern ID | DRX cycle length (s) | $T_{measure_intra_UE\ cat\ M2_EC}$ (s) (DRX cycles) |
|---|---|---|
| 0 | <0.128 | 0.8 * $K_{intra}$ (Note 1) |
| | 0.128≤DRX-cycle≤0.16 | Note 2 (7 * $K_{intra_M2}$) |
| | 0.16<DRX-cycle≤2.56 | Note 2(5 * $K_{intra_M2}$) |
| 1 | ≤0.32 | 1.6 * $K_{intra}$ (Note1) |
| | 0.32<DRX-cycle≤2.56 | Note 2(5 * $K_{intra_M2}$) |
| Note 1: Number of DRX cycle depends upon the DRX cycle in use<br>Note 2: Time depends upon the DRX cycle in use | | |

**Table 8.15.3.2.2.2-3: Conditions on SCH Ês/Iot to measure HD-FDD intrafrequency cell**

| SCH Ês/Iot of already identified cell including serving cell: Q1 | Neighbouring cell SCH Ês/Iot: Q2 | Measurement delay ($T_{measure_intra_UE\ cat\ M2_EC}$) |
|---|---|---|
| -15≤Q1<-6 | -15≤ Q2 < -6 | As defined in table 8.15.3.2.2.2-2 |
| -15≤Q1<-6 | Q2≥-6 | Requirements in 8.15.2 apply |
| Q1≥-6 | Q2≥-6 | Requirements in 8.15.2 apply |

**Table 8.15.3.2.2.2-4: Requirement to measure HD-FDD intrafrequency cells when eDRX_CONN cycle is used**

| eDRX_CONN cycle length (s) | $T_{measure_intra_UE\ cat\ M2_EC}$ (s) (eDRX_CONN cycles) |
|---|---|
| 2.56<eDRX_CONN cycle≤10.24 | Note (5 * $K_{intra_M2}$) |
| NOTE: | Time depends upon the eDRX CONN cycle in use |

The RSRP measurement accuracy for all measured cells shall be as specified in the sub-clauses 9.1.x.3 and 9.1.x.4.

The RSRQ measurement accuracy for all measured cells shall be as specified in the sub-clauses 9. 1.x.5.

8.15.3.2.2.2.1 Measurement Reporting Requirements

8.15.3.2.2.2.1.1 Periodic Reporting

Reported RSRP and RSRQ measurement contained in periodically triggered measurement reports shall meet the requirements in sections 9.1.x.3 and 9.1.x.4.

8.15.3.2.2.2.1.2 Event-triggered Periodic Reporting

Reported RSRP and RSRQ measurement contained in event triggered periodic measurement reports shall meet the requirements in sections 9.1.x.3 and 9.1.x.4.

The first report in event triggered periodic measurement reporting shall meet the requirements specified in clause 8.15.3.2.2.2.1.3.

8.15.3.2.2.2.1.3 Event Triggered Reporting

Reported RSRP and RSRQ measurements contained in event triggered measurement reports shall meet the requirements in sections 9.1.x.3 and 9.1.x.4.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that that the measurement report is not delayed by other RRC signalling on the DCCH. This measurement reporting delay excludes a delay uncertainty resulted when inserting the measurement report to the TTI of the uplink DCCH. The delay uncertainty is: 2 x $TTI_{DCCH}$.This measurement reporting delay excludes a delay which caused by no UL resources for UE to send the measurement report.

The event triggered measurement reporting delay, measured without L3 filtering shall be less than $T_{identify_intra_UE\ cat\ M2_EC}$ defined in Clause 8.15.3.2.2.2 When L3 filtering is used or IDC autonomous denial is configured an additional delay can be expected.

If a cell which has been detectable at least for the time period $T_{identify_intra_UE\ cat\ M2_EC}$ defined in clause 8.15.3.2.2.2 becomes undetectable for a period ≤ 5 seconds and then the cell becomes detectable again and triggers an event, the event triggered measurement reporting delay shall be less than $T_{measure_intra_UE\ cat\ M2_EC}$ provided the timing to that cell has not changed more than ± 50 Ts and the L3 filter has not been used. When L3 filtering is used or IDC autonomous denial is configured, an additional delay can be expected.

8.15.3.2.3 E-UTRAN TDD intra frequency measurements

8.15.3.2.3.1 E-UTRAN intra frequency measurements when no DRX is used

When no DRX is in use the UE shall be able to identify and measure a new detectable TDD intra frequency cell according to requirements in Table 8.15.3.2.3.1-1provided that additional conditions Table 8.15.3.2.3.1-2 is met.

**Table 8.15.3.2.3.1-1: Requirement on cell identification delay and measurement delay for TDD intrafrequency cell**

| Gap pattern ID | Cell identification delay ($T_{identify_intra_UE\ cat\ M2_EC}$) | Measurement delay ($T_{measure_intra_UE\ cat\ M2_EC}$) |
|---|---|---|
| 0 | 320.8 * $K_{intra_M2}$ s | 800 * $K_{intra_M2}$ ms $^{Note1}$ [1600 * $K_{intra_M2}$ ms] $^{Note2}$ |
| 1 | 321.6 * $K_{intra_M2}$ s | 1600 * $K_{intra–M2}$ ms$^{Note1}$ [3200 * $K_{intra_M2}$ ms] $^{Note2}$ |
| Note 1: Under TDD UL/DL configuration other than 0.<br>Note 2: Under TDD UL/DL configuration 0. | | |

$K_{intra–M2}$ = 1 / X * 100 where X is signalled by the RRC parameter TBD [2].

**Table 8.15.3.2.3.1-2: Conditions on SCH Ês/lot for cell identification delay and measurement delay for TDD intrafrequency cell**

| SCH Es/lot of already identified cell including serving cell: Q1 | Neighbouring cell SCH Ês/lot: Q2 | Cell identification delay ($T_{identify–intra–UE\ cat\ M2_EC}$) | Measurement delay ($T_{measure–intra–UE\ cat\ M2_EC}$) |
|---|---|---|---|
| -15≤Q1 <-6 | -15≤ Q2 < -6 | As defined in table 8.15.3.2.3.1-1 | As defined in table 8.15.3.2.3.1-1 |
| -15≤Q1 <-6 | Q2≥-6 | Requirements in 8.15.2 apply | Requirements in 8.15.2 apply |
| Q1≥-6 | Q2≥-6 | Requirements in 8.15.2 apply | Requirements in 8.15.2 apply |

A cell shall be considered detectable when

- RSRP related side conditions given in Sections 9.1.x.3 and 9.1.x.4 are fulfilled for a corresponding Band,
- RSRQ related side conditions given in Clause 9.1.x.1 are fulfilled for a corresponding Band,
- SCH_RP and SCH Ês/lot according to Annex Table B.2.14-3 for a corresponding Band.

Identification of a cell shall include detection of the cell and additionally performing a single measurement with measurement period of $T_{measure_intra–UE\ cat\ M2_EC}$. If higher layer filtering is used, an additional cell identification delay can be expected.

In the RRC _CONNECTED state the measurement period for intra frequency measurements is according to Table 8.15.3.2.3.1-1. When measurement gaps are activated the UE shall be capable of performing measurements for at least 6 cells. If the UE has identified more than 6 cells, the UE shall perform measurements but the reporting rate of RSRP and RSRQ measurements of cells from UE physical layer to higher layers may be decreased.

The RSRP measurement accuracy for all measured cells shall be as specified in the sub-clauses 9.1.x.3 and 9.1.x.4.

The RSRQ measurement accuracy for all measured cells shall be as specified in the sub-clauses 9.1.x.5.

8.15.3.2.3.1.1 Measurement Reporting Requirements

8.15.3.2.3.1.1.1 Periodic Reporting

Reported RSRP and RSRQ measurement contained in periodically triggered measurement reports shall meet the requirements in sections 9.1.x.3 and 9.1.x.4.

8.15.3.2.3.1.1.2 Event-triggered Periodic Reporting

Reported RSRP and RSRQ measurement contained in event triggered periodic measurement reports shall meet the requirements in sections 9.1.x.3 and 9.1.x.4.

The first report in event triggered periodic measurement reporting shall meet the requirements specified in clause 8.15.3.2.3.1.1.3.

8.15.3.2.3.1.1.3 Event Triggered Reporting

Reported RSRP measurement contained in event triggered measurement reports shall meet the requirements in sections 9.1.x.3 and 9.1.x.4.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that that the measurement report is not delayed by other RRC signalling on the DCCH. This measurement reporting delay excludes a delay uncertainty resulted when inserting the measurement report to the TTI of the uplink DCCH. The delay uncertainty is: 2 x $TTI_{DCCH}$. This measurement reporting delay excludes a delay which caused by no UL resources for UE to send the measurement report.

The event triggered measurement reporting delay, measured without L3 filtering shall be less than $T_{identify\ intra_UE\ cat\ M2_EC}$ defined in Clause 8.15.3.2.3.1. When L3 filtering is used or IDC autonomous denial is configured an additional delay can be expected.

If a cell which has been detectable at least for the time period $T_{identify_intra–UE\ cat\ M2_EC}$ defined in clause 8.15.3.2.3.1 becomes undetectable for a period ≤ 5 seconds and then the cell becomes detectable again and triggers an event, the event triggered measurement reporting delay shall be less than $T_{Measurement\ _Period\ Intra_UE\ cat\ M2_EC}$ provided the timing to that cell has not changed more than ± 50 Ts and the L3 filter has not been used. When L3 filtering is used or IDC autonomous denial is configured, an additional delay can be expected.

8.15.3.2.3.2 E-UTRAN intra frequency measurements when DRX is used

When DRX is in use the UE shall be able to identify a new detectable TDD intra frequency cell within $T_{identify–intra_UE\ cat\ M2\ _EC}$ as shown in table 8.15.3.2.3.2-1 provided that additional conditions table 8.15.3.2.3.2-1A is met.

When eDRX_CONN is in use the UE shall be able to identify a new detectable TDD intra frequency cell within $T_{identify_intra–UE\ cat\ M2\ _EC}$ as shown in table 8.15.3.2.3.2-1B.

**Table 8.15.3.2.3.2-1: Requirement to identify a newly detectable TDD intrafrequency cell**

| Gap pattern ID | DRX cycle length (s) | $T_{identify_intra_UE\ cat\ M2_EC}$ (s) (DRXcycles) |
|---|---|---|
| 0 | DRX-cycle ≤ 0.64 | 320.8 * $K_{intra_M2}$ (Note 1) |
| | 0.64<DRX-cycle≤2.56 | Note 2(400 * $K_{intra_M2}$) |
| 1 | DRX-cycle ≤ 0.64 | 321.6 * $K_{intra_M2}$ (Note 1) |
| | 0.64<DRX-cycle≤2.56 | Note 2(400 * $K_{intra_M2}$) |
| Note 1: Number of DRX cycle depends upon the DRX cycle in use<br>Note 2: Time depends upon the DRX cycle in use | | |

**Table 8.15.3.2.3.2-1A: Conditions on SCH Ês/Iot to identify a newly detectable TDD intrafrequency cell**

| SCH Es/Iot of already identified cell including serving cell: Q1 | Neighbouring cell SCH Ês/Iot: Q2 | Cell identification delay ($T_{identify_intra_UE\ cat\ M2_EC}$) |
|---|---|---|
| -15≤Q1 <-6 | -15≤ Q2 <-6 | As defined in table 8.15.3.2.3.2-1 |
| -15≤Q1 <-6 | Q2≥-6 | Requirements in 8.15.2 apply |
| Q1≥-6 | Q2≥-6 | Requirements in 8.15.2 apply |

**Table 8.15.3.2.3.2-1B: Requirement to identify a newly detectable TDD intrafrequency cell when eDRX_CONN cycle is used**

| eDRX_CONN cycle length (s) | $T_{identify_intra_UE\ cat\ M2_EC}$ (s) (eDRX_CONN cycles) |
|---|---|
| 2.56<eDRX CONN cycle≤10.24 | Note (400 * $K_{intra_M2}$) |
| NOTE: Time depends upon the eDRX CONN cycle in use | |

A cell shall be considered detectable when

- RSRP related side conditions given in Clause 9.1.x.3 and 9.1.x.4 are fulfilled for a corresponding Band,
- RSRQ related side conditions given in Clause 9.1.x.1 are fulfilled for a corresponding Band,
- SCH_RP and SCH Ês/Iot according to Annex Table B.2.14-3 for a corresponding Band

In the RRC_CONNECTED state the measurement period for intra frequency measurements is $T_{measure_intra_UE\ cat\ M2_EC}$. When DRX is used, $T_{measure_intra_UE\ cat\ M2_EC}$ is as shown in table 8.15.3.2.3.2-2 provided that additional conditions Table 8.15.3.2.3.2-3 is met. When eDRX_CONN is used, $T_{measure_intra_UE\ cat\ M2_EC}$ is as shown in table 8.15.3.2.3.2-4. The UE shall be capable of performing RSRP and RSRQ measurement for 6 identified intrafrequency cells and the UE physical layer shall be capable of reporting measurements to higher layers with the measurement period of $T_{measure_intra_UE\ cat\ M2_EC}$.

**Table 8.15.3.2.3.2-2: Requirement to measure TDD intra frequency cells**

| TDD Uplinkdownlink configuration | Gap pattern ID | DRX cycle length (s) | $T_{measure_intra_UE\ cat\ M2_EC}$ (s) (DRX cycles) |
|---|---|---|---|
| Other than 0 | 0 | ≤0.16 | 0.8 * $K_{intra_M2}$ (Note 1) |
| | | 0.16<DRX-cycle≤2.56 | Note 2(5 * $K_{intra_M2}$) |
| | 1 | ≤0.32 | 1.6 * $K_{intra_M2\ c}$ (Note 1) |
| | | 0.32<DRX-cycle≤2.56 | Note 2(5 * $K_{intra_M2}$) |
| 0 | 0 | ≤0.32 | [1 .6] * $Ki_{ntra_M2\ cat}$ (Note 1) |
| | | 0.32<DRX-cycle≤2.56 | Note 2(5 * $K_{intra_M2}$) |
| | 1 | ≤0.64 | [3.2] * $K_{intra_M2}$ (Note 1) |
| | | 0.64<DRX-cycle≤2.56 | Note 2(5 * $K_{intra_M2}$) |
| Note 1: Number of DRX cycle depends upon the DRX cycle in use.<br>Note 2: Time depends upon the DRX cycle in use. | | | |

**Table 8.15.3.2.3.2-3: Conditions on SCH Ês/Iot to measure TDD intrafrequency cell**

| SCH Es/Iot of already identified cell including serving cell: Q1 | Neighbouring cell SCH Ês/Iot: Q2 | Measurement delay ($T_{measure_intra_UE\ cat\ M2_EC}$) |
|---|---|---|
| -15≤Q1 <-6 | -15≤ Q2 < -6 | As defined in table 8.15.3.2.3.2-2 |
| -15≤Q1 <-6 | Q2≥-6 | Requirements in 8.15.2 apply |
| Q1≥-6 | Q2≥-6 | Requirements in 8.15.2 apply |

**Table 8.15.3.2.3.2-4: Requirement to measure TDD intra frequency cells when eDRX_CONN cycle is used**

| eDRX_CONN cycle length (s) | $T_{measure_intra_UE\ cat\ M2_EC}$ (s) CONN cycles) |
|---|---|
| 2.56<eDRX CONN cycle≤10.24 | Note (5 * $K_{intra_M2}$) |
| NOTE: Time depends upon the eDRX CONN cycle in use. | |

The RSRP measurement accuracy for all measured cells shall be as specified in the sub-clauses 9.1.x.3 and 9.1.x.4.

The RSRQ measurement accuracy for all measured cells shall be as specified in the sub-clauses 9.1.x.5.

8.15.3.2.3.2.1 Measurement Reporting Requirements

8.15.3.2.3.2.1.1 Periodic Reporting

Reported RSRP and RSRQ measurement contained in periodically triggered measurement reports shall meet the requirements in sections 9.1.x.3 and 9.1.x.4.

8.15.3.2.3.2.1.2 Event-triggered Periodic Reporting

Reported RSRP and RSRQ measurement contained in event triggered periodic measurement reports shall meet the requirements in sections 9.1.x.3 and 9.1.x.4.

The first report in event triggered periodic measurement reporting shall meet the requirements specified in clause 8.15.3.2.3.2.1.3.

8.15.3.2.3.2.1.3 Event Triggered Reporting

Reported RSRP and RSRQ measurement contained in event triggered measurement reports shall meet the requirements in sections 9.1.x.3 and 9.1.x.4.

The UE shall not send any event triggered measurement reports, as long as no reporting criteria are fulfilled.

The measurement reporting delay is defined as the time between an event that will trigger a measurement report and the point when the UE starts to transmit the measurement report over the air interface. This requirement assumes that that the measurement report is not delayed by other RRC signalling on the DCCH. This measurement reporting delay excludes a delay uncertainty resulted when inserting the measurement report to the TTI of the uplink DCCH. The delay uncertainty is: 2 x $TTI_{DCCH}$.This measurement reporting delay excludes a delay which caused by no UL resources for UE to send the measurement report.

The event triggered measurement reporting delay, measured without L3 filtering shall be less than $T_{identify_intra\ _UE\ cat\ M2_EC}$ defined in Clause 8.15.3.2.3.2. When L3 filtering is used or IDC autonomous denial is configured an additional delay can be expected.

If a cell which has been detectable at least for the time period $T_{identify_intra_UE\ cat\ M2_EC}$ defined in clause 8.15.3.2.3.2 becomes undetectable for a period ≤ 5 seconds and then the cell becomes detectable again and triggers an event, the event triggered measurement reporting delay shall be less than $T_{measure_intra_UE\ cat\ M2_EC}$ provided the timing to that cell has not changed more than ± 50 Ts and the L3 filter has not been used. When L3 filtering is used or IDC autonomous denial is configured, an additional delay can be expected.

ADDITIONAL INFORMATION (Inventors' proposals to 3GPP)

In Rel-13 under Rel-13 WI "New WI proposal on Further Enhanced MTC" the support for inter-frequency operation is introduced. Inter-frequency measurements require measurement gaps similar to intrafrequency measurements of eMTC. Therefore, the existing measurement gaps are shared between intrafrequency and inter-frequency operation.

In R4-1702136, "LS on measurement gap sharing for feMTC intra- and inter-frequency measurement", RAN4 discussed and agreed on a gap sharing method at last meeting, and an LS was sent to RAN2 to develop signaling support for it. The CONNECTED mode CRs were also agreed assuming this gap sharing method in the following:

- R4-1702139, "Introducing intra-frequency measurement requirements for UE category M2 in enhanced coverage/CEModeB", Ericsson

- R4-1702346, "Introducing intra-frequency measurement requirements for UE category M2 in normal coverage/CEModeA", Ericsson
- R4-1702347, "Introducing inter-frequency measurement requirements for UE category M2 in normal coverage/CEModeA", Ericsson
- R4-1702348, "Introducing inter-frequency measurement requirements for UE category M2 in enhanced coverage/CEModeB", Ericsson

However, there are some values with TBDs that are discussed in this contribution.

*Gap sharing agreement*

As per the agreement, the intra-frequency and inter-frequency requirements are derived by scaling the current requirement by a factor which $K_{Intra_M2}$ and $K_{Inter_M2}$ respectively as follows:

$$K_{Intra_M2} = \frac{100}{X} \qquad (1)$$

and

$$K_{Inter_M2} = \frac{N_{freq} * 100}{(100 - X)} \qquad (2)$$

X corresponds to the percentage of the gaps assumed for intra-frequency measurements, and the remaining percentage of gaps (1-X) are assumed for the inter-frequency measurements. It was further agreed that X can have 4 different values which will be defined TS 36.133.

Moreover, it was agreed that the category M2 UE shall be capable of monitoring at least:

- FDD E-UTRA inter-frequency carriers
- 2 TDD E-UTRA inter-frequency carriers

*Discussion on values*

Our proposal is that the intra-frequency measurement should be allowed at least 50% of the measurement gaps, i.e. X=50 while the remaining gaps can be shared between the inter-frequency carriers. The main motivation for this proposal is that it is obvious that the intra-frequency measurements (e.g. the serving cell measurements) are more important than the measurements of another frequency cells since they are used for various RRM procedures such as power control, etc. This way we want to ensure that the intra-frequency, more specifically, the serving cell performance is not severally degraded due to gap sharing. The remaining gaps can be shared equally or unequally among the inter-frequency carriers depending on UE implementation.

One example is illustrated in Figure 11 where X=50% and the remaining gaps are shared equally among two different inter-frequency carriers.

The other three values of X can be defined as: 60%, 70% and 80%. This distribution of gaps will enable the network to allocate the gaps differently depending on the operational scenario while it will guarantee some minimum performance of the intra-frequency (serving cell) measurements. For example, in scenarios where the inter-frequency cells are in deep enhanced coverage with low signal strength, the network can configure X=80 since it is unlikely to perform a handover to that cell. Similarly, when there are neighbor cells with equal or even better signal strength, the network can configure X=50 to ensure that the UE can monitor this cell so that the UE can perform handover in right time and also help the network to save resource by reselecting to better coverage cell.

In brief, a proposal of X = [50, 60, 70 and 80] % will ensure some minimum performance of intra-frequency operation while it gives a degree of freedom to configure the gaps different depending on the operational inter-frequency scenario.

Based on the discussion above, we make the following proposal:

- Proposal 1: The value of X in the agreed measurement gap sharing method between intrafrequency and inter-frequency can have following values: [50, 60, 70 and 80] %.

*Gap sharing with RSTD measurement*

RSTD measurement requirements are being developed to support OTDOA positioning for Cat-M2 UEs. As disclosed in 4-1700414, LSin on Rel-14 FeMTC OTDOA enhancements, Feb. 2017, RSTD measurements are performed on PRS signals which can be transmitted over multiple PRS bandwidth which include: {1.4, 3, 5, 10, 15, 20} MHz [6]. Whether the UE needs gaps for measuring on the PRS depends on PRS bandwidth. There are two cases as described below:

1. PRS bandwidth = cell bandwidth

2. PRS bandwidth < cell bandwidth

Figure 12 illustrates Case 1 where PRS BW is the same as cell BW. Figure 13 illustrates Case 2 where PRS BW is less than cell BW.

In case 1, UE does not need any gaps to measure on PRS since it is transmitted over the whole cell bandwidth, see Figure 12. Also, when the UE is not configured with any RSTD measurement there is no need for such gaps.

However, UE needs gap in case 2 where the PRS is transmitted only in a certain portion of bandwidth Consequently, the UE needs to retune to that part of bandwidth in order to measure PRS. In addition to the existing gaps that are shared between intra-frequency and inter-frequency RRM measurements, the same gaps need to be shared also for the intra-frequency RSTD measurement. Hence, a further relaxation might be needed and we propose to scale the existing requirements using a scaling factor as follows:

$$K_{RSTD_M2} = 1/(1 - T_{Gap} / T_{PRS})$$

where $T_{Gap}$ is given by the MGRP in Table 8.1.2.1-1 and $T_{PRS}$ is the PRS periodicity. This scaling is possible because $T_{PRS}>T_{Gap}$.

FIGURE 14 illustrates the sharing of existing measurement gaps between RSTD measurement, intra-frequency and inter-frequency RRM measurement. The intra-frequency and inter-frequency RRM requirements can be scaled as follows:

For intra-frequency requirements

| Gap pattern ID | Cell identification delay ($T_{identify\ intra\ UE\ cat\ M2}$) | Measurement delay ($T_{measure\ intra\ UE\ cat\ M2}$) |
|---|---|---|
| 0 | 1.44 * $K_{intra_M2_NC}$* $K_{RSTD_M2}$ seconds | 480 * $K_{intra_M2_NC}$ * $K_{RSTD_M2}$ ms |
| 1 | 2.88 * $K_{intra_M2_NC}$ * $K_{RSTD_M2}$ seconds | 960 * $K_{intra_M2_NC}$ * $K_{RSTD_M2}$ ms |

For inter-frequency requirements

| Gap pattern ID | Cell identification delay ($T_{identify_inter_UE\ cat\ M2_NC}$) | Measurement delay ($T_{measure_inter_UE\ cat\ M2_NC_NC}$) |
|---|---|---|
| 0 | 1.44 * $K_{inter_M2}$ * $K_{RSTD_M2}$ seconds | 480 * $K_{inter_M2}$ * $K_{RSTD_M2}$ ms |
| 1 | 2.88 * $K_{inter_M2}$ * $K_{RSTD_M2}$ seconds | 960 * $K_{inter_M2}$ * $K_{RSTD_M2}$ ms |

- Proposal 2: The existing measurement gaps are shared between the intra-frequency, inter-frequency and RSTD measurement, and only the intra or inter-frequency requirements are relaxed by scaling factor $K_{RSTD_M2}$ while the RSTD measurement requirements remain the same. $K_{RSTD_M2}$ is defined as $K_{RSTD_M2} = 1/(1 - T_{Gap} / T_{PRS})$

- Proposal 3: No relaxation on intra-frequency and inter-frequency measurements are needed due to RSTD when the UE RF bandwidth and the LTE system bandwidth are the same.

*Summary*

RAN4 has discussed and agreed on a gap sharing method to share the gaps between intra-frequency and inter-frequency measurements. The method contains a parameter X which can have four different values and for now these are TBD. In this contribution, provide our proposal on the values. X should be selected such that it can guarantee at least some minimum intra-frequency (e.g. serving cell) performance while it can be provide some freedom to the network to configure the gaps differently depending on the inter-frequency operational scenario.

## Claims

**1.** A method (600) performed by a wireless device (110), comprising:

receiving (602), from a first radio network node (115a) via a first wireless interface between the first radio network node and the wireless device (110), first configuration information related to a first type of discovery reference signals, the first radio network node communicating with the wireless device (110);
receiving (604), from a second radio network node (115b) via a second wireless interface between the second radio network node and the wireless device (110), second configuration information related to a second type of discovery reference signals, the second radio network node being different than the first radio network node and communicating with the wireless device (110);
determining (606) a cell identification delay or measurement delay on the basis of the first configuration information and second configuration information, wherein the cell identification delay or measurement delay is variable;
performing (608) at least one first measurement on a discovery reference signal of the first type;
performing (610) at least one second measurement on a discovery reference signal of a second type, wherein the at least one second measurement comprises identification of a cell performed within a duration corresponding to the cell identification delay or a measurement performed within a duration corresponding to the measurement delay; and
performing (612) one or more operational tasks based on the at least one first measurement and the at least one second measurement.

**2.** The method of claim 1, wherein the one or more operational tasks include at least one of:

reporting results of the at least one first measurement or the at least one second measurements to the first radio network node or the second radio network node in accordance with the cell identification delay or measurement delay;
determining positioning of the wireless device;
performing a cell change;
performing radio link monitoring;
optimizing a receiver configuration; and
logging the results.

**3.** The method of any one of claims 1 to 2, wherein determining the cell identification delay or measurement delay comprises increasing a default cell identification delay or a default measurement delay when a subframe configuration period of the discovery reference signal of the first type exceeds a threshold value.

**4.** The method of claim 3, wherein increasing the default cell identification delay comprises increasing the default cell identification delay for performing the measurements on the discovery reference signal of the first type when the measurements on the discovery reference signal of the first type are of a higher priority than the measurements on the discovery reference signal of the second type.

**5.** The method of any one of claims 1 to 4, wherein the measurements on the discovery reference signal of the second type are performed in measurement gaps associated with the first configuration information.

**6.** The method of claim 5, further comprising:
transmitting, to the first radio network node, an indication of an ability to perform the measurements on the discovery reference signal of the first type in the measurement gaps associated with the second configuration information.

**7.** The method of claims 5 to 6, wherein:
in response to determining that a bandwidth associated with the discovery reference signals of the first type is less than a bandwidth of at least one cell on a serving carrier, the measurements on the discovery reference signal of the first type are performed in the measurement gaps associated with the second configuration information.

8. The method of claim 7, further comprising increasing a default cell identification delay or a default measurement delay by a parameter which is a function of a measurement gap configuration and a configuration of the first type of discovery reference signal.

9. The method of claim 8, wherein the measurement gap configuration and the configuration of the first type of discovery reference signal comprises a measurement gap periodicity and a periodicity of the first type of discovery reference signal.

10. The method of any one of claims 7 to 9, wherein:
in response to determining that a bandwidth associated with the discovery reference signal of the first type is equal to a bandwidth of a serving carrier, the at least one first measurement on the discovery reference signal of the first type are performed without using measurement gaps.

11. The method of any one of claims 1 to 5, wherein:
in response to determining that a bandwidth associated with the discovery reference signal of the first type is equal to a bandwidth of all cells on a serving carrier, the at least one measurement on the discovery reference signal of the first type are performed within a bandwidth used by the wireless device for receiving data or control signals from a first cell.

12. The method of any one of claims 1 to 11, wherein the discovery reference signal of the first type is a positioning reference signal.

13. The method of any one of claims 1 to 12, wherein the cell identification delay or measurement delay is related to the first type of discovery reference signal.

14. A wireless device (110) comprising:
processing circuitry (220) configured to perform a method according to any of claims 1 to 13.

**Patentansprüche**

1. Verfahren (600), das von einer drahtlosen Vorrichtung (110) durchgeführt wird und umfasst:

   Empfangen (602) von ersten Konfigurationsinformationen in Bezug auf einen ersten Typ von Erkennungsreferenzsignalen von einem ersten Funknetzwerkknoten (115a) über eine erste drahtlose Schnittstelle zwischen dem ersten Funknetzwerkknoten und der drahtlosen Vorrichtung (110), wobei der erste Funknetzwerkknoten mit der drahtlosen Vorrichtung (110) kommuniziert;
   Empfangen (604) von zweiten Konfigurationsinformationen in Bezug auf einen zweiten Typ von Erkennungsreferenzsignalen von einem zweiten Funknetzwerkknoten (115b) über eine zweite drahtlose Schnittstelle zwischen dem zweiten Funknetzwerkknoten und der drahtlosen Vorrichtung (110), wobei der zweite Funknetzwerkknoten vom ersten Funknetzwerkknoten verschieden ist und mit der drahtlosen Vorrichtung (110) kommuniziert;
   Bestimmen (606) einer Zellidentifikationsverzögerung oder einer Messverzögerung auf der Basis der ersten Konfigurationsinformationen und der zweiten Konfigurationsinformationen, wobei die Zellidentifikationsverzögerung und die Messverzögerung variabel sind;
   Durchführen (608) mindestens einer ersten Messung an einem Erkennungsreferenzsignal des ersten Typs;
   Durchführen (610) mindestens einer zweiten Messung an einem Erkennungsreferenzsignal eines zweiten Typs, wobei die mindestens eine zweite Messung Identifikation einer Zelle, die innerhalb einer Dauer durchgeführt wird, die der Zellidentifikationsverzögerung entspricht, oder eine Messung umfasst, die innerhalb einer Dauer durchgeführt wird, die der Messverzögerung entspricht; und
   Durchführen (612) einer oder mehrerer operativer Aufgaben basierend auf der mindestens einen ersten Messung und der mindestens einen zweiten Messung.

2. Verfahren nach Anspruch 1, wobei die eine oder die mehreren operativen Aufgaben mindestens eines von Folgendem umfassen:

Melden von Ergebnissen der mindestens einen ersten Messung oder der mindestens einen zweiten Messung an den ersten Funknetzwerkknoten oder den zweiten Funknetzwerkknoten gemäß der Zellidentifikationsverzögerung oder der Messverzögerung;
Bestimmen von Positionierung der drahtlosen Vorrichtung;
Durchführen eines Zellwechsels;
Durchführen von Funkverbindungsüberwachung;
Optimieren einer Empfängerkonfiguration; und
Protokollieren der Ergebnisse.

**3.** Verfahren nach einem der Ansprüche 1 bis 2, wobei das Bestimmen der Zellidentifikationsverzögerung oder der Messverzögerung ein Erhöhen einer standardmäßigen Zellidentifikationsverzögerung oder einer standardmäßigen Messverzögerung umfasst, wenn ein Unterrahmenkonfigurationszeitraum des Erkennungsreferenzsignals des ersten Typs einen Schwellenwert überschreitet.

**4.** Verfahren nach Anspruch 3, wobei das Erhöhen der standardmäßigen Zellidentifikationsverzögerung ein Erhöhen der standardmäßigen Zellidentifikationsverzögerung zum Durchführen der Messungen am Erkennungsreferenzsignal des ersten Typs umfasst, wenn die Messungen am Erkennungsreferenzsignal des ersten Typs eine höhere Priorität als die Messungen am Erkennungsreferenzsignal des zweiten Typs aufweisen.

**5.** Verfahren nach einem der Ansprüche 1 bis 4, wobei die Messungen am Erkennungsreferenzsignal des zweiten Typs in Messlücken durchgeführt werden, die mit den ersten Konfigurationsinformationen assoziiert sind.

**6.** Verfahren nach Anspruch 5, ferner umfassend:
Senden einer Anzeige einer Fähigkeit zum Durchführen der Messungen am Erkennungsreferenzsignal des ersten Typs in den Messlücken, die mit den zweiten Konfigurationsinformationen assoziiert sind, an den ersten Funknetzwerkknoten.

**7.** Verfahren nach Anspruch 5 bis 6, wobei:
in Reaktion auf ein Bestimmen, dass eine Bandbreite, die mit den Erkennungsreferenzsignalen des ersten Typs assoziiert ist, kleiner als eine Bandbreite mindestens einer Zelle auf einem bedienenden Träger ist, die Messungen am Erkennungsreferenzsignal des ersten Typs in den Messlücken durchgeführt werden, die mit den zweiten Konfigurationsinformationen assoziiert sind.

**8.** Verfahren nach Anspruch 7, ferner umfassend ein Erhöhen einer standardmäßigen Zellidentifikationsverzögerung oder einer standardmäßigen Messverzögerung um einen Parameter, der eine Funktion einer Messlückenkonfiguration und einer Konfiguration des ersten Typs von Erkennungsreferenzsignal ist.

**9.** Verfahren nach Anspruch 8, wobei die Messlückenkonfiguration und die Konfiguration des ersten Typs von Erkennungsreferenzsignal eine Messlückenperiodizität und eine Periodizität des ersten Typs von Erkennungsreferenzsignal umfassen.

**10.** Verfahren nach einem der Ansprüche 7 bis 9, wobei:
in Reaktion auf ein Bestimmen, dass eine Bandbreite, die mit dem Erkennungsreferenzsignal des ersten Typs assoziiert ist, gleich einer Bandbreite eines bedienenden Trägers ist, die mindestens eine erste Messung am Erkennungsreferenzsignal des ersten Typs ohne Verwendung von Messlücken durchgeführt wird.

**11.** Verfahren nach einem der Ansprüche 1 bis 5, wobei:
in Reaktion auf ein Bestimmen, dass eine Bandbreite, die mit dem Erkennungsreferenzsignal des ersten Typs assoziiert ist, gleich einer Bandbreite aller Zellen auf einem bedienenden Trägers ist, die mindestens eine erste Messung am Erkennungsreferenzsignal des ersten Typs innerhalb einer Bandbreite durchgeführt wird, die von der drahtlosen Vorrichtung zum Empfangen von Daten oder Steuersignalen von einer ersten Zelle verwendet wird.

**12.** Verfahren nach einem der Ansprüche 1 bis 11, wobei das Erkennungsreferenzsignal des ersten Typs ein Positionierungsreferenzsignal ist.

**13.** Verfahren nach einem der Ansprüche 1 bis 12, wobei die Zellidentifikationsverzögerung oder die Messverzögerung mit dem ersten Typ von Erkennungsreferenzsignal in Beziehung steht.

**14.** Drahtlose Vorrichtung (110), umfassend:
Verarbeitungsschaltungsanordnung (220), die zum Durchführen des Verfahrens nach einem der Ansprüche 1 bis 13 konfiguriert ist.

## Revendications

**1.** Procédé (600) réalisé par un dispositif sans fil (110), comprenant :

la réception (602), depuis un premier nœud de réseau radio (115a) via une première interface sans fil entre le premier nœud de réseau radio et le dispositif sans fil (110), de premières informations de configuration relatives à un premier type de signaux de référence de découverte, le premier nœud de réseau radio communiquant avec le dispositif sans fil (110) ;
la réception (604), depuis un deuxième nœud de réseau radio (115b) via une deuxième interface sans fil entre le deuxième nœud de réseau radio et le dispositif sans fil (110), de deuxièmes informations de configuration relatives à un deuxième type de signaux de référence de découverte, le deuxième nœud de réseau radio étant différent du premier nœud de réseau radio et communiquant avec le dispositif sans fil (110) ;
la détermination (606) d'un retard d'identification de cellule ou d'un retard de mesure sur la base des premières informations de configuration et des deuxièmes informations de configuration, dans lequel le retard d'identification de cellule ou le retard de mesure est variable ;
la réalisation (608) d'au moins une première mesure sur un signal de référence de découverte du premier type ;
la réalisation (610) d'au moins une deuxième mesure sur un signal de référence de découverte d'un deuxième type, dans lequel l'au moins une deuxième mesure comprend une identification d'une cellule réalisée au cours d'une durée correspondant au retard d'identification de cellule ou une mesure réalisée au cours d'une durée correspondant au retard de mesure ; et
la réalisation (612) d'une ou plusieurs tâches opérationnelles sur la base de l'au moins une première mesure et l'au moins une deuxième mesure.

**2.** Procédé selon la revendication 1, dans lequel les une ou plusieurs tâches opérationnelles incluent au moins l'un parmi :

le rapport de résultats de l'au moins une première mesure ou de l'au moins une deuxième mesure au premier nœud de réseau radio ou au deuxième nœud de réseau radio en fonction du retard d'identification de cellule ou du retard de mesure ;
la détermination d'un positionnement du dispositif sans fil ;
la réalisation d'un changement de cellule ;
la réalisation d'une surveillance de liaison radio ;
l'optimisation d'une configuration de récepteur ; et
l'enregistrement des résultats.

**3.** Procédé selon la revendication 1 ou 2, dans lequel la détermination du retard d'identification de cellule ou du retard de mesure comprend l'augmentation d'un retard d'identification de cellule par défaut ou d'un retard de mesure par défaut lorsqu'une période de configuration de sous-trame du signal de référence de découverte du premier type dépasse une valeur de seuil.

**4.** Procédé selon la revendication 3, dans lequel l'augmentation du retard d'identification de cellule par défaut comprend l'augmentation du retard d'identification de cellule par défaut pour réaliser les mesures sur le signal de référence de découverte du premier type lorsque les mesures sur le signal de référence de découverte du premier type sont d'une priorité supérieure aux mesures sur le signal de référence de découverte du deuxième type.

**5.** Procédé selon l'une quelconque des revendications 1 à 4, dans lequel les mesures sur le signal de référence de découverte du deuxième type sont réalisées dans des intervalles de mesure associés aux premières informations de configuration.

**6.** Procédé selon la revendication 5, comprenant en outre :
la transmission, au premier nœud de réseau radio, d'une indication d'une aptitude à réaliser les mesures sur le signal de référence de découverte du premier type dans les intervalles de mesure associés aux deuxièmes informations de configuration.

**7.** Procédé selon la revendication 5 ou 6, dans lequel :
en réponse à la détermination qu'une largeur de bande associée aux signaux de référence de découverte du premier type est inférieure à une largeur de bande d'au moins une cellule sur une porteuse de desserte, les mesures sur le signal de référence de découverte du premier type sont réalisées dans les intervalles de mesure associés aux deuxièmes informations de configuration.

**8.** Procédé selon la revendication 7, comprenant en outre l'augmentation d'un retard d'identification de cellule par défaut ou d'un retard de mesure par défaut par un paramètre qui est une fonction d'une configuration d'intervalle de mesure et d'une configuration du premier type du signal de référence de découverte.

**9.** Procédé selon la revendication 8, dans lequel la configuration d'intervalle de mesure et la configuration du premier type du signal de référence de découverte comprennent une périodicité d'intervalle de mesure et une périodicité du premier type du signal de référence de découverte.

**10.** Procédé selon l'une quelconque des revendications 7 à 9, dans lequel :
en réponse à la détermination qu'une largeur de bande associée au signal de référence de découverte du premier type est égale à une largeur de bande d'une porteuse de desserte, l'au moins une première mesure sur le signal de référence de découverte du premier type est réalisée sans utiliser d'intervalles de mesure.

**11.** Procédé selon l'une quelconque des revendications 1 à 5, dans lequel :
en réponse à la détermination qu'une largeur de bande associée au signal de référence de découverte du premier type est égale à une largeur de bande de toutes les cellules sur une porteuse de desserte, l'au moins une mesure sur le signal de référence de découverte du premier type est réalisée à l'intérieur d'une largeur de bande utilisée par le dispositif sans fil pour recevoir des signaux de données ou de commande depuis une première cellule.

**12.** Procédé selon l'une quelconque des revendications 1 à 11, dans lequel le signal de référence de découverte du premier type est un signal de référence de positionnement

**13.** Procédé selon l'une quelconque des revendications 1 à 12, dans lequel le retard d'identification de cellule ou le retard de mesure est relatif au premier type de signal de référence de découverte.

**14.** Dispositif sans fil (110) comprenant ;
une circuiterie de traitement (220) configurée pour réaliser un procédé selon l'une quelconque des revendications 1 à 13.

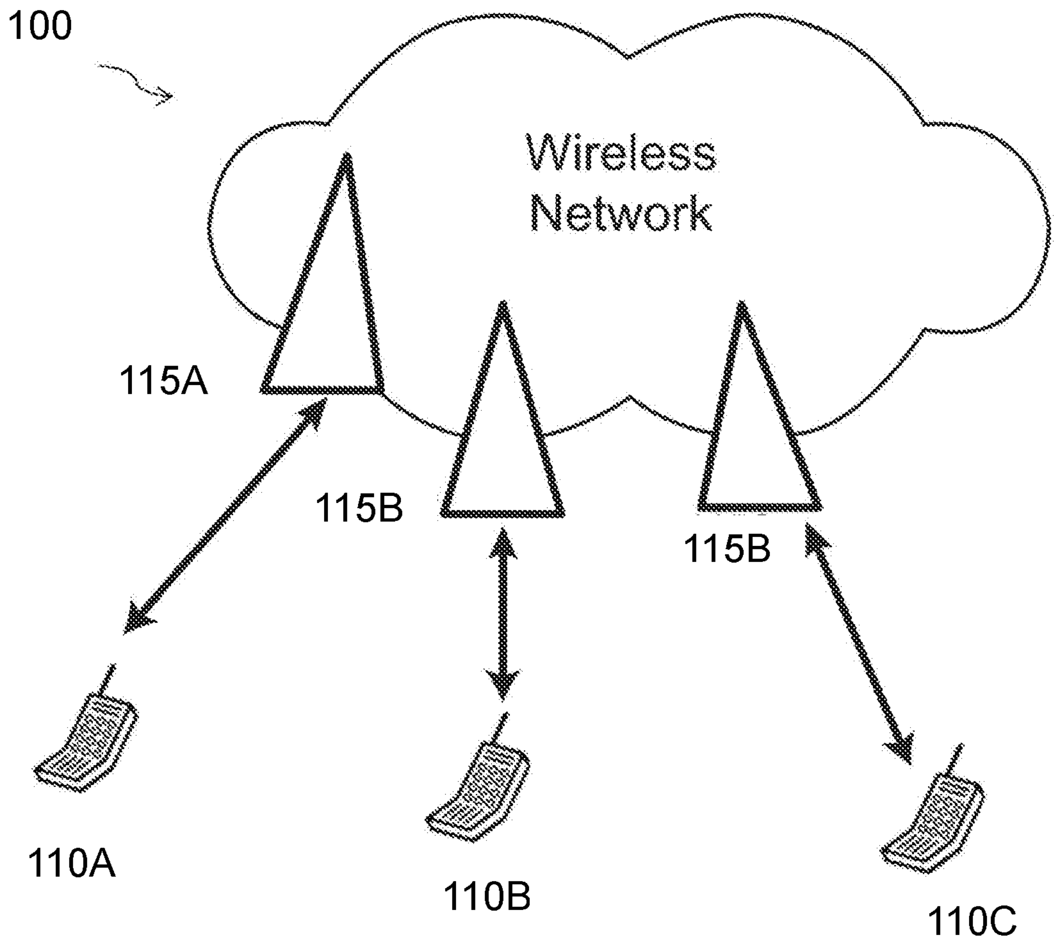


FIGURE 1

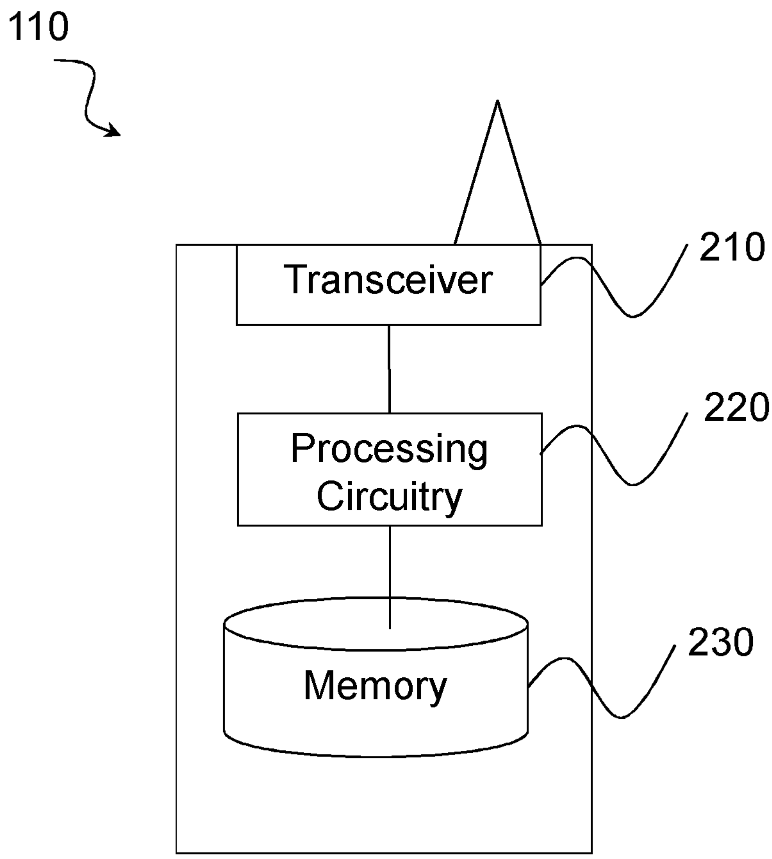


FIGURE 2

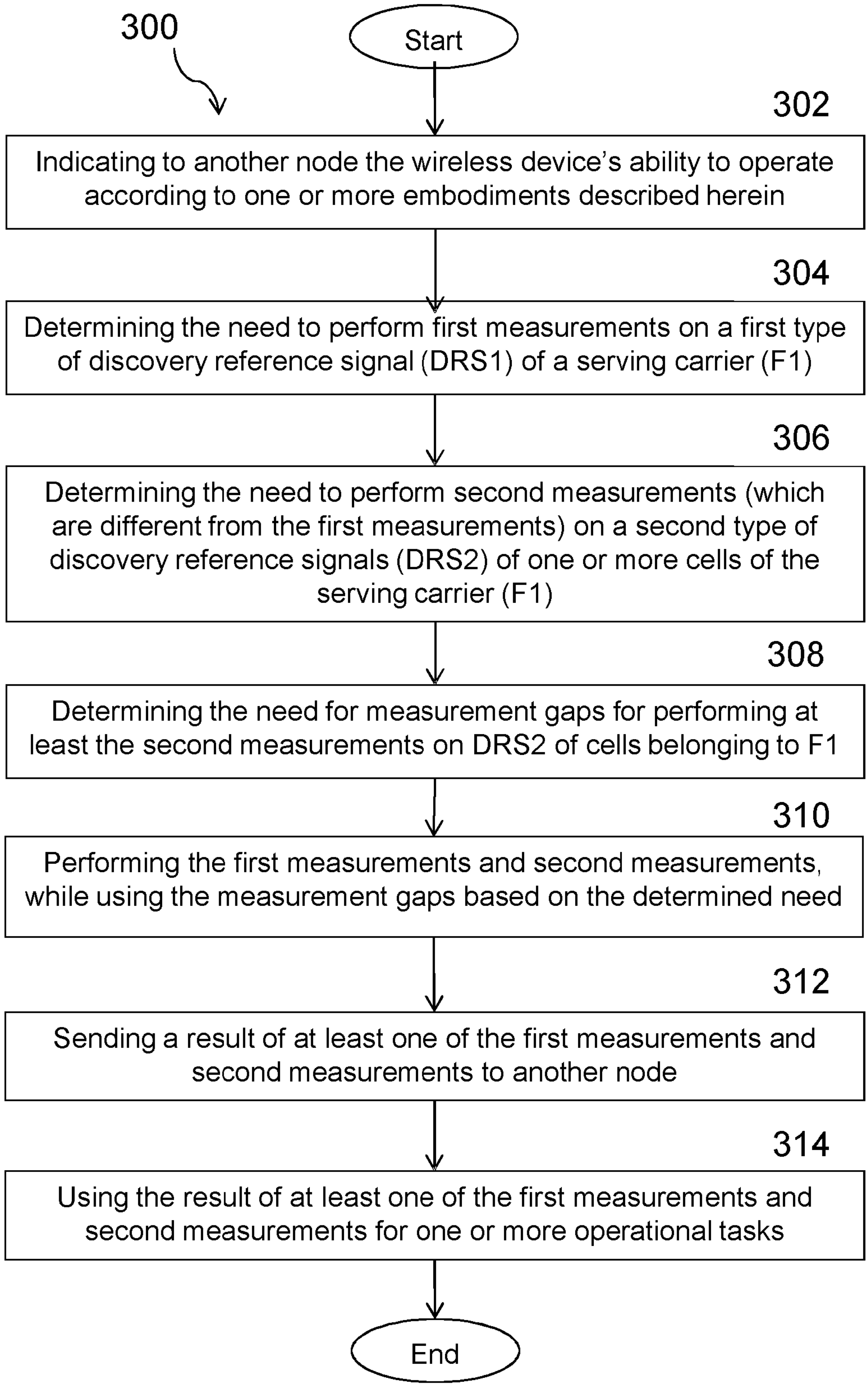
300
Start
302
Indicating to another node the wireless device's ability to operate according to one or more embodiments described herein
304
Determining the need to perform first measurements on a first type of discovery reference signal (DRS1) of a serving carrier (F1)
306
Determining the need to perform second measurements (which are different from the first measurements) on a second type of discovery reference signals (DRS2) of one or more cells of the serving carrier (F1)
308
Determining the need for measurement gaps for performing at least the second measurements on DRS2 of cells belonging to F1
310
Performing the first measurements and second measurements, while using the measurement gaps based on the determined need
312
Sending a result of at least one of the first measurements and second measurements to another node
314
Using the result of at least one of the first measurements and second measurements for one or more operational tasks
End

FIGURE 3

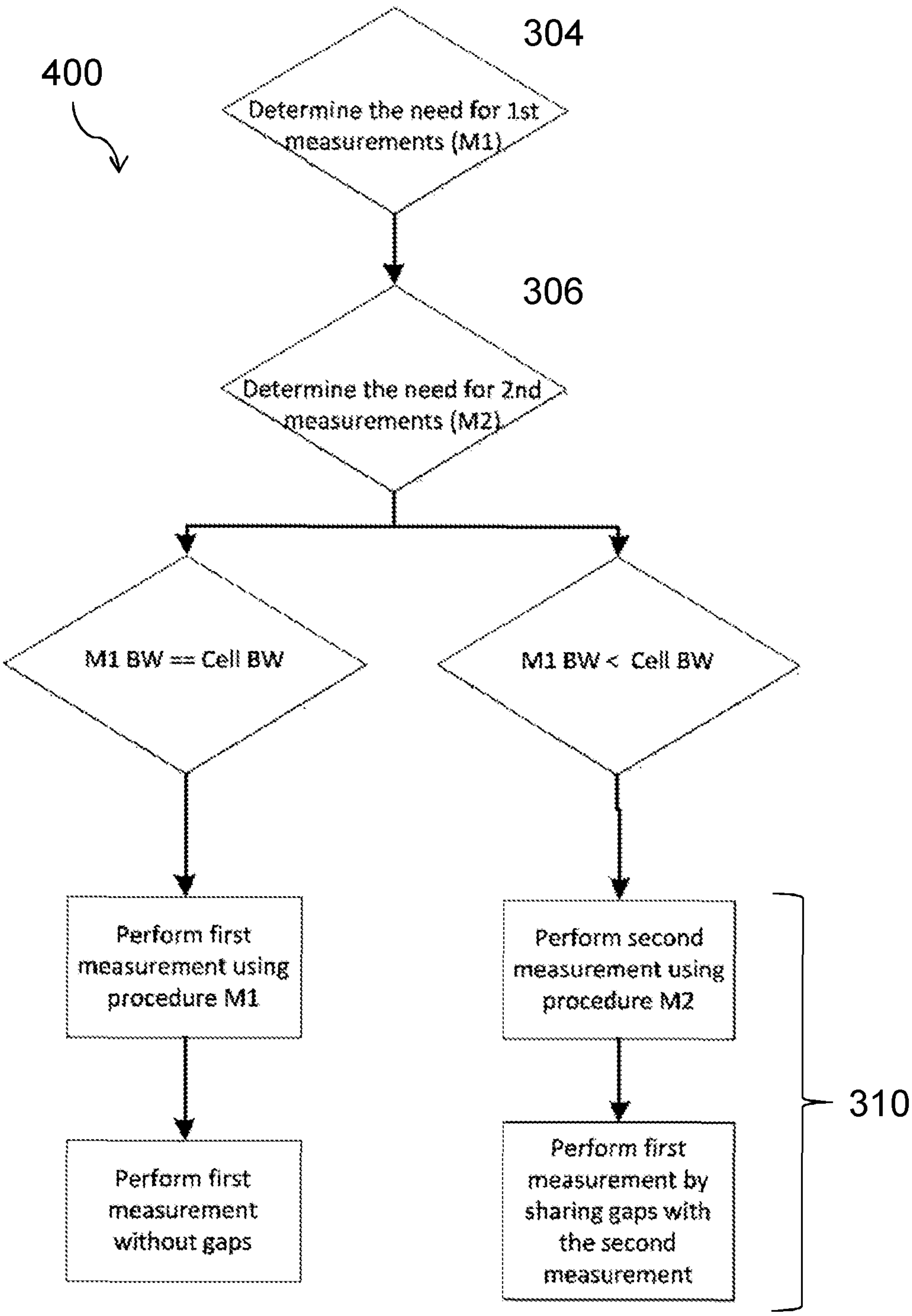
400
304
Determine the need for 1st measurements (M1)
306
Determine the need for 2nd measurements (M2)
M1 BW == Cell BW
M1 BW < Cell BW
Perform first measurement using procedure M1
Perform first measurement without gaps
Perform second measurement using procedure M2
Perform first measurement by sharing gaps with the second measurement
310

FIGURE 4

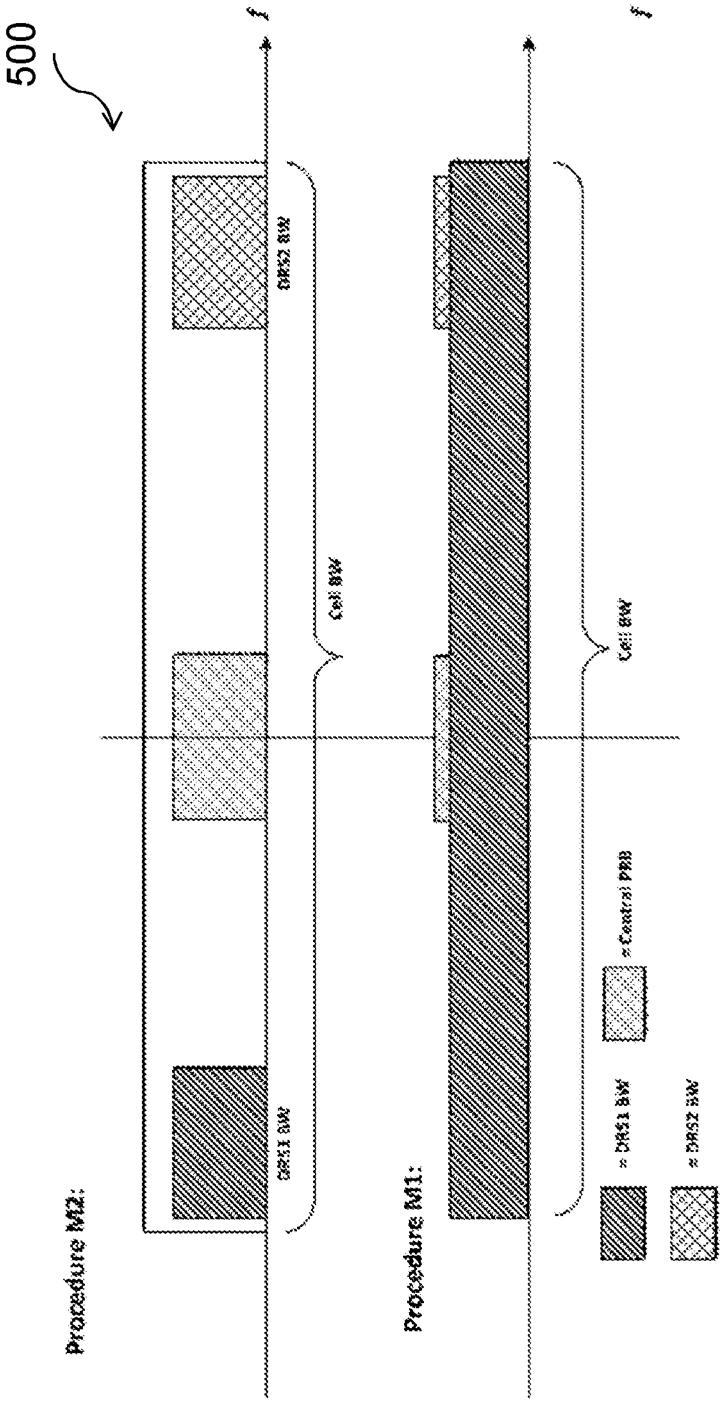
500
Procedure M2:
DRS1 BW
DRS2 BW
Cell BW
f
Procedure M1:
Cell BW
f
= DRS1 BW
= DRS2 BW
= Control PRB

FIGURE 5

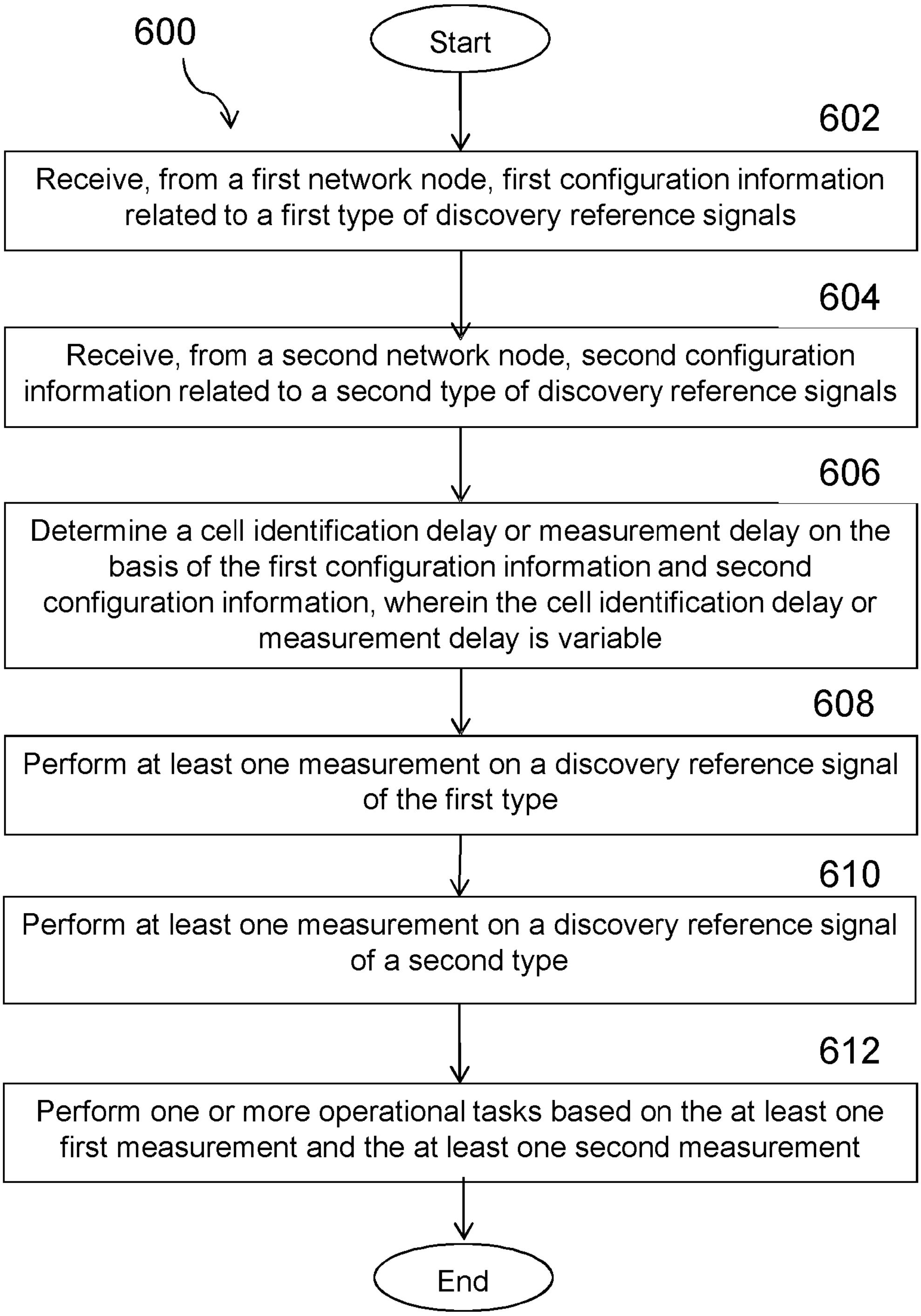
600
Start
602
Receive, from a first network node, first configuration information related to a first type of discovery reference signals
604
Receive, from a second network node, second configuration information related to a second type of discovery reference signals
606
Determine a cell identification delay or measurement delay on the basis of the first configuration information and second configuration information, wherein the cell identification delay or measurement delay is variable
608
Perform at least one measurement on a discovery reference signal of the first type
610
Perform at least one measurement on a discovery reference signal of a second type
612
Perform one or more operational tasks based on the at least one first measurement and the at least one second measurement
End

FIGURE 6

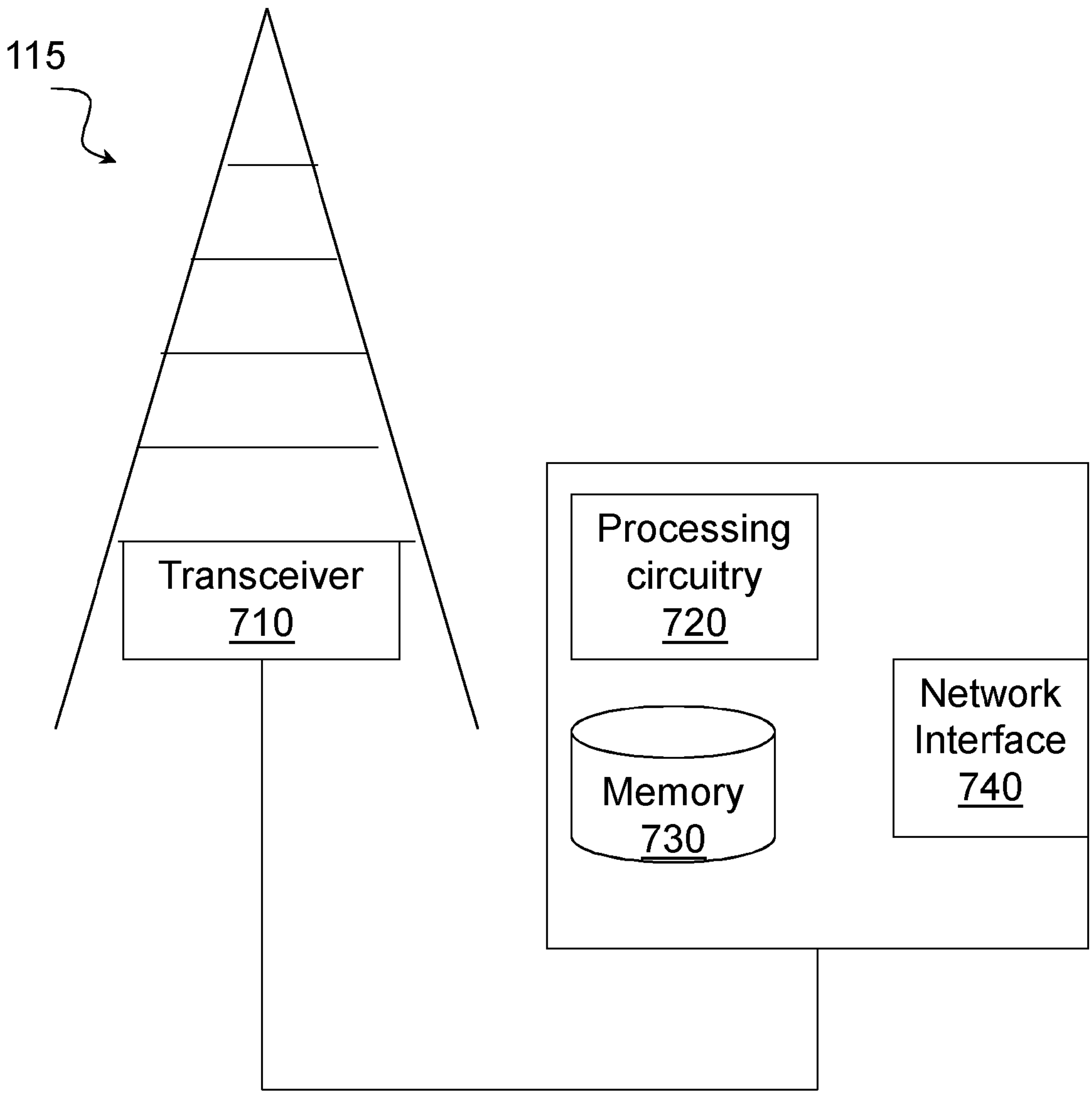
115
Transceiver
710
Processing
circuitry
720
Memory
730
Network
Interface
740

FIGURE 7

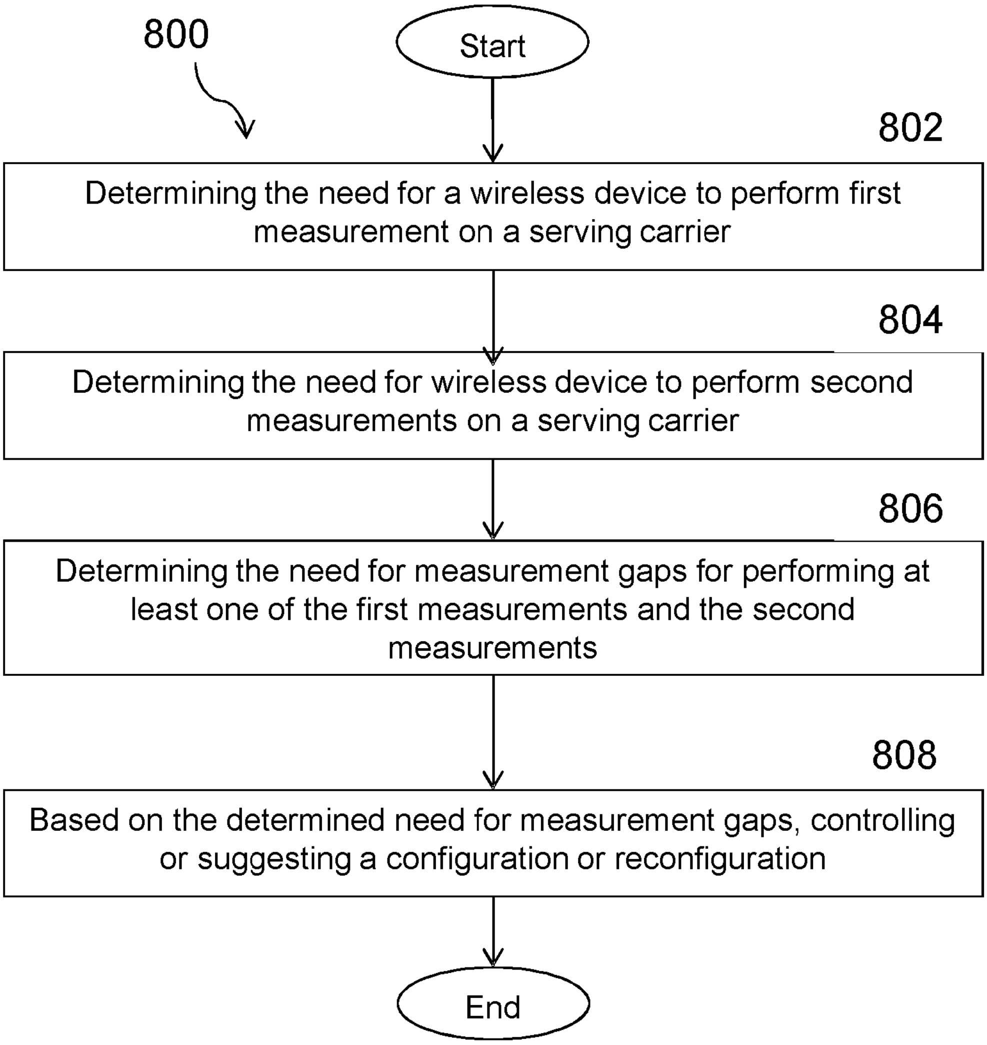
800
Start
802
Determining the need for a wireless device to perform first measurement on a serving carrier
804
Determining the need for wireless device to perform second measurements on a serving carrier
806
Determining the need for measurement gaps for performing at least one of the first measurements and the second measurements
808
Based on the determined need for measurement gaps, controlling or suggesting a configuration or reconfiguration
End

FIGURE 8

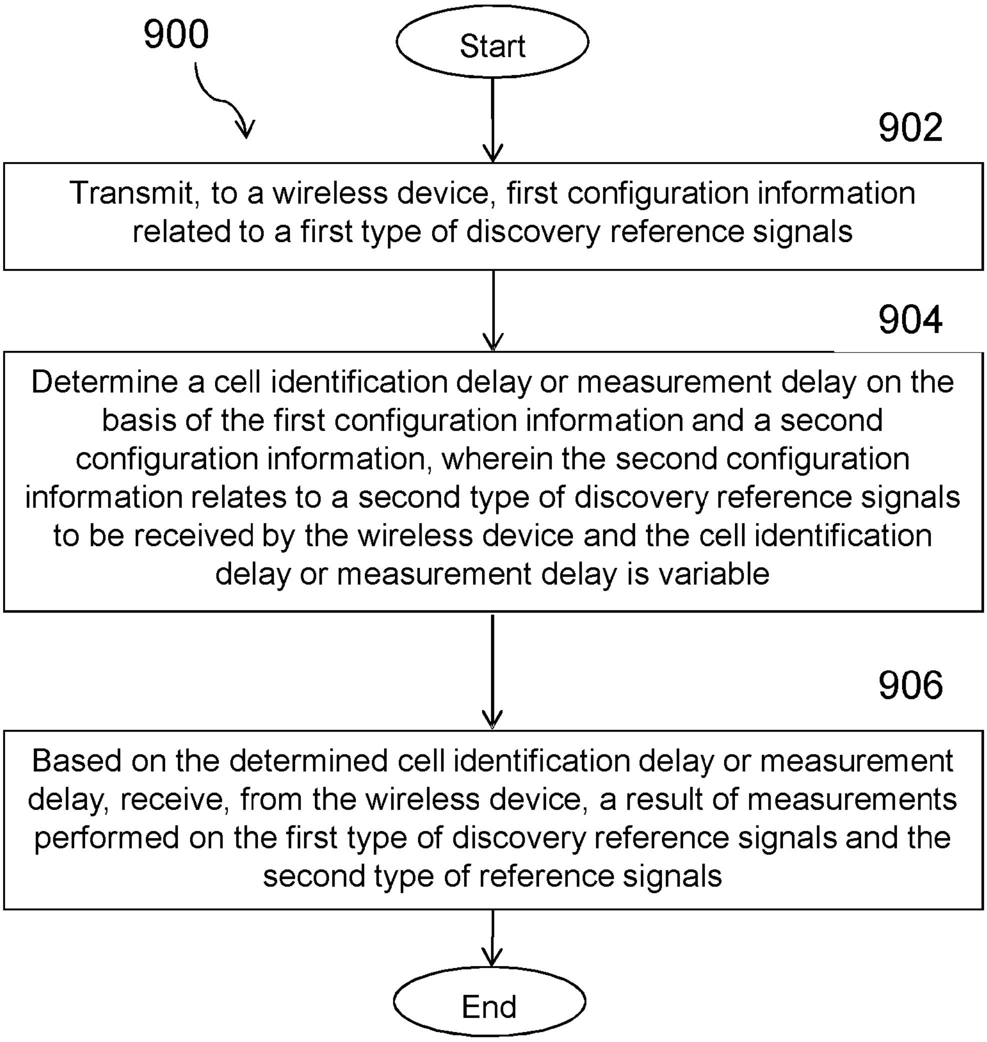
900
Start
902
Transmit, to a wireless device, first configuration information related to a first type of discovery reference signals
904
Determine a cell identification delay or measurement delay on the basis of the first configuration information and a second configuration information, wherein the second configuration information relates to a second type of discovery reference signals to be received by the wireless device and the cell identification delay or measurement delay is variable
906
Based on the determined cell identification delay or measurement delay, receive, from the wireless device, a result of measurements performed on the first type of discovery reference signals and the second type of reference signals
End

FIGURE 9

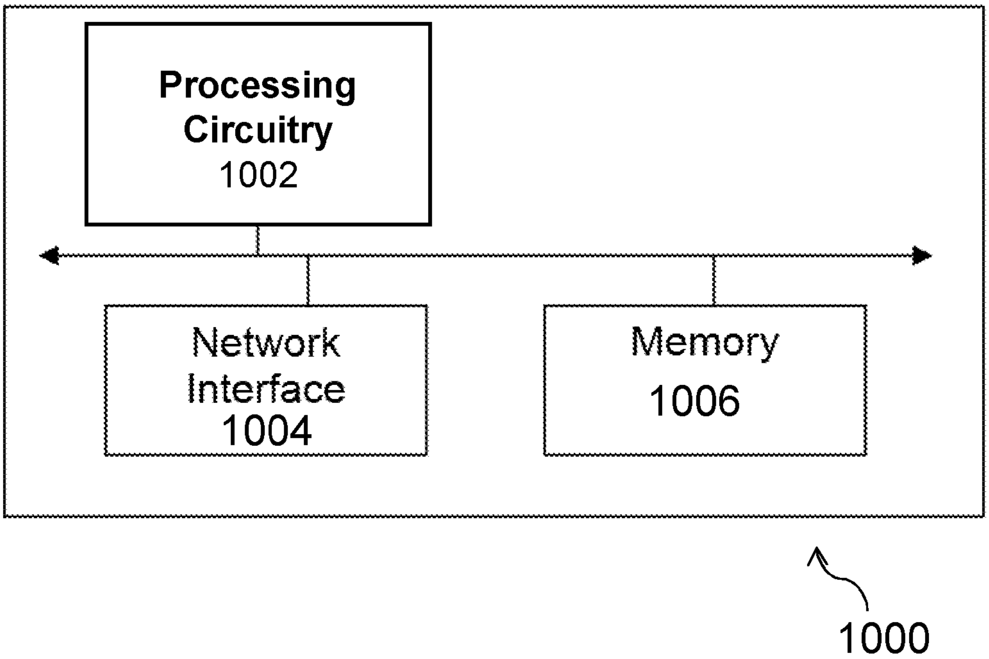
Processing
Circuitry
1002
Network
Interface
1004
Memory
1006
1000

FIGURE 10

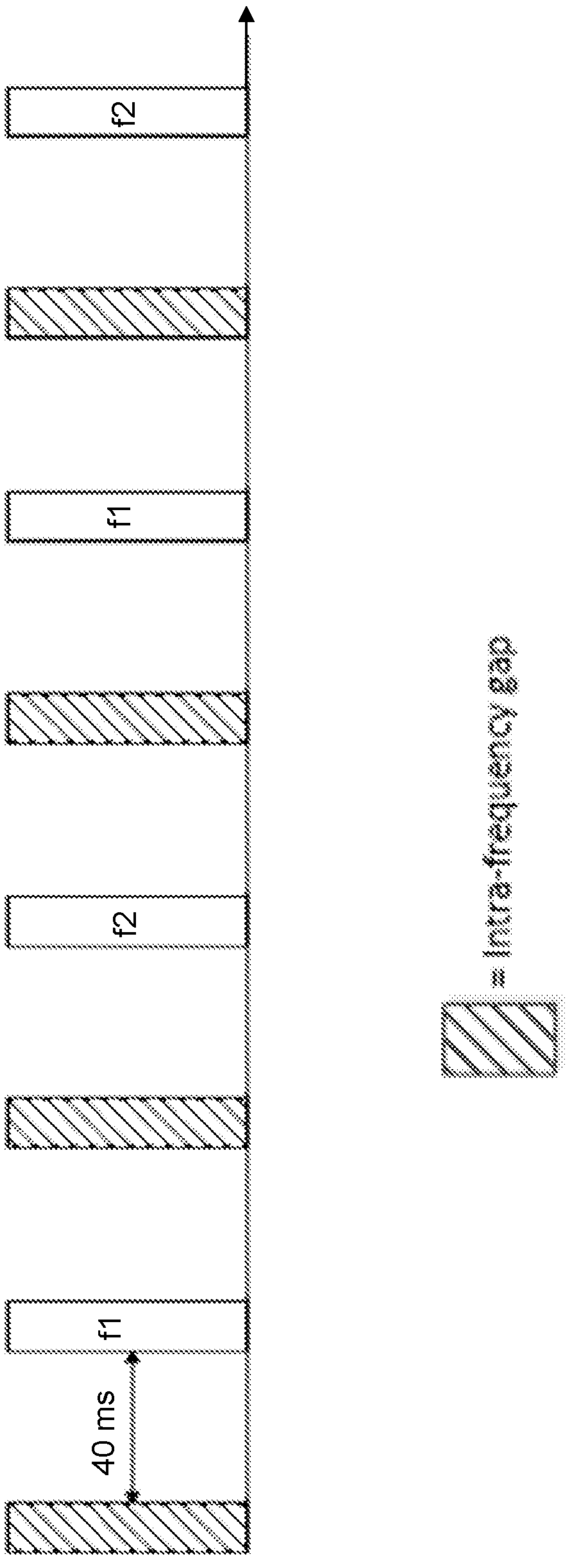


FIGURE 11

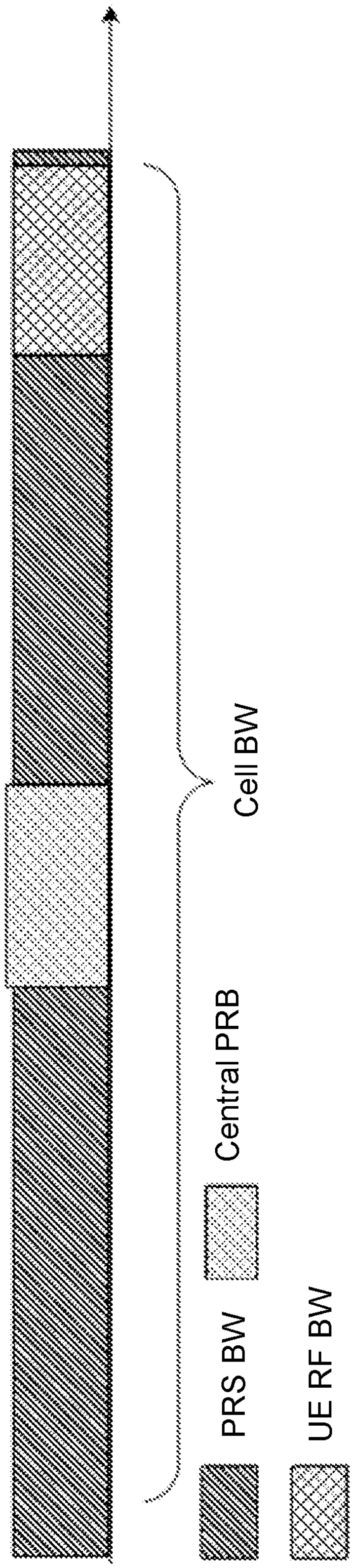


FIGURE 12

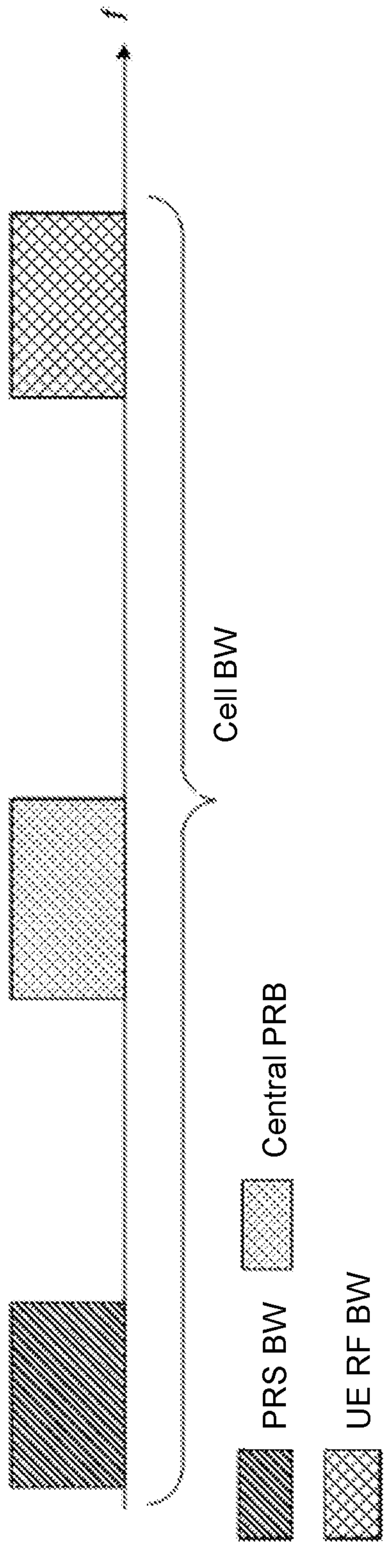


FIGURE 13

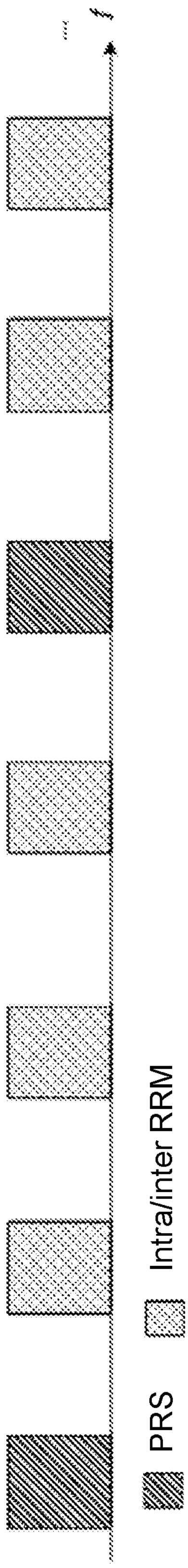


FIGURE 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2016234707 A1